(19) Europäisches Patentamt / European Patent Office / Office européen des brevets

(11) **EP 3 977 046 B1**

(12) **EUROPÄISCHE PATENTSCHRIFT**

(45) Veröffentlichungstag und Bekanntmachung des Hinweises auf die Patenterteilung:
**16.10.2024 Patentblatt 2024/42**

(21) Anmeldenummer: **20729674.0**

(22) Anmeldetag: **26.05.2020**

(51) Internationale Patentklassifikation (IPC):
**G01B 11/24** *(2006.01)*    **G01B 11/30** *(2006.01)*
**G01B 9/0209** *(2022.01)*    **G01B 9/02055** *(2022.01)*

(52) Gemeinsame Patentklassifikation (CPC):
**G01B 11/2441; G01B 9/02076; G01B 9/02083; G01B 9/0209; G01B 11/30**

(86) Internationale Anmeldenummer:
**PCT/EP2020/064584**

(87) Internationale Veröffentlichungsnummer:
**WO 2020/239770 (03.12.2020 Gazette 2020/49)**

(54) **INTERFEROMETRISCHE MESSVORRICHTUNG UND INTERFEROMETRISCHES VERFAHREN ZUR BESTIMMUNG DER OBERFLÄCHENTOPOGRAPHIE EINES MESSOBJEKTS**

INTERFEROMETRIC MEASUREMENT DEVICE AND INTERFEROMETRIC METHOD FOR DETERMINING THE SURFACE TOPOGRAPHY OF A MEASUREMENT OBJECT

DISPOSITIF DE MESURE INTERFÉROMÉTRIQUE ET PROCÉDÉ INTERFÉROMÉTRIQUE POUR DÉTERMINER LA TOPOGRAPHIE DE SURFACE D'UN OBJET DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2019 DE 102019114405**

(43) Veröffentlichungstag der Anmeldung:
**06.04.2022 Patentblatt 2022/14**

(73) Patentinhaber: **Polytec GmbH**
**76337 Waldbronn (DE)**

(72) Erfinder:
• **SCHMID, Henrik**
**75210 Keltern-Ellmendingen (DE)**
• **SEYFRIED, Volker**
**69226 Nußloch (DE)**

(74) Vertreter: **LBP Lemcke, Brommer & Partner Patentanwälte mbB**
**Siegfried-Kühn-Straße 4**
**76135 Karlsruhe (DE)**

(56) Entgegenhaltungen:
**US-A- 5 953 124   US-A1- 2019 049 236**

• **EUGENIO GARBUSI ET AL: "Single frame interferogram evaluation", APPLIED OPTICS, vol. 47, no. 12, 20 April 2008 (2008-04-20), US, pages 2046, XP055722594, ISSN: 0003-6935, DOI: 10.1364/AO.47.002046**
• **A. STYK, M. BRZEZINSKI: "Vibration amplitude recovery from time averaged interferograms using the directional spatial carrier phase shifting method", SPIE, PO BOX 10 BELLINGHAM WA 98227-0010, USA, vol. 8082, 27 May 2011 (2011-05-27), XP040559349**
• **CHEN DONG ET AL: "Real-time scanner error correction in white light interferometry", PROCEEDINGS OF SPIE, IEEE, US, vol. 9276, 13 November 2014 (2014-11-13), pages 92760I - 92760I, XP060043530, ISBN: 978-1-62841-730-2, DOI: 10.1117/12.2071276**

EP 3 977 046 B1

**Beschreibung**

Die Erfindung betrifft eine interferometrische Messvorrichtung und ein interferometrisches Verfahren zur Bestimmung der Oberflächentopographie eines Messobjekts.

Zur Bestimmung der Oberflächentopographie von Messobjekten sind interferometrische Messvorrichtungen bekannt, bei denen ein Teil des Lichts einer Lichtquelle auf die Oberfläche des Messobjekts gerichtet wird, von dort als Messlicht zurückgeworfen wird und anschließend mittels geeigneter Interferometeroptik mit einem anderen, als Referenzlicht dienenden Teil des Lichts der Lichtquelle zusammengeführt wird, so dass durch die Interferenz von Mess- und Referenzlicht ein Interferogramm erzeugt wird, dessen Streifenstruktur Rückschlüsse auf die Oberflächentopographie des Messobjekts ermöglicht. In der Messtechnik bezeichnet die Oberflächentopographie die Beschreibung der geometrischen Gestalt der untersuchten Oberfläche, insbesondere in Form von ein- oder zweidimensionalen Oberflächenprofilen.

Für derartige interferometrische Messverfahren gibt es im Stand der Technik eine Vielzahl von Ausführungsformen. Bei vielen hiervon wird bei der Aufnahme der Interferogramme die optische Weglängendifferenz OPD (optical path length difference) verändert, die zwischen dem optischen Weg des Messlichts und dem optischen Weg des Referenzlichts besteht. Dadurch kann man für unterschiedliche Weglängendifferenzen OPD jeweils eigene Interferogramme aufzeichnen. So ergibt sich für jeden einzelnen Punkt im Interferogramm ein Intensitätsverlauf in Abhängigkeit von der eingestellten OPD. Ein solcher Intensitätsverlauf, der für unterschiedliche OPD-Werte abgetastet wird, wird üblicherweise ein "Korrelogramm" für den zugehörigen Punkt genannt. Meist ist jedem Punkt im Interferogramm ein zugehöriger Punkt auf der Oberfläche des Messobjekts zugeordnet, beispielsweise durch eine optische Abbildung, so dass sich dann das entsprechende Korrelogramm auch einem bestimmten Messpunkt auf dem Messobjekt zuordnen lässt. Mit Hilfe des zum Messpunkt gehörenden Korrelogramms wird dann bei der folgenden Auswertung die jeweilige Differenz zwischen den optischen Weglängen des Mess- und Referenzlichts und hieraus die Oberflächentopographie des Messobjekts ermittelt.

Die Oberflächentopographie eines Messobjekts wird üblicherweise durch die jeweiligen Höhenwerte $h^p$ einer Vielzahl von Oberflächenpunkten p, also somit deren räumliche Lage, relativ zu einer bekannten Referenzfläche, meist einer Ebene angegeben. Liegt sie in dieser Form vor, so kann sie leicht auch relativ zu beliebigen anderen Referenzflächen angegeben werden, sofern für diese anderen Referenzflächen ein bekannter räumlicher Bezug zur ersten Referenzfläche vorliegt.

Daher wird der Einfachheit halber bei interferometrischen Messvorrichtungen häufig als Referenzfläche diejenige Fläche angenommen, bei der in einem vorgegebenen Referenzzustand des Interferometers die optische Weglängendifferenz OPD zwischen Mess- und Referenzarm gleich null ist. Diese Referenzfläche ist in vielen Fällen eine optisch konjugierte Ebene zu einer Referenzoberfläche des Interferometers, meist einem Spiegel, und wird häufig, aber nicht immer durch eine Ebene im Objektraum des Messobjekts dargestellt. Aufgrund des Gesagten kann für alle weiteren Betrachtungen ohne Beschränkung der Allgemeinheit durchgehend diese Fläche als Referenzfläche für die Oberflächentopographie verwendet werden, da eine Umrechnung auf andere Referenzflächen leicht möglich ist.

Im Referenzzustand des Interferometers beträgt die OPD für jeden Messpunkt p auf dem Messobjekt üblicherweise $-2*n*h^p$, d. h. sie entspricht gerade dem negativen, infolge von Hin- und Rücklauf des Lichts doppelten Höhenwert des zugehörigen Messpunkts p, gegebenenfalls korrigiert um den Brechungsindex n des Materials zwischen Referenz- und Messfläche, der im Folgenden aber der Einfachheit halber ohne Beschränkung der Allgemeinheit als 1 angenommen wird, da die formelmäßig leicht modifizierte Beschreibung für andere Werte für den Fachmann offensichtlich ist.

Gängige interferometrische Messverfahren zur Bestimmung der Oberflächentopographie von Messobjekten sind einerseits die Phase-Shifting-Interferometrie (PSI) und andererseits die kurzkohärente Interferometrie, besonders die scannende Weißlichtinterferometrie (WLI).

In jedem Fall werden für alle relevanten Messpunkte p auf dem Messobjekt für verschiedene, um $z_1$, $z_2$, ... , $z_n$ gegenüber dem Referenzzustand des Interferometers veränderte OPOs die zugehörigen Intensitäten $I^p(z_1)$, $I^p(z_2)$, ... $I^p(z_n)$ in den Interferogrammen aufgezeichnet, so dass man für jeden Messpunkt p das zugehörige Korrelogramm $c^P =$ $(c^p(1), c^p(2), ..., c^p(n))$ erhält, wobei die gemessene Lichtintensität am i-ten Punkt des Korrelogramms jeweils $c^p(i) = I^p(z_i)$ ist.

Vorzugsweise wird die OPD während der Aufnahme der Korrelogramme auf vorbestimmte Weise verändert, meist so, dass die $z_1$, $z_2$, ... , $z_n$ äquidistant mit einem bekannten Abstand $\Delta z$ sind. Hierzu wird beispielsweise entweder die Länge des Messarms oder des Referenzarms des Interferometers mechanisch oder durch Einbringen von Material mit einem anderen Brechungsindex verändert. In manchen Fällen wird auch das Messobjekt relativ zum Interferometer oder das Interferometer relativ zum Messobjekt verschoben, was im Wesentlichen ebenfalls einer Änderung der Messarmlänge gleichkommt. Die Längenänderung erfolgt wahlweise kontinuierlich oder schrittweise; wichtig ist nur, dass die jeweiligen OPD-Änderungen möglichst präzise bekannt sind, da die Genauigkeit der weiteren Auswertung und damit der bestimmten Oberflächentopographie wesentlich von der genauen Kenntnis der jeweiligen OPD-Änderungen abhängt. Dies ist auch bei der nachfolgend beschriebenen Erfindung vorteilhaft.

Bei der Phase-Shifting-Interferometrie (PSI) variiert man die Phasendifferenz PD zwischen dem Messlicht und dem Referenzlicht und nimmt die Korrelogramme in Abhängigkeit der eingestellten Phasendifferenz auf. Im Regelfall wird die Phasenvariation wie beschrieben durch eine Veränderung von optischen Weglängen erreicht. Sie kann aber auch wie in US 4,594,003 beschrieben durch Veränderung der Wellenlänge des verwendeten Beleuchtungslichts erreicht werden. Alle im Folgenden durchgeführten Betrachtungen - auch bei der nachfolgenden Darstellung der Erfindung - lassen sich leicht auf letzteren Fall übertragen, daher beschränkt sich die weitere Beschreibung der einfacheren Darstellung wegen ohne Beschränkung der Allgemeinheit auf den gängigeren Fall der Phasenvariation durch Veränderung optischer Weglängen. Durch Verwendung von Beleuchtungslicht ausreichend großer Kohärenzlänge oder Abtasten nur weniger Perioden des Interferenzsignals erreicht man, dass sich die Intensität des Messlichts sinusförmig mit der eingestellten Phase verändert. Durch Bestimmung der Phasenlage des aufgenommenen sinusförmigen Signals in Abhängigkeit von der eingestellten Weglänge für verschiedene Messpunkte werden die Differenzen der OPOs zwischen verschiedenen Messpunkten und damit letztendlich die Oberflächentopographie des Messobjekts im Vergleich zur Referenzfläche ermittelt.

Bei der kurzkohärenten Interferometrie, insbesondere der scannenden Weißlichtinterferometrie wird ebenfalls die OPD während der Messung variiert. Da hier jedoch kurzkohärentes, d. h. spektral breites Licht verwendet wird, zeigen die Korrelogramme nur dann eine Modulation, wenn Mess- und Referenzlicht ungefähr die gleiche optische Weglänge durchlaufen, d. h. die Weglängendifferenz gering ist. Ist hingegen die OPD größer als die Kohärenzlänge des verwendeten Lichts, verschwindet die Modulation.

Typischerweise lässt sich der generelle funktionale Korrelogrammverlauf c(OPD) in Abhängigkeit von der eingestellten OPD durch eine sinusartige Modulation mit einer sich langsam verändernden Einhüllenden beschreiben, die für betragsmäßig große OPD-Werte gegen null geht:

$$c(OPD) = A + B * env(OPD) * \cos(\varphi(OPD))$$

Hierbei ist env(OPD) die sich langsam verändernde Einhüllende, die beispielsweise die Form einer Gaußkurve env(OPD) = exp($-a*OPD^2$) besitzen kann, und $\varphi$(OPD) ist eine sich in Abhängigkeit von der OPD verändernde Phase, im einfachsten Fall $\varphi$(OPD) = $2\pi/\lambda$*OPD, wobei $\lambda$ die effektive Wellenlänge des Beleuchtungslichts ist und sich $2\pi/\lambda$ als Trägerfrequenz der Modulation deuten lässt. Die Konstanten A und B beschreiben den Offset des Signals bzw. die zugehörige Modulationsamplitude, wobei beide unter anderem durch die Reflektivität des Messobjekts am Messpunkt beeinflusst werden. Beide Konstanten haben für die folgenden Betrachtungen - auch bei der nachfolgenden Darstellung der Erfindung - keine wesentliche Relevanz, komplizieren die Beschreibung aber erheblich, so dass im weiteren der Einfachheit der Darstellung wegen ohne Beschränkung der Allgemeinheit A=0 und B=1 angenommen wird, wobei sich die Messsignale bei Bedarf auch leicht in diese Form bringen lassen, z. B. in dem der Mittelwert abgezogen und das Signal geeignet normiert wird.

Insofern wird im Folgenden der generelle funktionale Korrelogrammverlauf c(OPD) ohne Beschränkung der Allgemeinheit mit

$$c(OPD) = env(OPD) * \cos(\varphi(OPD))$$

angenommen.

Entsprechend werden im Folgenden zur Vereinfachung der Darstellung und ebenfalls ohne Beschränkung der Allgemeinheit auch die Lichtintensitäten $I^p(z_i) = c^p(i) = c(z_i - 2*h^p)$ als um ihren Offset bereinigt angenommen, was durch einfaches Abziehen des Offsets des jeweiligen Korrelogramms realisiert wird, wobei dieser Offset am einfachsten den Randbereichen des Korrelogramms, wo gar keine oder kaum Interferenz auftritt, entnommen wird oder auf andere einfache Weise ermittelt wird, z. B. durch Abziehen des Mittelwerts $(I^p(z_1)+I^p(z_2)+ ... + I^p(z_n))/n$ der Lichtintensitäten des Korrelogramms, wobei aber bei Bedarf auch auf ausgefeiltere Möglichkeiten zurückgegriffen werden kann, bei denen beispielsweise die Phasenlage der einzelnen Punkte mitberücksichtigt wird. Es ist zu beachten, dass die Bereinigung der Lichtintensitäten um ihren Offset, genauso wie ihre Umskalierung bzw. Normierung eine Transformation der durch die $I^p(z_i)$ gegebenen n-dimensionalen Lichtintensitätsvektoren $(I^p(z_1), I^p(z_2), ... , I^p(z_n))$ darstellt und auch im Sinne der nachfolgenden Beschreibung und insbesondere der Patentansprüche so zu verstehen ist.

Üblicherweise geht man in guter Näherung davon aus, dass der Korrelogrammverlauf für alle Messpunkte nach Abzug des Offsets und Normierung die angegebene generelle funktionale Form hat. In der Praxis kann es hiervon kleinere Abweichungen geben, beispielsweise durch unterschiedliche Materialdispersion auf dem Weg des Lichts zu den verschiedenen Messpunkten und den zugehörigen Referenzpunkten. Zur Berücksichtigung dieser Effekte und der Korrektur ihrer Auswirkungen auf die Messergebnisse sind einschlägige Vorgehensweisen bekannt, beispielsweise Messung dieser oder daraus hervorgehender Effekte mit Hilfe eines bekannten Messobjekts, z. B. eines präzisen Planspiegels, und geeignete Berücksichtigung derselben bei der Auswertung der Messungen an zu vermessenden Messobjekten. Derartige Maßnahmen lassen sich natürlich bei Bedarf auch im Zusammenhang mit der nachfolgend beschriebenen erfindungsgemäßen Vorgehensweise durchführen.

Typischerweise geht man bei der sogenannten "Einhüllenden-Auswertung" davon aus, dass das Maximum der Einhüllenden dann erreicht wird, wenn die optischen Wege im Mess- und Referenzarm gleich lang sind, d. h. die OPD den Wert null annimmt. Entsprechend wird für jedes Korrelogramm das Einhüllendenmaximum derart bestimmt, dass man denjenigen Wert $z^p$ für die OPD-Änderung gegenüber dem Referenzzustand des Interferometers ermittelt, bei dem das Maximum der Korrelogrammeinhüllenden liegt. Nach dem bisher Gesagten ist die zugehörige OPD dort null, also $z^p - 2*h^p = 0$, woraus sich leicht der Höhenwert $h^p$ des Messpunkts p bestimmen lässt. Sollte in einer vom üblichen Fall abweichenden Situation die OPD am Ort des Einhüllendenmaximums von null verschieden sein, wäre die Vorgehensweise dennoch dieselbe, nur auf der rechten Seite der obigen Gleichung stünde ein von null verschiedener Wert, aber der Höhenwert $h^p$ ließe sich dennoch wie zuvor ermitteln. In jedem Fall erhält man aus der Vielzahl an ermittelten Höhenwerten $h^p$ letztendlich die räumliche Lage der Messpunkte p und damit die Oberflächentopographie des Messobjekts im Vergleich zur Referenzfläche.

Für die Bestimmung der Positionen der Einhüllendenmaxima gibt es verschiedene Vorgehensweisen. Ein häufig verwendeter Ansatz besteht darin, aus den Korrelogrammen, deren Einhüllende ja zunächst noch sinusartig moduliert ist, zunächst die Einhüllende selbst zu ermitteln. Dazu erzeugt man beispielsweise mit Hilfe einer Hilberttransformation aus dem Korrelogramm $c(OPD) = env(OPD) * cos(\varphi(OPD))$ ein in der Trägerfrequenz um 90° phasenverschobenes synthetisches Korrelogramm $s(OPD) = env(OPD) * sin(\varphi(OPD))$, quadriert und addiert die beiden Korrelogramme $c(OPD)$ und $s(OPD)$, wodurch man nach Ziehen der Quadratwurzel die gesuchte Einhüllende $env(OPD)$ erhält. Alternativ lässt sich die Einhüllende $env(OPD)$ auch durch stückweises Anfitten von Sinusfunktionen an das Korrelogramm und punktweises Auswerten der entsprechenden Amplituden bestimmen. Die Position des Maximums der Einhüllenden wird dann meist durch Anfitten eines geeigneten Kurvenverlaufs an die zuvor bestimmte Einhüllende $env(OPD)$ bestimmt.

Ein alternativer Ansatz zur Bestimmung der Position des Einhüllendenmaximums verwendet zunächst eine Fouriertransformation des Korrelogramms und bestimmt dann die lineare Steigung der über die Ortsfrequenz aufgetragenen Phase am Ort der Trägerfrequenz im Fourierraum, woraus sich ebenfalls die Position des Einhüllendenmaximums bestimmen lässt.

Wenn die Positionen der jeweiligen Einhüllendenmaxima ermittelt sind, lässt sich hieraus in vielen Fällen bereits eine recht genaue Bestimmung der Oberflächentopographie des Messobjekts vornehmen, was insbesondere bei Messobjekten mit eher rauer Oberfläche durchgeführt wird.

In bestimmten Fällen, insbesondere bei Messobjekten mit eher glatter Oberfläche lässt sich die Genauigkeit bei der Bestimmung der Oberflächentopographie mit Hilfe der sogenannten "Phasenauswertung" noch deutlich erhöhen, indem man zusätzlich zur Auswertung der Position des Einhüllendenmaximums auch noch die sinusförmige Modulation des Korrelogramms in der Nähe des Einhüllendenmaximums zur Auswertung heranzieht. Hierbei verwendet man nicht mehr die weiterhin als erstes bestimmte Position des Einhüllendenmaximums als Referenzpunkt mit einem explizit und/oder implizit vorgegebenen Wert für die OPD bzw. PD, sondern stattdessen die deutlich genauer bestimmbare, dem Einhüllendenmaximum am nächsten liegende Position mit einer bestimmten Phasenlage der sinusförmigen Schwingung, beispielsweise die Position ihres nächstgelegenen absteigenden Nulldurchgangs. Vergleicht man die OPD-Differenzen der so bestimmten Positionen von verschiedenen Messpunkten, so erhält man eine deutlich präziser bestimmte Oberflächentopographie als bei alleiniger Verwendung der Positionen der Einhüllendenmaxima. Für die praktische Umsetzung genügt es hierfür in den meisten Fällen, einfach die Phasenlage der sinusförmigen Modulation an der ermittelten Position des Einhüllendenmaximums zu bestimmen. Hieraus ergibt sich dann bei bekannter Änderung der OPD über die Korrelogramm-Messungen hinweg für beliebigen Phasenlagen der sinusförmigen Modulation in der Nähe des Einhüllendenmaximums die zugehörige Position mit ausreichender Genauigkeit.

An dieser Stelle ist es sinnvoll, darauf hinzuweisen, dass die Auswertverfahren von Korrelogrammen bei der kurzkohärenten Interferometrie und bei der Phase-Shifting-Interferometrie eng miteinander verwandt sind. Während der generelle funktionale Verlauf eines Korrelogramms bei der kurzkohärenten Interferometrie wie beschrieben vom Typ

$$c(OPD) = env(OPD) * cos(\varphi(OPD))$$

ist,
haben die entsprechenden Korrelogramme bei der Phase-Shifting-Interferometrie eine konstante Einhüllende $env(OPD)$ = const. und eine zur OPD proportionale Phase $\varphi(OPD) = 2\pi/\lambda * OPD$, wobei $\lambda$ wieder die Wellenlänge des Beleuchtungslichts ist. Sie sind also vom Typ

$$c(OPD) = const. * cos (2\pi/\lambda*OPD) \quad,$$

was letztendlich nur einen Spezialfall der Korrelogramme von kurzkohärenten Interferometern darstellt, nämlich denjenigen Spezialfall, bei dem die endliche Kohärenzlänge für die durchgeführte Messung nun doch so groß ist, dass sie nicht mehr berücksichtigt werden muss. Dies ermöglicht es, die meisten der im Folgenden im Zusammenhang mit kurzkohärenten Interferometern durchgeführten Überlegungen oder getätigten Aussagen sofort auch auf Phase-Shift-Interferometer zu übertragen, ohne dass immer im Einzelnen darauf hingewiesen werden muss.

Die beschriebenen Vorgehens- und Betrachtungsweisen sind hinlänglich bekannt und werden auf vielfältige Weise in vielen Arten von Interferometern zur Bestimmung von Oberflächentopographien verwendet.

Letztendlich können alle Arten bekannter Interferometer für diesen Zweck und insbesondere zur Realisierung der nachfolgend beschriebenen Erfindung verwendet werden, besonders hervorzuheben sind hier Michelson-Interferometer, Mach-Zehnder-Interferometer, Mirau-Interferometer, Linnik-Interferometer und Fizeau-Interferometer, aber auch andere Interferometer-Typen werden eingesetzt.

Um mit Hilfe solcher Interferometer und den beschriebenen Vorgehensweisen Oberflächentopographien genau bestimmen zu können, ist es nach dem bekannten Stand der Technik essentiell, die während der Aufnahme von Korrelogrammen eingestellten bzw. auftretenden OPD-Änderungen möglichst präzise zu kontrollieren. Bereits kleine Abweichungen der realen OPD-Änderungen von den erwarteten bzw. eingestellten OPD-Änderungen führen regelmäßig zu großen Abweichungen der ermittelten Oberflächentopographien im Vergleich zu den realen Oberflächentopographien.

Diese Tatsache ist allgemein bekannt; daher werden regelmäßig bei der Verwendung von Interferometern zu diesem Zweck geeignete Maßnahmen ergriffen, um unerwünschte und unkontrollierte Beeinflussungen der OPD während der Messungen zu vermeiden, und wenn dies nicht möglich ist, zumindest so gut wie möglich zu bestimmen und bei der Auswertung zu berücksichtigen.

Entsprechend werden die verwendeten Interferometer in der Regel so konstruiert und aufgebaut, dass sie möglichst wenig durch Umgebungsschwingungen beeinflusst werden, da solche Schwingungen ja im Regelfall Mess- und Referenzarm des Interferometers unterschiedlich beeinflussen, wodurch unbekannte und unkontrollierte OPD-Veränderungen entstehen. Meist kommen für den Aufbau entsprechender Interferometer schwingungsisolierte oder sogar aktiv schwingungskompensierte Tische als Basisplattform zum Einsatz. Für hochpräzise Messungen sind selbst Luftturbulenzen mit den damit einhergehenden Brechungsindexschwankungen im Mess- und Referenzarm so störend, dass sie unterbunden werden müssen, z. B. indem die Lufttemperatur im Interferometer möglichst konstant gehalten und/oder der Luftfluss möglichst laminar geführt wird, im Extremfall wird manchmal das Interferometer sogar unter Vakuumbedingungen betrieben. Von besonderer Bedeutung sind die Positionier- bzw. Verschiebeeinheiten, mit deren Hilfe die OPD während der Messung verändert wird sowie die zugehörigen Führungs- und Fixierungselemente. Da Ungenauigkeiten an dieser Stelle einen erheblichen Einfluss auf die Messgenauigkeit des Gesamtsystems haben, werden hier im Regelfall aufwendige und teure Komponenten verwendet.

Dennoch reichen in manchen Fällen auch diese Maßnahmen nicht aus, um die OPD ausreichend gut zu stabilisieren. In diesem Fall werden dann zusätzlich zum eigentlichen Interferometer weitere Messvorrichtungen ins Gesamtsystem integriert, die hauptsächlich die Aufgabe besitzen, die tatsächlich während der Messung auftretenden OPD-Schwankungen so präzise wie möglich zu vermessen, so dass deren Einflüsse dann bei der Auswertung der Korrelogramme berücksichtigt werden können. Eine umfangreiche Darstellung der hierfür einsetzbaren Messvorrichtungen und möglichen Vorgehensweisen zur geeigneten Berücksichtigung der ermittelten Ergebnisse für die Auswertung der Korrelogramme findet man beispielsweise in der Patentschrift US 8,902,431. Verschiedene Verfahren zur Auswertung der Korrelogramme sind aus den Dokumenten US 2019/049236 A1, US 5 953 124 A oder E. Garbusi et al: "Single frame interferogram evaluation", Applied Optics, Bd. 47, Nr. 12 (2008-04-20), Seite 2046 bekannt.

All die beschriebenen Maßnahmen zur Vermeidung und/oder Bestimmung unerwünschter bzw. unkontrollierter Beeinflussungen der OPD während der interferometrischen Messungen sind komplex, aufwendig und/oder teuer.

Der vorliegenden Erfindung liegt daher die Aufgabe zugrunde, eine interferometrische Messvorrichtung und ein zugehöriges Verfahren anzugeben, welche ausreichend robust gegenüber OPD-Schwankungen sind, so dass auf die beschriebenen aufwendigen Maßnahmen zur Vermeidung störender Beeinflussungen der OPD weitgehend verzichtet werden kann, wobei hierfür weder die störenden OPD-Schwankungen ermittelt noch beim Auswertverfahren berücksichtigt werden müssen.

Gelöst ist diese Aufgabe durch ein Verfahren gemäß Anspruch 1 sowie eine Vorrichtung gemäß Anspruch 15. Vorteilhafte Ausgestaltungen finden sich in den abhängigen Unteransprüchen.

Das erfindungsgemäße Verfahren zur interferometrischen Bestimmung der Oberflächentopographie eines Messobjekts weist folgende Verfahrensschritte auf:

- Erzeugen von Beleuchtungslicht und Referenzlicht mittels mindestens einer Lichtquelle und Beleuchten des Messobjekts mit dem Beleuchtungslicht,

- Zusammenführen des vom Messobjekt als Messlicht zurückgeworfenen Beleuchtungslichts mit dem Referenzlicht, wobei ein Interferenzmuster in einem Detektionsbereich erzeugt wird,
- Verändern der optischen Weglängendifferenz und/oder der Phasendifferenz zwischen dem Messlicht und dem Referenzlicht,
- Erfassen von Lichtintensitäten $I^p(z_i)$ des Interferenzmusters auf einer Vielzahl von Detektorelementen p eines Multielement-Detektors im Detektionsbereich für mindestens zwei um verschiedene Beträge $z_i$ veränderte optische Weglängendifferenzen bzw. Phasendifferenzen,
- Bestimmen desjenigen Betrags $z^p$ für die Veränderung der optischen Weglängendifferenz bzw. Phasendifferenz für eine Vielzahl von Detektorelementen p des Multielement-Detektors, bei dem jeweils die optische Weglängendifferenz bzw. die Phasendifferenz zwischen dem Messlicht und dem Referenzlicht einen für dieses Detektorelement p explizit und/oder implizit vorgegebenen Wert erreicht, und
- Ermitteln der Oberflächentopographie des Messobjekts aus den für verschiedene Elemente p des Multielement-Detektors bestimmten Beträgen $z^p$.

Wesentlich ist, dass zur Bestimmung des dem Detektorelement p zugeordneten Werts $z^p$ neben den Lichtintensitäten $I^p(z_i)$ auch die Lichtintensitäten $I^q(z_i)$ mindestens eines anderen Detektorelements q des Multielement-Detektors verwendet werden.

Die Lichtintensitäten $I^p(z_i)$ und $I^q(z_i)$ werden somit mittels mindestens zwei verschiedenen Detektorelementen p und q bestimmt. Diesen Detektorelementen p und q sind durch eine optische Abbildung ortsverschiedene Punkte auf dem Messobjekt und/oder einer zum Multielement-Detektor konjugierten optischen Fläche zugeordnet, bevorzugt einer optisch konjugierten Ebene. Diese optisch konjugierte Fläche zum Multielement-Detektor ist bevorzugt eine Referenzfläche des Interferometers, eine Fläche im Raum des Messobjekts, ein Zwischenbildfläche der optischen Abbildung, eine Pupille und/oder eine Aperturebene der optischen Abbildung.

Bei dem erfindungsgemäßen Verfahren werden die Lichtintensitäten $I^p(z_i)$ des Interferenzmusters auf einer Vielzahl von Detektorelementen p eines Multielement-Detektors im Detektionsbereich für mindestens zwei um verschiedene Beträge $z_i$ veränderte optische Weglängendifferenzen bzw. Phasendifferenzen erfasst. Vorteilhaft ist es, die Erfassung für eine größere Anzahl von um verschiedene Beträge $z_i$ veränderte optische Weglängendifferenzen bzw. Phasendifferenzen durchzuführen, insbesondere für zumindest 3, bevorzugt zumindest 10, insbesondere bevorzugt zumindest 20 verschiedene $z_i$. Typischerweise genügt bei PSI Verfahren eine geringere Anzahl von Messpunkten gegenüber WLI Verfahren. Es ist daher vorteilhaft, bei Ausbildung des erfindungsgemäßen Verfahrens als WLI Verfahren, die Erfassung für eine größere Anzahl von um verschiedene Beträge $z_i$ veränderte optische Weglängendifferenzen bzw. Phasendifferenzen durchzuführen, insbesondere für zumindest 5, bevorzugt zumindest 20, insbesondere bevorzugt zumindest 50 verschiedene $z_i$.

Es liegt im Rahmen der Erfindung, dass bei den Variablen, welche zur Beschreibung des erfindungsgemäßen Verfahrens verwendet werden, analoge Variablen verwendeten werden, welche - gegebenenfalls zusammen mit weiteren Variablen oder Parametern - den Informationsgehalt der genannten Variable aufweisen und somit bei Bedarf umgerechnet werden können. Dies gilt insbesondere für die Variable z und dem einem Detektorelement zugeordneten Betrag $z^p$. So kann beispielsweise bei Kenntnis einer konstanten Änderungsgeschwindigkeit der Veränderung der optischen Weglängendifferenz und/oder Phasendifferenz ebenso ein Zeitpunkt der Messung $t^p$ angegeben werden, welcher sich bei Bedarf in den Betrag $z^p$ umrechnen lässt. Dies gilt ebenso für die nachfolgend beschriebene erfindungsgemäße Vorrichtung sowie für die vorteilhaften Ausgestaltungen des erfindungsgemäßen Verfahrens und der erfindungsgemäßen Vorrichtung.

Die nachfolgend beschriebene erfindungsgemäße Vorrichtung ist bevorzugt zur Durchführung des erfindungsgemäßen Verfahrens ausgebildet, insbesondere einer bevorzugten Ausführungsform hiervon. Das erfindungsgemäße Verfahren ist bevorzugt zur Durchführung mittels der nachfolgend beschriebenen erfindungsgemäßen Vorrichtung ausgebildet, insbesondere einer bevorzugten Ausführungsform hiervon wie den nachfolgend beschriebenen vorteilhaften Ausgestaltungen:

Die erfindungsgemäße interferometrische Messvorrichtung zur Bestimmung der Oberflächentopographie eines Messobjekts weist die folgenden Merkmale auf:

Die erfindungsgemäße interferometrische Messvorrichtung umfasst mindestens eine Lichtquelle, beispielsweise einen Laser, eine LED, eine Superluminiszenzdiode, eine Glühbirne, eine Gasentladungslampe, eine Bogenlampe, eine Plasma-Strahlungsquelle etc. Mit einem Teil des Lichts der Lichtquelle wird das Messobjekt beleuchtet, vorzugsweise mittels einer geeigneten Beleuchtungsoptik, ganz besonders bevorzugt durch Verwendung einer Beleuchtungsoptik, die die Lichtquelle in eine Aperturebene eines Objektivs abbildet, beispielsweise einer Köhlerschen Beleuchtungsoptik. Mit einem Teil des Lichts der Lichtquelle wird Referenzlicht erzeugt, vorzugsweise, indem das Licht der Lichtquelle mit Hilfe eines Strahlteilers, z. B. eines Neutralteilers oder eines Polarisationsteilers in einen ersten Teil aufgespaltet wird, der zur Beleuchtung des Messobjekts dient, und in einen zweiten Teil, der als Referenzlicht dient.

Mit Hilfe einer Interferometeroptik wird das vom Messobjekt als Messlicht durch Reflexion oder Streuung zurückgeworfene Beleuchtungslicht mit dem Referenzlicht zusammengeführt, vorzugsweise, indem Messlicht und Referenzlicht durch einen Strahlteiler miteinander vereint werden, zumindest aber, indem Mess- und Referenzlicht auf einen gemeinsamen Detektionsbereich gelenkt werden, wo durch Interferenz des Mess- und Referenzlichts ein Interferenzmuster entsteht. Derartige interferometrische Messvorrichtungen sind hinlänglich bekannt und werden auf vielfältige Weise verwendet. So können für die Umsetzung der vorliegenden Erfindung letztendlich alle Arten bekannter Interferometer verwendet werden, besonders hervorzuheben sind hier Michelson-Interferometer, Mach-Zehnder-Interferometer, Mirau-Interferometer, Linnik-Interferometer und Fizeau-Interferometer. Die vorliegende Erfindung beschränkt sich allerdings nicht auf diese Interferometer-Typen; es können auch beliebige andere Interferometer-Typen ohne Beschränkung vorteilhaft im Rahmen der vorliegenden Erfindung eingesetzt werden. Die Interferometeroptik weist somit bevorzugt eines oder mehrere optische Elemente aus der Liste optische Linsen, Strahlteiler, Filter, Blenden, Spiegel, Polarisationsfilter, Verzögerungsplatten und andere die Polarisation von Licht beeinflussende Elemente auf.

Die erfindungsgemäße interferometrische Messvorrichtung umfasst des Weiteren mindestens eine Verstelleinheit, mittels derer die optische Weglängendifferenz OPD oder die Phasendifferenz PD zwischen dem Messlicht und dem Referenzlicht um einen Betrag z verändert werden kann. Hierzu wird wahlweise die optische Weglänge des Messlichts oder des Referenzlichts oder die optische Weglänge von beiden verändert. Zur Veränderung der optischen Weglänge des Messlichts kann beispielsweise das Messobjekt relativ zur interferometrischen Messvorrichtung bewegt werden oder mit gleicher Wirkung die interferometrische Messvorrichtung relativ zum Messobjekt bewegt werden. Es ist auch möglich, die optischen Wege des Beleuchtungslichts und/oder des Messlichts so zu verändern, dass sich die OPD und/oder die PD ändert. Hierfür können beispielsweise bewegliche Spiegel, bewegliche Linsen oder andere bewegliche Strahlführungselemente verwendet werden. Es ist auch möglich, Elemente in den Strahlengang des Messlichts einzubringen, die die optische Weglänge durch Veränderung des optischen Brechungsindizes verändern. Solche Elemente können beispielsweise unterschiedliche Planplatten aus optischem Material sein, oder wenn eine kontinuierliche Veränderung des optischen Wegs gewünscht ist, auch gegeneinander verschiebbare Keilplatten aus optischem Material. Es sind ebenfalls auch optische Elemente wie z. B. LCD-Elemente, Pockelszellen etc. denkbar, bei denen sich der Brechungsindex bei Anlegen elektrischer Spannungen verändert.

Dieselbe Vielfalt von Möglichkeiten besteht und wird bevorzugt genauso benutzt, um die optische Weglänge des Referenzlichts zu verändern. Besonders bevorzugt wird eine Anordnung verwendet, bei der das Referenzlicht von einer Referenzoberfläche reflektiert oder gestreut wird, ganz besonders bevorzugt von einem Referenzspiegel, wobei diese Referenzoberfläche bewegt werden kann, so dass sich die optische Weglänge des Referenzlichts dadurch ändert.

Für die Veränderung der optischen Weglänge des Mess- und/oder Referenzlichts lassen sich im Rahmen des Beschriebenen besonders vorteilhaft mechanische Verstelleinheiten zur Bewegung von Komponenten benutzen. Hierfür sind besonders motorgetriebene Spindeln mit Schritt- oder Gleichstrommotoren mit oder ohne Encoder und Tacho, Lineareinheiten, piezogetriebene Versteller oder Schreitmotoren und viele andere Antriebseinheiten geeignet. Besonders bevorzugt umfassen die benutzten Verstelleinheiten ein eigenes Messsystem, oder es wird ein Messsystem bereitgestellt, so dass sich die jeweilige Position der Verstelleinheit und damit die Veränderung der optischen Weglängendifferenz OPD und/oder der Phasendifferenz PD möglichst genau kontrollieren oder bestimmen lässt. Auch Regel-und Steuerungssysteme, beispielsweise PID-Regelungen zur genauen Positionierung oder zur Erreichung eines möglichst guten Gleichlaufs der Verstelleinheit sind überaus vorteilhaft. In einfachen Ausführungsformen genügt auch die Kenntnis des Start- und Endpunkts der Verstelleinheit, um bei einer einigermaßen gleichmäßigen Verstellgeschwindigkeit auf diejenigen Zeitpunkte schließen zu können, bei denen die OPD- und/oder die PD-Änderung jeweils einen bestimmten gewünschten, explizit und/oder implizit vorgegebenen Wert erreicht, oder um auf den jeweils zu bestimmten Zeitpunkten des Verstellens vorliegenden Betrag z der Veränderung von OPD bzw. PD schließen zu können.

Soll nur die Phasendifferenz PD zwischen dem Mess- und Referenzlicht verändert werden, nicht jedoch die optische Weglängendifferenz OPD, dann wird bevorzugt die Wellenlänge des Lichts der Lichtquelle verändert, was beispielsweise bei manchen Lichtquellen wie Laserdioden oder LEDs durch Verändern der Betriebstemperatur und/oder durch Veränderung des angelegten Stroms oder beispielsweise bei Lasern durch Veränderungen in der Laserkavität wie z. B. durch Längenänderungen oder durch eine Beeinflussung mittels spektral filternder Elemente erreicht werden kann. Derartige in ihrer Wellenlänge veränderliche Lichtquellen sind in vielerlei Ausführungen kommerziell erhältlich. Bei breitbandigen Lichtquellen lässt sich die Wellenlänge letztendlich auch durch Einsatz veränderlicher spektraler Filter beeinflussen.

Unabhängig davon, welche der vielfältigen Möglichkeiten zum Verstellen der optischen Weglängendifferenz und/oder der Phasendifferenz zwischen dem Messlicht und dem Referenzlicht eingesetzt wird, ist es wichtig, den Betrag z zu kontrollieren oder zumindest zu kennen, um den die OPD bzw. die PD jeweils verändert wird. Hierzu wird vorteilhafterweise ein Bezug zwischen dem Verstellparameter oder den Verstellparametern der Verstelleinheit und der zugehörigen Änderung der OPD bzw. der PD hergestellt. Bei Kenntnis der Systemparameter ist dies im Regelfall sehr einfach, beispielsweise ist bei Verwendung eines piezogetriebenen rückreflektierenden Spiegels im Referenzarm als Verstellelement für die optische Weglänge des Referenzlichts dieser Bezug einerseits durch die Kalibrierung des Piezoverstellers gegeben, mit deren Hilfe bevorzugt die angelegte Spannung U in einen Verschiebeweg w(U) des Spiegels umgerechnet wird, und andererseits durch das Wissen, dass bei einer Verschiebung w(U) des Spiegels sich der optische Weg des Referenzlichts aufgrund der Beeinflussung sowohl von Hinweg als auch von Rückweg dann um 2*w(U) verändert bzw. um 2*n*w(U), wenn der Brechungsindex n des durchlaufenen Mediums wie z. B. Luft nicht vernachlässigt werden kann. Da derartige Überlegungen auch in den meisten anderen Fällen sehr leicht durchführbar sind und auch dem Fachmann sehr geläufig sind, wird ohne Beschränkung der Allgemeinheit darauf verzichtet, diese hier weiter auszuführen. In Fällen, in denen sich der Bezug des Verstellparameters oder der Verstellparameter der Verstelleinheit zum Betrag z der Veränderung der OPD bzw. PD nicht so einfach oder nicht ausreichend genau herstellen lässt, wird bevorzugt ein zusätzliches Messsystem vorgesehen, mit dessen Hilfe dann der Betrag z der Veränderung von OPD bzw. PD direkt gemessen und/oder kontrolliert wird, beispielsweise durch ein geeignetes Längen- oder Geschwindigkeitsmesssystem.

In allen Fällen wird davon ausgegangen, dass der Betrag z, um den die optische Weglängendifferenz OPD oder die Phasendifferenz PD zwischen dem Messlicht und dem Referenzlicht durch die Verstelleinheit verändert wird, jeweils mit einer gewissen, in vielen Fällen ausreichenden Genauigkeit bekannt ist.

Allerdings ist zu beachten, dass diese Genauigkeit, mit der Betrag z der OPD- bzw. PD-Veränderung bei real durchgeführten Messungen bekannt ist, immer nur endlich ist. Dies heißt, dass zwar jeweils eine Kenntnis über diesen Betrag z vorliegt ist, jedoch der bekannte Wert nie vollständig dem real vorliegenden Wert entspricht. Nichtsdestotrotz wird im Rahmen der vorliegenden Erfindung genauso wie im Stand der Technik dieser nur endlich genau vorliegende Wert von z für die Auswertung benutzt, zumindest solange kein besserer Wert bekannt ist. Allerdings unterscheidet sich die erfindungsgemäße Vorrichtung und das erfindungsgemäße Verfahren dadurch vom Stand der Technik, dass die erfindungsgemäße Auswertung deutlich unempfindlicher und robuster gegenüber den unvermeidbaren Abweichungen der realen Werte von z gegenüber den bekannten Werten von z ist, wie im Folgenden noch weiter ausgeführt wird.

Die erfindungsgemäße interferometrische Messvorrichtung umfasst des Weiteren mindestens einen Multielement-Detektor mit einer Vielzahl von Detektorelementen p, der dazu ausgebildet ist, für mindestens zwei um verschiedene Beträge $z_i$ veränderte optische Weglängendifferenzen bzw. Phasendifferenzen die Lichtintensitäten $I^p(z_i)$ des Interferenzmusters auf den Detektorelementen p im Detektionsbereich zu erfassen. Hierfür eignen sich besonders Kameras, bevorzugt CCD- oder CMOS-Kameras. Insbesondere in Fällen, bei denen es mehr auf eine hohe Geschwindigkeit als auf eine hohe Zahl an Detektorelementen ankommt, lassen sich auch Photodioden-Arrays oder -Zeilen vorteilhaft einsetzen. Es ist wichtig, dass die Detektorelemente die auf ihnen auftreffenden Lichtintensitäten jeweils zu Zeitpunkten erfassen, an denen der jeweilige Betrag $z_i$, um den die optische Weglängendifferenz bzw. die Phasendifferenz gegenüber dem Referenzzustand des Interferometers verändert ist, möglichst genau bekannt ist. Dazu wird bevorzugt jeweils zuerst die Verstelleinheit positioniert und anschließend dem Multielement-Detektor ein Triggersignal beispielsweise von der Verstelleinheit oder einer sie steuernden Ansteuereinheit zur Verfügung gestellt. Es ist aber beispielsweise auch möglich, dass sich in einer vorteilhaften Ausgestaltung die Verstelleinheit kontinuierlich bewegt und zu Zeitpunkten, an denen sie definierte Punkte durchfährt, die Verstelleinheit, ihre Ansteuereinheit oder ein der Bewegung der Verstelleinheit zugeordnetes Messsystem dem Multielement-Detektor Triggersignale sendet, die die Bildaufnahme auslösen. Alternativ ist es auch denkbar, dass der Multielement-Detektor seine Bildaufnahme selbsttätig steuert oder diese von einer dritten Einheit gesteuert wird, wobei in diesem Fall die Signale des Multielement-Detektors oder der dritten Einheit dazu benutzt werden, um zu den entsprechenden Zeitpunkten die Positionen der Verstelleinheit auszulesen, entweder direkt oder aber durch ein geeignetes Messsystem. Es gibt auch eine Vielzahl von weiteren Möglichkeiten, wie eine Synchronisation von Bildaufnahme und Verstellposition realisiert werden kann, welche alle im Rahmen der erfindungsgemäßen Vorrichtung verwendet werden können. Wichtig ist nur, dass die mit dem Multielement-Detektor erfassten Lichtintensitäten möglichst genau dem jeweiligen zugehörigen Betrag $z_i$ zugeordnet werden können, um den die optische Weglängendifferenz bzw. die Phasendifferenz gegenüber dem Referenzzustand des Interferometers verändert wurde. Der Multielement-Detektor weist zum Erreichen einer möglichst guten Auflösung bei der Bestimmung der Oberflächentopographie des Messobjekts bevorzugt eine große Anzahl von Detektorelementen auf, insbesondere vorteilhaft mehr als 100, bevorzugt mehr als 10.000, ganz besonders bevorzugt mehr als 100.000 Detektorelemente.

An dieser Stelle ist darauf hinzuweisen, dass in den meisten Fällen jedem Detektorelement p des Multielement-Detektors durch eine optische Abbildung mittels der Interferometeroptik ein zugehöriger Punkt auf der Oberfläche des Messobjekts zugeordnet ist, der dann der Einfachheit halber auch p genannt wird, was im Regelfall nicht zu Verwechslungen führt. Bei Vorliegen dieser Zuordnung lässt sich dann aus demjenigen Betrag $z^p$ für die Veränderung der optischen Weglängendifferenz bzw. Phasendifferenz gegenüber dem Referenzzustand des Interferometers, bei dem die optische Weglängendifferenz bzw. die Phasendifferenz zwischen dem Messlicht und dem Referenzlicht für das Detektorelement p den vorgegebenen Wert erreicht, der Höhenwert $h^p$ des Punkts p auf der Oberfläche des Messobjekts ermitteln. Liegt eine solche direkte Zuordnung zwischen Detektorelement p des Multielement-Detektors und einem zugehörigen Punkt auf der Messobjekt-Oberfläche nicht vor, weil das Detektorelement durch die Interferometeroptik nicht auf das Messobjekt abgebildet wird, sondern an eine andere Stelle, beispielsweise in die Pupille der Abbildungsoptik, dann lässt sich die erfindungsgemäße Vorgehensweise dennoch genauso verwenden, allerdings erfolgt dann die Bestimmung der Oberflächentopographie nicht durch eine direkte Zuordnung des Wertes $z^p$ für das Detektorelement p zu einem Höhenwert $h^p$ des zugehörigen Messobjekt-Punktes p. Stattdessen wird die Oberflächentopographie in diesem Fall durch eine Transformation des ermittelten Höhen- oder Phasenprofils $h^p$ in der optisch zu den Detektorelementen konjugierten Fläche auf das Messobjekt durchgeführt, wobei dem Fachmann die entsprechende Vorgehensweise bekannt ist und was deshalb hier nicht weiter erläutert wird. Die erfindungsgemäße Vorgehensweise lässt sich auch in diesem Fall in gleicher Weise wie im anschaulich klareren Fall verwenden, bei dem jedem Detektorelement p direkt ein Messobjektpunkt p zugeordnet ist.

Die erfindungsgemäße interferometrische Messvorrichtung umfasst des Weiteren mindestens eine Auswerteeinheit, die mit dem Multielement-Detektor verbunden ist. Besonders vorteilhaft ist die Auswerteeinheit zusätzlich mit der Verstelleinheit, deren Ansteuereinheit und/oder einem der Verstelleinheit oder einer Bewegung der Verstelleinheit zugeordneten Messsystem verbunden, wodurch die Auswerteeinheit Informationen über die durch die Verstelleinheit durchgeführten Veränderungen zur Verfügung gestellt werden können. Bei der Auswerteeinheit handelt es sich bevorzugt um einen Computer, ein Compute Module, einen Mikroprozessor, einen DSP, einen FPGA etc. Wesentlich ist, dass die Auswerteeinheit dazu ausgebildet ist, für eine Vielzahl von Detektorelementen p des Multielement-Detektors denjenigen Betrag $z^p$ für die Veränderung der optischen Weglängendifferenz bzw. Phasendifferenz gegenüber dem Referenzzustand des Interferometers zu bestimmen, bei dem die optische Weglängendifferenz bzw. die Phasendifferenz zwischen dem Messlicht und dem Referenzlicht einen vorgegebenen Wert erreicht, und hieraus die Oberflächentopographie des Messobjekts zu ermitteln.

Hierzu werden für eine Vielzahl von Verstellpositionen der Verstelleinheit, mindestens jedoch für zwei Verstellpositionen die mit den Detektorelementen p des Multielement-Detektors erfassten Lichtintensitäten $I^p(z_i)$ des Interferenzmusters an die Auswerteeinheit übertragen. Dadurch liegen der Auswerteeinheit für eine Vielzahl von um verschiedene Beträge $z_1, z_2, ..., z_n$ gegenüber dem Referenzzustand des Interferometers veränderte optische Weglängendifferenzen bzw. Phasendifferenzen zwischen dem Messlicht und dem Referenzlicht die entsprechenden Korrelogramme $c^p = (c^p(1), c^p(2), ..., c^p(n)) = (I^p(z_1), I^p(z_2), ..., I^p(z_n))$ vor.

Üblicherweise werden aus diesen Korrelogrammen gemäß der beschriebenen Vorgehensweise nach dem Stand der Technik diejenigen Beträge $z^p$ für die Veränderung der optischen Weglängendifferenz bzw. der Phasendifferenz gegenüber dem Referenzzustand des Interferometers bestimmt, bei denen die optische Weglängendifferenz bzw. die Phasendifferenz zwischen dem Messlicht und dem Referenzlicht einen vorgegebenen Wert - insbesondere den bevorzugt vorgegebenen Wert null - erreicht, und hieraus die Oberflächentopographie des Messobjekts ermittelt.

Der vorgegebene Wert kann explizit oder implizit vorgegeben sein, wie nachfolgend beschrieben.

Der vorgegebene Wert ist bevorzugt als konstanter Wert vorgegeben, insbesondere bevorzugt wie zuvor beschrieben ist der Wert null vorgegeben. Es liegt im Rahmen der Erfindung, dass für jedes Detektorelement p ein unterschiedlicher Wert vorgegeben ist. Bevorzugt ist für eine Vielzahl von Detektorelementen, insbesondere bevorzugt für alle Detektorelemente der gleiche Wert vorgegeben, insbesondere der Wert null.

Es liegt somit im Rahmen der Erfindung, dass explizit ein konstanter Wert wie z. B. "null" (für die Weglängendifferenz) bzw. "0°" (für die Phasendifferenz) vorgegeben wird, wobei das $z^p$ so ermittelt wird, dass bei $z = z^p$ gerade dieser Wert erreicht wird. Ebenso liegt es im Rahmen der Erfindung, dass der Wert implizit vorgeben wird, insbesondere, indem die Vorgabe derart erfolgt, dass bei $z = z^p$ ein bestimmter Punkt im Korrelogramm erreicht wird, bevorzugt ein Einhüllendenmaximum oder eine andere markante Stelle im Korrelogramm und/oder eine bestimmte Phasenlage des Korrelogramms in der Nähe des Einhüllendenmaximums oder einer anderen markanten Stelle im Korrelogramm. Auch durch solch eine implizite Vorgabe wird ein Wert der optischen Weglängendifferenz bzw. Phasenlage vorgegeben - auch wenn dieser zum Zeitpunkt der Vorgabe nicht explizit bekannt ist bzw. nachfolgend ermittelt wird.

Die Auswerteeinheit benötigt Informationen über die Beträge $z_i$, um den die optische Weglängendifferenz bzw. die Phasendifferenz gegenüber dem Referenzzustand des Interferometers während der Erfassung der Lichtintensitäten $I^p(z_i)$ verändert war. Diese liegen der Auswerteeinheit üblicherweise vor, beispielsweise entweder dadurch, dass die Beträge $z_i$ durch eine vorgegebene Ansteuerung der Verstelleinheit der interferometrischen Vorrichtung bekannt sind, oder aber dadurch, dass die Verstelleinheit und/oder ein ihr zugeordnetes Messsystem diese Informationen an die Auswerteeinheit durch eine geeignete Daten- oder Triggerleitung weitergibt. Auch im Fall, dass die Verstelleinheit und/oder ein ihr zugeordnetes Messsystem mittels einer Triggerleitung die Datenaufnahme des Multielement-Detektors triggert, können diese Informationen der Auswerteeinheit zur Verfügung gestellt werden, beispielsweise, indem die Konfiguration der Triggerzeitpunkte in Abhängigkeit der Verstellposition der Verstelleinheit der Auswerteeinheit bekannt gemacht werden oder durch sie definiert werden. Neben den beschriebenen Realisierungen gibt es eine weitere Vielzahl von Möglichkeiten, wie die Auswerteeinheit an die Informationen über die zu den Korrelogrammen $c^p = (c^p(1), c^p(2), ..., c^p(n)) = (I^p(z_1), I^p(z_2), ..., I^p(z_n))$ zugehörigen Beträge $z_1, z_2, ..., z_n$ gelangen kann, die alle im Rahmen der vorliegenden Erfindung auch vorteilhaft genutzt werden können.

Es ist zu beachten, dass zumindest bei Verwendung der Vorgehensweisen nach dem Stand der Technik für die weitere Auswertung eine möglichst genaue Kenntnis der Beträge $z_1, z_2, ..., z_n$ essentiell für die Qualität der Ergebnisse ist. Die bekannten Vorgehensweisen gehen nämlich davon aus, dass die der Auswerteeinheit bekannten Beträge $z_1, z_2, ..., z_n$ auch deren realen Werte sind und verwenden diese zur weiteren Berechnung. Dies führt beispielsweise besonders dann zu Problemen, wenn im Zusammenhang mit der Bestimmung der Einhüllenden und/oder des Einhüllendenmaximums und/oder der Phase eines Korrelogramms eine Fourier- oder Hilberttransformation verwendet wird. Zwar gibt es mathematische Verfahren, mit denen solche Transformationen auch für an nichtäquidistanten Stützstellen abgetasteten Signalverläufe durchgeführt werden können, jedoch führen auch diese genauso wie die herkömmlichen Transformationen zu fehlerhaften Ergebnissen, wenn die angenommenen Stützstellen der zu transformierenden Signalverläufe nicht den realen Stützstellen entsprechen. Ähnliche Probleme bestehen auch bei allen anderen bekannten Vorgehensweisen zur Bestimmung von Einhüllenden, Einhüllendenmaxima und/oder Phasenlagen von Korrelogrammen, wenn die angenommenen Stützstellen nicht den realen entsprechen, unabhängig davon, ob sie äquidistant sind oder nicht. Beispielsweise führt ein Anfitten von Kurven, insbesondere von sinusförmigen Kurven, an die Signalverläufe von Korrelogrammen zu großen Abweichungen, wenn die Stützstellen, an denen die Fitfunktion und ihre Abweichung zu den Messdaten ja berechnet wird, nicht die richtigen sind.

Natürlich ist es auch für die erfindungsgemäße Vorgehensweise vorteilhaft, wenn die Beträge $z_1$, $z_2$, ..., $z_n$ möglichst genau bekannt sind, allerdings ist die erfindungsgemäße Vorgehensweise erheblich robuster gegenüber Abweichungen der bekannten Werte für die $z_i$ von den zugehörigen realen, aber unbekannten Werten der $z_i$.

Solche Abweichungen können beispielsweise dadurch auftreten, dass (i) aufgrund von Vibrationen oder Bewegungen die Länge von Mess- und/oder Referenzarm des Interferometers während der Messungen unkontrolliert beeinflusst wird, dass (ii) Veränderungen der Dichte und/oder des Brechungsindizes mindestens eines der vom Licht durchlaufenen Medien in Mess- und/oder Referenzarm die Messungen unkontrolliert beeinflussen oder dass (iii) Ungenauigkeiten und/oder Fehler bei der Bestimmung des Beträge $z_i$ auftreten.

In der erfindungsgemäßen interferometrische Messvorrichtung ist die Auswerteeinheit nun so ausgebildet, dass sie zur Bestimmung des dem Detektorelement p zugeordneten Werts zp neben den Lichtintensitäten lp(zi) auf dem Detektorelement p auch die Lichtintensitäten lq(zi) mindestens eines anderen Detektorelements q des Multielement-Detektors verwendet.

Der Vorteil hiervon wird schon anhand einer einfachen und dennoch relevanten Überlegung sehr klar: In den meisten Fällen sind die Höhenwerte hp und hq direkt nebeneinanderliegender Oberflächenpunkte p und q des Messobjekts zwar nicht exakt gleich, jedoch sehr ähnlich.

Entsprechend unterscheiden sich auch die zugehörigen Korrelogramme $c^p = (l^p(z_1), l^p(z_2), ..., l^p(z_n))$ und $c^q = (l^q(z_1), l^q(z_2), ..., l^q(z_n))$ nur kaum. Die einzelnen Werte $c^p(i)$ bzw. $c^q(i)$ hiervon lassen sich unter Verwendung des generellen funktionalen Korrelogrammverlaufs c(OPD) als $c^p(i) = c(z_i -2*h^p)$ bzw. $c^q(i) = c(z_i -2*h^q)$ darstellen.

Da sich $h^p$ und $h^q$ nur wenig unterscheiden, lässt sich $h^q$ in der Form $h^q = h^p+ \Delta$ darstellen, wobei $\Delta$ sehr klein ist. Damit wird

$$c^q(i) = c(z_i - 2*h^q) = c(z_i -2*h^p - 2*\Delta) \approx c(z_i -2*h^p) - 2*\Delta * c'(z_i -2*h^p),$$

wobei $c'(z_i -2*h^p)$ die Ableitung des generellen funktionalen Korrelogrammverlaufs c(OPD) an der Stelle $z_i -2*h^p$ ist.

Dies bedeutet, dass man durch Differenzbildung der beiden Korrelogramme $c^q$ und $c^p$ bis auf einen einfachen Skalierungsfaktor sofort die Ableitung des Korrelogramms für den Messpunkt p an genau den Stellen $z_i -2*h^p$ bestimmen kann, an denen auch das Korrelogramm selbst aufgenommen wurde.

Nun kann man beim typischen generellen funktionalen Korrelogrammverlauf c(OPD) = env(OPD) * cos ($\varphi$(OPD)) der kurzkohärenten Interferometrie in guter Näherung davon ausgehen, dass sich die Einhüllende viel langsamer als die sinusförmige Modulation ändert, was bedeutet dass bei der nach der Produkt- und Kettenregel gebildeten Ableitung

$$c'(OPD) = env'(OPD) * cos (\varphi(OPD)) - env(OPD) * sin (\varphi(OPD)) * \varphi'(OPD)$$

der erste Term vernachlässigt werden kann, weshalb unter der realistischen Annahme, dass $\varphi$(OPD) näherungsweise linear von der OPD abhängt, $\varphi'$(OPD) also konstant ist, die Ableitung c'(OPD) proportional zum in der Trägerfrequenz um 90° phasenverschobenen synthetischen Korrelogramm s(OPD) = env(OPD) * sin (cp(OPD)) ist.

Entsprechendes gilt natürlich nicht nur für die kurzkohärente Interferometrie, sondern insbesondere auch für die Phase-Shifting-Interferometrie, da hier die für die kurzkohärente Interferometrie nur näherungsweise gültigen Bedingungen env'(OPD)=0 sowie die Konstanz von $\varphi'$(OPD) sogar exakt gelten.

Dies bedeutet nun zusammengefasst, dass man durch einfache Differenzbildung der Korrelogramme $c^p$ und $c^q$ bis auf einen Skalierungsfaktor f das gegenüber dem Korrelogramm $c^p$ in der Trägerfrequenz um 90° phasenverschobene synthetische Korrelogramm

$$s^p = (s^p(1), s^p(2), ..., s^p(n)) = f * (Q^p(z_1), Q^p(z_2), ..., Q^p(z_n))$$

$$= f * (I^q(z_1) - I^p(z_1), I^q(z_2) - I^p(z_2), ..., I^q(z_n) - I^p(z_n))$$

erhält, wobei $Q^p(z_i) = I^q(z_i) - I^p(z_i)$ wie beschrieben ein gegenüber den Lichtintensitäten $I^p(z_i)$ in seiner Modulation phasenverschobenes Signal darstellt. Dieses in der Trägerfrequenz verschobene synthetische Korrelogramm $s^p$ liegt genau an den gleichen Punkten $z_i$ abgetastet vor, an denen auch das ursprüngliche Korrelogramm $c^p$ abgetastet wurde, wobei zur Erzeugung dieses synthetischen Korrelogramms keinerlei Kenntnis der Werte $z_i$ verwendet wird. Dadurch ist die Erzeugung des zum Korrelogramm $c^p$ zugehörigen synthetischen Korrelogramms $s^p$ mittels der erfindungsgemäßen Vorgehensweise unabhängig von der genauen Kenntnis der realen Werte der Parameter $z_i$, was die Auswertung wesentlich robuster gegenüber allen Arten von Störungen im Vergleich zu den bisher bekannten Verfahren macht.

Insbesondere ist es vorteilhaft, einen wie weiter unten beschrieben bestimmten Richtungs- oder Tangentialvektor dazu zu benutzen, zu den Lichtintensitäten $I^p(z_1)$, $I^p(z_2)$, ... , $I^p(z_n)$ ein phasenverschobenes Signal $Q^p(z_1)$, $Q^p(z_2)$, ... , $Q^p(z_n)$ zu bestimmen oder zu aus den $I^p(z_1)$, $I^p(z_2)$, ... , $I^p(z_n)$ durch Projektion und/oder Transformation hervorgegangenen Vektoren ein entsprechendes zugehöriges phasenverschobenes Signal zu bestimmen.

Mittels der Lichtintensitäten $I^p(z_1)$, $I^p(z_2)$, ... , $I^p(z_n)$ und den phasenverschobenen Signalen $Q^p(z_1)$, $Q^p(z_2)$, ... , $Q^p(z_n)$ lassen sich somit weitere aus dem Stand der Technik bekannte Schritte durchführen, insbesondere eine Einhüllende und/oder Phasenlage des durch die Lichtintensitäten gegebenen Signalverlaufs bestimmen. Es ist somit vorteilhaft, die Lichtintensitäten $I^p(z_1)$, $I^p(z_2)$, ... , $I^p(z_n)$ zusammen mit den phasenverschobene Signalen $Q^p(z_1)$, $Q^p(z_2)$, ... , $Q^p(z_n)$ dazu zu benutzen, eine Einhüllende und/oder eine Phasenlage des durch die Lichtintensitäten $I^p(z_1)$, $I^p(z_2)$, ... , $I^p(z_n)$ gegebenen Signalverlaufs zu ermitteln oder entsprechendes für aus den $I^p(z_1)$, $I^p(z_2)$, ... , $I^p(z_n)$ durch Projektion und/oder Transformation hervorgegangene Vektoren und die zugehörigen phasenverschobenen Signalen durchzuführen. Insbesondere ist es vorteilhaft, die bestimmte Phasenlage und/oder Einhüllende dazu zu benutzen, für das Element $p$ des Multielement-Detektors denjenigen Betrag $z^p$ für die Veränderung der optischen Weglängendifferenz bzw. Phasendifferenz bestimmen, bei dem die optische Weglängendifferenz bzw. die Phasendifferenz zwischen dem Messlicht und dem Referenzlicht einen explizit und/oder implizit vorgegebenen Wert erreicht.

Es ist daher vorteilhaft, dass die Lichtintensitäten $I^p(z_1)$, $I^p(z_2)$, ... , $I^p(z_n)$ zusammen mit den phasenverschobene Signalen $Q^p(z_1)$, $Q^p(z_2)$, ... , $Q^p(z_n)$ dazu benutzt werden, eine Einhüllende und/oder eine Phasenlage des durch die Lichtintensitäten $I^p(z_1)$, $I^p(z_2)$, ... , $I^p(z_n)$ gegebenen Signalverlaufs zu ermitteln oder entsprechendes für aus den $I^p(z_1)$, $I^p(z_2)$, ... , $I^p(z_n)$ durch Projektion und/oder Transformation hervorgegangene Vektoren und den zugehörigen phasenverschobenen Signalen durchzuführen.

Für die weitere Auswertung wird bevorzugt noch der Skalierungsfaktor $f$ bestimmt, damit das Korrelogramm $s^p$ die gleiche Skalierung wie das Korrelogramm $c^p$ erhält. Hierfür gibt es eine Vielzahl von Möglichkeiten; eine relativ einfache besteht darin, den Faktor $f$ so zu optimieren, dass $(c^p)^2 + (s^p)^2$, welches ja das Quadrat der Einhüllenden des Korrelogramms ergibt, einen möglichst flachen Verlauf bekommt - hierfür muss $c^p$ natürlich das um seinen Offset bereinigte Korrelogramm sein, wobei der Offset im einfachsten Fall den Randbereichen des Korrelogramms entnommen wird, an denen ja keine oder kaum Interferenz auftritt, oder alternativ der Offset durch geeignete Mittelung der einzelnen Korrelogrammwerte bestimmt wird. Anstatt den Faktor $f$ dadurch zu optimieren, dass das Quadrat der Korrelogramm-Einhüllenden eine möglichst flachen Verlauf bekommt, ist entsprechendes natürlich auch für die Quadratwurzel hieraus möglich, welche die Einhüllende selbst ergibt, oder jede andere geeignete Funktion hiervon. Sofern nicht ein derart einfacher Fall vorliegt, dass man den optimalen Wert von $f$ aus den vorliegenden Daten direkt, z. B. über eine Formel, bestimmen kann, setzt man hierzu vorteilhaft ein beliebiges mathematisches Optimierungsverfahren wie beispielsweise das Gradientenverfahren ein, um den Parameter $f$ so zu bestimmen, dass eine vorgegebene Bewertungsfunktion $b(f)$, die die Abweichung von einem flachen Verlauf in geeigneter Weise bewertet, minimal wird. Ein vorteilhaftes Beispiel für eine derartige Bewertungsfunktion ist die Summe

$$b(f) = \sum_{i=2}^{n} \left( (I^p(z_i)^2 + (f * Q^p(z_i))^2) - (I^p(z_{i-1})^2 + (f * Q^p(z_{i-1}))^2) \right)^2,$$

mit deren Hilfe die Abweichung des Einhüllendenquadrats für jeden Punkt $i$ des Korrelogramms von dem des Vorgängerpunkts $i-1$ durch Differenz bestimm wird, diese Abweichungen dann quadriert und anschließend über alle Punkte summiert werden. Für den optimalen Faktor $f$ wird dieses $b(f)$ minimal.

Zu beachten ist hierbei, dass die $I^p(z_i)$ hierfür die wie zuvor beschrieben um ihren Offset korrigierten Lichtintensitäten des Korrelogramms am Punkt $p$ sind.

Noch einfacher ist es, nur die Punkte in der Nähe des Korrelogramm-Maximums zur Bestimmung des Faktors $f$ heranzuziehen und davon auszugehen, dass für diese Punkte $(c^p)^2 + (s^p)^2$ nahezu konstant sein muss, so dass als Bewertungsfunktion bevorzugt die Standardabweichung der aus den in der Nachbarschaft des Einhüllendenmaximums liegenden Punkten bestimmten Werte $I^p(z_i)^2 + (f*Q^p(z_i))^2$ oder der Quadratwurzel hieraus dient.

Eine insbesondere bei der Phase-Shifting-Interferometrie bevorzugte Vorgehensweise zur Bestimmung des Skalierungsfaktors f ermittelt neben dem Wert für f gleichzeitig auch einen Wert für den Offset o des Korrelogramms $c^p$. Hierzu optimiert man durch eines der bekannten mathematischen Optimierungsverfahren gleichzeitig die beiden Parameter f und o so, dass wieder das Einhüllendenquadrat $(I^p(z_i) - o)^2 + (f*Q^p(z_i))^2$ oder eine Funktion hiervon einen möglichst flachen Verlauf in Abhängigkeit von i zeigt oder im Fall der Phase-Shifting-Interferometrie sogar möglichst konstant ist. Hierzu wird bevorzugt wieder wie zuvor beschrieben eine geeignete Bewertungsfunktion verwendet, die die Abweichungen von dem angestrebten flachen Verlauf oder einem konstanten Wert bewertet.

Eine weitere bevorzugte Herangehensweise den Faktor f zu bestimmen, ist es, an die in Abhängigkeit des Faktors f bestimmte Einhüllende eine realistische Einhüllendenfunktion anzufitten. beispielsweise eine theoretisch bekannte oder eine aus Messdaten ermittelte und/oder approximierte, und die Summe der entsprechenden Abweichungsquadrate ("Chi-Quadrat") als Bewertungsfunktion in Abhängigkeit von f heranzuziehen.

Neben den beschriebenen Möglichkeiten zur Bestimmung des Skalierungsfaktors f gibt es noch beliebige weitere, und es liegt im Rahmen der vorliegenden Erfindung auch solche heranzuziehen, sofern sie einen ausreichend genauen Wert für den benötigten Skalierungsfaktor f liefern.

Die $Q^p(z_i)$ entsprechen somit bis auf den Skalierungsfaktor f den synthetischen Korrelogrammen $s^p$.

Wenn nach Ermittlung des geeigneten Skalierungsfaktors f für jedes Korrelogramm $c^p$ auch das zugehörige und korrekt skalierte, in der Trägerfrequenz verschobene synthetische Korrelogramm $s^p$ bestimmt wurde, erfolgt die weitere Auswertung bevorzugt entsprechend den oder angelehnt an die bekannten Vorgehensweisen nach dem Stand der Technik.

Es ist daher vorteilhaft, den wie zuvor beschrieben bestimmten Richtungsvektor, Tangentialvektor und/oder das ermittelte phasenverschobene Signal $Q^p(z_1)$, $Q^p(z_2)$, ... , $Q^p(z_n)$ so zu skalieren, dass die Amplitude und/oder die Einhüllende der Trägerfrequenz hiervon der Amplitude bzw. Einhüllenden der Trägerfrequenz der Lichtintensitäten $I^p(z_1)$, $I^p(z_2)$, ... , $I^p(z_n)$ entspricht.

Beispielsweise werden die beiden Korrelogramme $c^p$ und $s^p$ in einer bevorzugten Ausführungsform wieder quadriert und addiert und die Quadratwurzel daraus gezogen, um die Einhüllende des Korrelogramms zu bestimmen. Die Position des Einhüllenden-Maximums lässt sich dann beispielsweise wieder durch Anfitten eines geeigneten Kurvenverlaufs hieran bestimmen. Es hat sich im Rahmen der Untersuchungen der Erfinder gezeigt, dass insbesondere bei Vorliegen einer der genannten Störungen der Verlauf der mittels der erfindungsgemäßen Vorgehensweise bestimmten Einhüllenden deutlich glatter und realistischer als bei den bisher bekannten Vorgehensweisen ist und die Position des Einhüllenden-maximums deutlich präziser erfolgt.

Auch die genauere Phasenauswertung der Korrelogramme, bei der zusätzlich zur Auswertung der Position des Einhüllendenmaximums auch noch die sinusförmige Modulation des Korrelogramms in der Nähe des Einhüllendenmaximums zur Auswertung herangezogen wird, liefert unter Verwendung der erfindungsgemäßen Vorgehensweise erheblich bessere Ergebnisse. Dadurch, dass für jeden Korrelogrammpunkt $c^p(i)$ der zugehörige Punkt $s^p(i)$ des in der Trägerfrequenz um 90° verschobenen Korrelogramms unabhängig von der Kenntnis des Betrags der durch die Verstelleinheit eingestellten OPD- bzw. Phasenänderung $z_i$, aber dennoch genau an der gleichen Stelle $z_i$ bestimmt wird, liegt mittels $\varphi^p(z_i) = \varphi^p(i) = \text{unwrap}(\arctan2(s^p(i), c^p(i)))$ ein präziser Phasenwert $\varphi^p(z_i)$ für jede OPD- bzw. PD-Änderung $z_i$ vor, wobei arctan2 diejenige Variante der Arkustangensfunktion ist, die einen Wertebereich von 360° abdeckt, sich also über alle vier Quadranten des Einheitskreises erstreckt und unwrap() ein nach der Arkustangensbildung durchgeführtes Phase-Unwrapping bezeichnet, das vorzugsweise so gewählt wird, dass an der Position des zuvor bestimmten Einhüllendenmaximums $\varphi^p(z)$ einen möglichst nahe an 0° liegenden Wert annimmt.

Kennt man nun den Phasenverlauf $\varphi^p(z_i)$, der ja als Funktion der $z_i$ mit relativ konstanter Steigung monoton ansteigt oder abfällt, kann man daraus recht einfach über lineare Regression (oder im Bedarfsfall bei evtl. auftretenden Abweichungen von der Linearität beispielsweise aufgrund von Dispersion etc. durch Kurvenfit) wieder denjenigen Wert $z^p$ bestimmen, an dem die OPD bzw. PD einen explizit und/oder implizit vorgegebenen Wert erreicht, z. B. indem $\varphi^p(z)$ dort einen explizit und/oder implizit vorgegebenen Wert annimmt, z. B. 0° für das gegenüber dem Einhüllendenmaximum nächstliegende Maximum der sinusförmigen Modulation oder 90° für den dem Einhüllendenmaximum nächstliegenden absteigenden Nulldurchgang der sinusförmigen Modulation.

Vorteilhafterweise werden somit zur Bestimmung des dem Multielement-Detektor-Element p zugeordneten Werts $z^p$ Informationen über eine Einhüllende und/oder eine Phasenlage der von der Veränderung z der optischen Weglängendifferenz und/oder der Phasendifferenz zwischen dem Messlicht und dem Referenzlicht abhängigen Funktion $I^p(z)$ ermittelt, insbesondere indem zur Ermittlung dieser Informationen neben den Lichtintensitäten $I^p(z_i)$ auch die Lichtintensitäten $I^q(z_i)$ mindestens eines anderen Detektorelements q des Multielement-Detektors verwendet werden.

Bei dieser Bestimmung von $z^p$ gehen eventuelle Ungenauigkeiten in den für die Auswertung verwendeten Werten $z_i$ nur unwesentlich ein, was das Verfahren sehr robust gegen Störungen macht und letztendlich zu hervorragenden Ergebnissen führt.

Der Vollständigkeit halber ist darauf hinzuweisen, dass die Abweichungen der Punkte mit den Koordinaten ($z_i$,

$\varphi^p(z_i)$) von dem Verlauf der Regressionsgeraden bzw. der Fitkurve vorteilhaft dazu benutzt werden, Korrekturen $\Delta z_i$ für die $z_i$ zu bestimmen und dadurch letztendlich genauere $z_i$-Werte zu erhalten, z. B. indem in einer vorteilhaften Ausführungsform die Korrekturwerte $\Delta z_i$ so bestimmt werden, dass die Punkte ($z_i + \Delta z_i$, $\varphi^p(z_i)$) genau auf der Regressionsgeraden bzw. der Fitkurve zu liegen kommen. Insbesondere durch Kombination der für verschiedene Detektorelemente p erhaltenen Korrekturwerte $\Delta z_i$, z. B. durch geeignete, ggf. eine geeignete Gewichtung umfassende Mittelungsverfahren, lassen sich die ursprünglich aufgrund von Störungen möglicherweise stark von den realen $z_i$-Werten abweichenden zur Verfügung stehenden $z_i$-Werte so korrigieren, dass auch die bekannten Auswerteverfahren zu besseren Ergebnissen führen. Insofern lässt sich die erfindungsgemäße Vorgehensweise mit der bisher bekannten Vorgehensweise kombinieren, um auch dort bessere Ergebnisse zu erzielen.

Im Prinzip lassen sich natürlich auch die nun so korrigierten $z_i$-Werte als neuer Ausgangspunkt für die erfindungsgemäße Auswertung verwenden, was durch Wiederholung sogar zu einem iterativen Verfahren ausgebildet werden kann. Allerdings zeigen die Untersuchungen der Erfinder, dass die Berechnung und Benutzung korrigierter $z_i$-Werte im Zusammenhang mit der erfindungsgemäßen Vorgehensweise kaum nennenswerte Vorteile bringt, da die erfindungsgemäße Vorgehensweise ohnehin sehr robust gegenüber Störungen ist, so dass typischerweise darauf verzichtet werden kann.

An dieser Stelle soll noch einmal darauf hingewiesen werden, dass die bisher beschriebene Vorgehensweise zwar am Beispiel der kurzkohärenten Interferometrie erläutert wurde, sich aber sehr leicht auch auf die Phase-Shifting-Interferometrie übertragen lässt. Natürlich gibt es bei der Phase-Shifting-Interferometrie keine Einhüllende des Korrelogramms bzw. ist diese eine Konstante, aber dadurch fällt ausschließlich der Schritt der Bestimmung des Einhüllendenmaximums weg, und alle Näherungen, die im Rahmen der kurzkohärenten Interferometrie nötig waren, gelten sogar exakt. Die eigentliche Vorgehensweise, bei der die Korrelogramme verschiedener Detektorelemente p und q miteinander kombiniert werden, bleibt jedoch in allen Details und Verästelungen vollständig erhalten, so dass die erfindungsgemäße Vorgehensweise, insbesondere gemäß der beschriebenen bevorzugten Ausführungsformen neben der kurzkohärenten Interferometrie auch die Phase-Shifting-Interferometrie vollumfänglich mitabdeckt.

An dieser Stelle ist noch einmal darauf hinzuweisen, dass das wie im Vorhergehenden und im Folgenden beschrieben ermittelte synthetische Korrelogramm $s^p = (s^p(1), s^p(2), ..., s^p(n))$ im Fall der kurzkohärenten Interferometrie zwar in sehr guter und in den meisten Fällen auch brauchbarer Näherung ein gegenüber dem Korrelogramm $c^p$ in der Trägerfrequenz um 90° phasenverschobenes Korrelogramm mit gleicher Einhüllender darstellt, dies aber nicht exakt richtig ist. Dies gilt wie zuvor dargestellt nur dann exakt, wenn sich die Einhüllende env(OPD) - wie bei der Phase-Shifting-Interferometrie - unendlich langsam über den generellen funktionalen Korrelogrammverlauf c(OPD) hinweg ändert und die Ableitung $\varphi'(OPD)$ der Phase konstant ist. Sollte diese Abweichung zwischen dem wie beschrieben ermittelten synthetischen Korrelogramm $s^p$ und dem eigentlich benötigten, gegenüber dem Korrelogramm $c^p$ in der Trägerfrequenz um 90° phasenverschobenen Korrelogramm mit gleicher Einhüllender nicht vernachlässigbar sein, lässt sich dies jedoch beheben, indem statt dem zuvor bestimmten synthetischen Korrelogramm $s^p$ ein entsprechend korrigiertes synthetisches Korrelogramm ermittelt wird, das dann anstelle von $s^p$ verwendet wird.

Hierzu formt man die Gleichung

$$c'(OPD) = env'(OPD) * \cos(\varphi(OPD)) - env(OPD) * \sin(\varphi(OPD)) * \varphi'(OPD)$$

unter Verwendung von $s(OPD) = env(OPD) * \sin(\varphi(OPD))$ zu

$$s(OPD) = -(c'(OPD) - env'(OPD) * \cos(\varphi(OPD))) / \varphi'(OPD)$$

um und erhält unter Verwendung von $c(OPD) = env(OPD) * \cos(\varphi(OPD))$ dann

$$s(OPD) = -(c'(OPD) - env'(OPD)/env(OPD) * c(OPD))) / \varphi'(OPD) .$$

Dies bedeutet, dass sich recht leicht ein korrigiertes synthetische Korrelogramm anstelle von $s^p$ erzeugen lässt, indem man nach der Bestimmung des Ableitungsvektors c'(OPD) (bzw. $(c^p)'$ für den konkreten Punkt p) zusätzlich hiervon das Originalkorrelogramm c(OPD) (bzw. $c^p$) abzieht, nachdem man es zuvor mit dem Faktor env'(OPD)/env(OPD) multipliziert hat, und die Differenz durch $\varphi'(OPD)$ dividiert.

Die Größen env(OPD), env'(OPD) und $\varphi'(OPD)$ werden bevorzugt aus einem Modell des generellen funktionalen Korrelogrammverlaufs ermittelt, das man aufgrund der Eigenschaften der Messvorrichtung kennt oder aus Messdaten bestimmt. Die Lage des Modells relativ zu den Messdaten ermittelt man leicht, z. B. aus der mit Hilfe des Originalkorrelogramms $c^p$ und des unkorrigierten synthetischen Korrelogramms $s^p$ ermittelten Position der Korrelogramm-Einhüllenden. Erfahrungsgemäß ist weder für das Modell noch für seine genaue Lage relativ zu den konkreten Korrelogrammen eine besonders hohe Genauigkeit erforderlich - die Vorgehensweise ist außerordentlich robust gegenüber Abweichungen jeder Art, so dass man die denkbare iterative Vorgehensweise zur Bestimmung des korrekten synthetischen Korrelogramms praktisch nur sehr selten brauchen wird.

Hiermit ist eine vorteilhafte Vorgehensweise angegeben, wie man - falls die im einfachsten Fall vorgenommen Näherungen zur Bestimmung des synthetischen Korrelogramms $s^p$ je zu grob sind - mit Hilfe des Originalkorrelogramms $c^p$ und eines relativ einfachen gehaltenen Modells ein korrektes gegenüber dem Korrelogramm $c^p$ in der Trägerfrequenz um 90° phasenverschobenes synthetisches Korrelogramm erhält, das dann bevorzugt anstelle des unzureichend genauen synthetischen Korrelogramms $s^p$ überall im Rahmen der im Bisherigen und im Folgenden beschriebenen erfindungsgemäßen Vorgehensweise ohne weitere Einschränkungen verwendet wird.

Im Bisherigen wurde zur Verdeutlichung nur an einem sehr einfachen Beispiel gezeigt, wie die erfindungsgemäße Ausbildung der Auswerteeinheit dazu benutzt werden kann, gegenüber dem bisher bekannten Stand der Technik robustere Ergebnisse bei der Bestimmung von Oberflächentopographie von Messobjekten zu erzielen.

Die wesentliche erfindungsgemäße Eigenschaft des erfindungsgemäßen Verfahrens sowie der Auswerteeinheit der erfindungsgemäßen Vorrichtung, nämlich, dass sie zur Bestimmung des dem Detektorelement p zugeordneten Werts $z^p$ neben den Lichtintensitäten $I^p(z_i)$ auf dem Detektorelement p auch die Lichtintensitäten $I^q(z_i)$ mindestens eines anderen Detektorelements q des Multielement-Detektors verwendet, lässt sich jedoch in sehr viel weitreichenderer Weise vorteilhaft ausgestalten und nutzen.

Zunächst ist nach dem bisher Gesagten relativ klar, man sich bei der Bestimmung des dem Detektorelement p zugeordneten Werts $z^p$ nicht auf die zusätzliche Information eines einzelnen weiteren Detektorelements q beschränken muss, sondern es Vorteile bringt, hierfür mindestens zwei, vorteilhaft mindestens drei, bevorzugt mindestens zehn und ganz besonders bevorzugt mindestens zwanzig Detektorelemente q des Multielementdetektors zu benutzen.

Vorteilhafterweise wird das mindestens eine andere Detektorelement q, dessen Lichtintensitäten $I^q(z_i)$ zur Bestimmung des dem Detektorelement p zugeordneten Werts $z^p$ verwendet werden, so ausgewählt, dass es gegenüber dem Detektorelement p vorgegebene Nachbarschaftseigenschaften besitzt.

Denn es ist vorteilhaft, für die Bestimmung des dem Detektorelement p zugeordneten Werts $z^p$ nicht einfach beliebige Detektorelemente q und die zugehörigen Korrelogramme zu benutzen, sondern hierfür solche Detektorelemente q auszuwählen, die gewisse vorteilhafte Nachbarschaftseigenschaften zum Detektorelement p aufweisen. Eine solche vorteilhafte Nachbarschaftseigenschaft ist beispielsweise in vielen Fällen natürlich eine räumliche Nachbarschaft zwischen den Detektorelementen p und q oder den zugehörigen Objektpunkten, aber auch die Ähnlichkeit der jeweils zugehörigen Korrelogramme kann eine Nachbarschaft definieren, aufgrund derer die Punkte q vorteilhaft ausgewählt werden können. Insofern ist es vorteilhaft, wenn das mindestens eine Detektorelement q, das zur Bestimmung des dem Detektorelement p zugeordneten Werts $z^p$ verwendet wird, so ausgewählt wird, dass es gegenüber dem Detektorelement p in Hinblick auf mindestens eine vorgegebene Metrik vorgegebene Nachbarschaftseigenschaften besitzt.

Insbesondere ist es daher vorteilhaft, dass die Nachbarschaftseigenschaften zumindest teilweise mit Hilfe einer Metrik definiert werden, wobei diese Metrik besonders vorteilhaft einen räumlichen Abstand der Detektorelemente p und q und/oder einen räumlichen Abstand von ihnen zugeordneten Punkten auf dem Messobjekt und/oder einer zum Multielement-Detektor konjugierten optischen Fläche umfasst.

Eine derartige Metrik zur Bestimmung der Nachbarschaft von Detektorelementen p und q kann die Bestimmung eines räumlichen Abstands der Detektorelemente p und q und/oder eines räumlichen Abstands von ihnen zugeordneten Punkten auf dem Messobjekt und/oder einer zum Multielement-Detektor konjugierten optischen Fläche umfassen. Dies ist schon insofern vorteilhaft, da räumlich benachbarte Detektorelemente meist auch Objektpunkten mit ähnlichen Höhenwerten zugeordnet sind. Außerdem sind Störungen, die räumlich benachbarte Detektorelemente betreffen, in sehr vielen Fällen ebenfalls sehr ähnlich. Insbesondere bei Störungen durch Veränderungen der Dichte und/oder des Brechungsindizes mindestens eines der vom Licht durchlaufenen Medien in Mess- und/oder Referenzarm, beispielsweise durch Verwirbelungen von Luft unterschiedlicher Temperaturen, sind die Störungen im Regelfall lokal verschieden, so dass man ihnen am besten gerecht wird durch eine entsprechend lokale Auswertung mittels zum Detektorelement p räumlich benachbarter Detektorelemente q.

Es ist vorteilhaft, wenn die Korrelogramme $c^p = (I^p(z_1), I^p(z_2), ..., I^p(z_n))$ und $c^q = (I^q(z_1), I^q(z_2), ..., I^q(z_n))$ selbst möglichst ähnlich, aber natürlich nicht gleich sind. Entsprechend ist es vorteilhaft, wenn die Metrik zur Bestimmung der Nachbarschaft von Detektorelementen p und q eine Metrik im n-dimensionalen Vektorraum der Vektoren $(I^p(z_1), I^p(z_2), ... , I^p(z_n))$ und $(I^q(z_1), I^q(z_2), ... , I^q(z_n))$ oder eine Metrik in einem Vektorraum der aus ihnen durch Projektion und/oder Transformation hervorgegangenen Vektoren umfasst. Eine derartige Metrik kann beispielsweise die Längenbestimmung des Differenzvektors $c^q-c^p$ oder der entsprechenden auf Unterräume projizierten Vektoren beinhalten, wobei durch den letzteren Fall ebenfalls mit umfasst wird, für die Nachbarschaftsbestimmung nur diejenigen Korrelogrammpunkte heranzuziehen, die nahe am jeweiligen Einhüllendenmaximum liegen.

Vorteilhaft verwendet die Metrik zur Bestimmung der Nachbarschaft von Detektorelementen p und q auch eine Abstandsmetrik, die auf mittels einer ersten Grobbestimmung ermittelten Höhenwerten $h^p$ und $h^q$ basiert.

Grundsätzlich ist es bei der Auswahl der zur Bestimmung des Werts $z^p$ herangezogenen Detektorelemente q in den meisten Fällen sehr vorteilhaft, solche Detektorelemente q heranzuziehen, bei denen eine hohe Ähnlichkeit beispielsweise der Korrelogramme $c^p$ und $c^q$ vorliegt, die im Sinne einer Nachbarschaftsmetrik also benachbart sind. Allerdings kann es von Nachteil sein, wenn beispielsweise die Korrelogramme $c^p$ und $c^q$ zu ähnlich oder sogar gleich sind, da in diesem Fall kaum oder keine zusätzliche Information gewonnen werden kann. Daher kann es in manchen Fällen sogar vorteilhaft sein, bei der Auswahl der zu verwendenden Detektorelemente q solche auszuschließen, die in Hinblick auf ihre Nachbarschaftseigenschaften als zu benachbart zu betrachten sind.

Grundsätzlich gibt es eine Vielzahl von Möglichkeiten, für die Bestimmung des dem Detektorelement p zugeordneten Werts $z^p$ die Korrelogramminformationen mehrerer weiterer Detektorelemente $q_1$, $q_2$, ... , $q_m$ zu verwenden. Die nächstliegende Möglichkeit besteht einfach darin, sequentiell wie beschrieben mit Hilfe der Korrelogramme $c^p$ und $c^{q_j}$ der Detektorelemente p und $q_j$ jeweils eigene Werte $z^p$ zu bestimmen und diese geeignet, ggf. gewichtet zu mitteln, um den letztendlichen Wert für $z^p$ zu erhalten.

Vorteilhafter ist es jedoch, nicht die mittels der unterschiedlichen Detektorelemente $q_j$ gewonnenen Werte für $z^p$ zu mitteln, sondern stattdessen die mit Hilfe der Detektorelemente $q_j$ ermittelten unterschiedlichen synthetischen Korrelogramme $s^p$ geeignet zu mitteln, um aus dem hieraus resultierenden gemittelten synthetischen Korrelogramm in Kombination mit dem zum Punkt p gehörenden Korrelogramm $c^p$ dann beispielsweise wie beschrieben den Wert für $z^p$ zu bestimmen.

Noch viel vorteilhafter ist es jedoch, sich die Korrelogramme $c^p$ = ($c^p(1)$, $c^p(2)$, ..., $c^p(n)$) und $c^{q_j}$ = ($c^{q_j}(1)$, $c^{q_j}(2)$, ..., $c^{q_j}(n)$) als Punkte oder Vektoren im n-dimensionalen Vektorraum vorzustellen und die bis auf den Faktor f gegebene Ableitung $s^p$ = ($s^p(1)$, $s^p(2)$, ..., $s^p(n)$) als Richtungsvektor zu betrachten, der die Hauptrichtung der durch die Vektoren $c^p$ = ($c^p(1)$, $c^p(2)$, ..., $c^p(n)$) und $c^{q_j}$ = ($c^{q_j}(1)$, $c^{q_j}(2)$, ..., $c^{q_j}(n)$) bzw. ($I^p(z_1)$, $I^p(z_2)$, ... , $I^p(z_n)$) und ($I^q(z_1)$, $I^q(z_2)$, ... , $I^q(z_n)$) gegebene Punkteverteilung zumindest lokal approximiert.

Auch die zuvor beschriebene Bestimmung des synthetischen Korrelogramms $s^p$ aus dem zum Detektorelement p gehörenden Korrelogramm $c^p$ und nur einem einzigen weiteren, zum Detektorelement q gehörenden Korrelogramm $c^q$ stellt bei Betrachtung im n-dimensionalen Vektorraum in diesem Sinne bereits eine zumindest lokale Approximation eines Richtungsvektors an eine (hier allerdings nur aus zwei Punkten bestehende) Punkteverteilung aus Korrelogrammvektoren dar.

Es ist daher vorteilhaft, dass die bei der Bestimmung des dem Detektorelement p zugeordneten Werts $z^p$ verwendete Approximation die Bestimmung eines Richtungsvektors umfasst, der zumindest lokal in einer Umgebung des Lichtintensitätsvektors ($I^p(z_1)$, $I^p(z_2)$, ..., $I^p(z_n)$) bzw. eines aus ihm durch Projektion und/oder Transformation hervorgegangenen Vektors die Hauptrichtung der durch die Vektoren ($I^p(z_1)$, $I^p(z_2)$, ..., $I^p(z_n)$) und ($I^q(z_1)$, $I^q(z_2)$, ..., $I^q(z_n)$) bzw. der aus ihnen durch Projektion und/oder Transformation hervorgegangenen Vektoren gegebenen Punkteverteilung approximiert.

Um die Auswertung wie diskutiert im n-dimensionalen Vektorraum durchführen zu können, werden bevorzugt die tatsächlich gemessenen Lichtintensitätsvektoren ($I^p(z_1)$, $I^p(z_2)$, ..., $I^p(z_n)$) und ($I^q(z_1)$, $I^q(z_2)$, ..., $I^q(z_n)$) verwendet oder aber diese vorteilhaft wie bereits mehrfach beschrieben um Offset und/oder Amplitudenskalierungsfaktor bereinigt. Wenn im Bisherigen oder Folgenden oder in den Patentansprüchen Lichtintensitätsvektoren des Typs ($I^p(z_1)$, $I^p(z_2)$, ..., $I^p(z_n)$) oder Korrelogramme bzw. Korrelogrammvektoren des Typs $c^p$ = ($c^p(1)$, $c^p(2)$, ..., $c^p(n)$) - welche im Übrigen identisch sind - verwendet wurden oder werden, ist - sofern nicht explizit anders angegeben oder offensichtlich unsinnig - jeweils bevorzugt beides mitgemeint. Daneben beschränkt man sich bevorzugt bei sämtlichen Betrachtungen und Überlegungen jeweils auf eine Untermenge der Korrelogrammpunkte des Typs $I^p(z_1)$, $I^p(z_2)$, ... , $I^p(z_n)$) bzw. $c^p(1)$, $c^p(2)$, ..., $c^p(n)$, was beispielsweise in Hinblick auf Rechenaufwand vorteilhaft ist. Auch dies ist explizit durch die Beschreibung mit abgedeckt.

Zusammengefasst ist all dies durch die unter anderem in den Patentansprüchen verwendete Bezugnahme auf den "Lichtintensitätsvektor ($I^p(z_1)$, $I^p(z_2)$, ..., $I^p(z_n)$) bzw. einen aus ihm durch Projektion und/oder Transformation hervorgegangenen Vektor", wobei die Begriffe "Projektion und/oder Transformation" zusätzlich noch weitere Aspekte beinhalten können.

Um das synthetische Korrelogramm $s^p$ = ($s^p(1)$, $s^p(2)$, ..., $s^p(n)$) zu bestimmen, das bis auf den beschriebenen Faktor f als Richtungsvektor gegeben ist, der die Hauptrichtung der durch die Vektoren $c^p$ = ($c^p(1)$, $c^p(2)$, ..., $c^p(n)$) und $c^{q_j}$ = ($c^{q_j}(1)$, $c^{q_j}(2)$, ..., $c^{q_j}(n)$) bzw. ($I^p(z_1)$, $I^p(z_2)$, ..., $I^p(z_n)$) und ($I^{q_j}(z_1)$, $I^{q_j}(z_2)$, ..., $I^{q_j}(z_n)$) gegebene Punkteverteilung zu-mindest lokal approximiert, gibt es wiederum eine Vielzahl von Möglichkeiten. Die einfachste hiervon besteht einfach darin, mit bekannten mathematischen Methoden einen Fit, vorteilhafterweise eine Least-Squares-Fit bzw. eine Regression einer Geraden im n-dimensionalen Raum an die durch die gegebenen Vektoren gegebene Punkteverteilung vorzunehmen und hieraus dann den Richtungsvektor und damit bis auf den Faktor f das synthetische Korrelogramm $s^p$ zu bestimmen. Der Faktor f lässt sich anschließend wie bereits beschrieben bestimmen, und aus den beiden zum Detektorelement p gehörenden Korrelogrammen $c^p$ und $s^p$ wird dann bevorzugt ebenfalls wie zuvor beschrieben der gesuchte Wert $z^p$ ermittelt.

Eine andere, besonders vorteilhafte Möglichkeit, das synthetische Korrelogramm $s^p$ als Richtungsvektor zu bestimmen, der die durch die Korrelogrammvektoren $c^p$ und $c^{q_j}$ gegebene Punkteverteilung zumindest lokal approximiert, ist, das bekannte mathematische Verfahren der Hauptkomponentenanalyse (PCA = principal component analysis) zu verwenden. Hierbei werden die Hauptachsen der durch die Vektoren $c^p$ und $c^{qj}$ gegebenen Punkteverteilung ermittelt, wobei die Richtung des Eigenvektors, der zum größten Eigenwert der sogenannten Kovarianzmatrix gehört, der gesuchte Richtungsvektor ist. Sobald dieser Richtungsvektor vorliegt, wird wie bereits beschrieben fortgefahren. Es ist zu beachten, dass die Hauptkomponentenanalyse nicht notwendigerweise vollständig durchgeführt werden muss, sie muss nur soweit durchgeführt werden - und wird daher bevorzugt auch nur soweit durchgeführt - bis der gesuchte Eigenvektor vorliegt, was bei vielen der bekannten numerischen Verfahren für die PCA sehr früh der Fall ist, da er ja zum meist zuerst bestimmten größten Eigenwert gehört.

Bei dem erfindungsgemäßen Verfahren wird der dem Detektorelement p zugeordnete Wert $z^p$ unter Zuhilfenahme einer Approximation an zumindest einen Teil der durch die über die $I^p(z_i)$ und $I^q(z_i)$ gegebenen n-dimensionalen Lichtintensitätsvektoren ($I^p(z_1)$, $I^p(z_2)$, ... , $I^p(z_n)$) und ($I^q(z_1)$, $I^q(z_2)$, ... , $I^q(z_n)$) oder die aus ihnen durch Projektion und/oder Transformation hervorgegangenen Vektoren ermittelt.

Die Auswerteeinheit der erfindungsgemäßem Vorrichtung ist dazu ausgebildet, den dem Detektorelement p zugeordnete Wert $z^p$ unter Zuhilfenahme einer Approximation an zumindest einen Teil der durch die über die $I^p(z_i)$ und $I^q(z_i)$ gegebenen n-dimensionalen Lichtintensitätsvektoren ($I^p(z_1)$, $I^p(z_2)$, ... , $I^p(z_n)$) und ($I^q(z_1)$, $I^q(z_2)$, ... , $I^q(z_n)$) oder die aus ihnen durch Projektion und/oder Transformation hervorgegangenen Vektoren zu ermitteln.

Ganz besonders vorteilhaft ist es aber, sich nicht nur auf die zumindest lokale Approximation eines Richtungsvektors an die durch die Vektoren $c^p = (c^p(1), c^p(2), ..., c^p(n))$ und $c^{qj} = (c^{qj}(1), c^{qj}(2), ..., c^{qj}(n))$ bzw. ($I^p(z_1)$, $I^p(z_2)$, ... , $I^p(z_n)$) und ($I^{qj}(z_1)$, $I^{qj}(z_2)$, ... , $I^{qj}(z_n)$) gegebene Punkteverteilung zu beschränken, sondern stattdessen zumindest lokal die Approximation einer geeigneten niederdimensionale Untermannigfaltigkeit des n-dimensionalen Vektorraums an diese Punkteverteilung vorzunehmen, beispielsweise einer maximal dreidimensionalen Untermannigfaltigkeit, bevorzugt einer maximal zweidimensionalen Untermannigfaltigkeit und ganz besonders bevorzugt einer eindimensionalen Untermannigfaltigkeit, d. h. einer eindimensional parametrisierten Kurve im zugehörigen hochdimensionalen Vektorraum.

Dass dies möglich ist, sieht man besonders leicht am Beispiel der Phase-Shifting-Interferometrie, wenn man hierfür ausnahmsweise einmal zusätzlich annimmt, dass die auszuwertenden Korrelogramme $c^p = (c^p(1), c^p(2), ..., c^p(n))$ und $c^{qj} = (c^{qj}(1), c^{qj}(2), ..., c^{qj}(n))$ wie zuvor beschrieben offsetbereinigt und normiert vorliegen.

Dann ist beispielsweise das Korrelogramm $c^p = (c^p(1), c^p(2), ..., c^p(n))$ durch die $c^p(i) = \cos(\,2\pi/\lambda\,{}^*(z_i\text{-}2{}^*h^p)\,)$ gegeben, was sich nach den Additionstheoremen als $c^p(i) = \cos(2\pi/\lambda\,{}^*z_i)\,{}^*\cos(2\pi/\lambda\,{}^*\mathbf{2}\,{}^*h^p) + \sin(2\pi/\lambda\,{}^*z_i)\,{}^*\sin(2\pi/\lambda\,{}^*\mathbf{2}\,{}^*h^p)$ darstellen lässt. Wenn man dies nun in Vektorschreibweise in der Form

$c^p = (c^p(1), c^p(2), ..., c^p(n)) = \cos(2\pi/\lambda\,{}^*\mathbf{2}\,{}^*h^p)\,{}^*\, v + \sin(2\pi/\lambda\,{}^*\mathbf{2}\,{}^*h^p)\,{}^*\, w$ mit den Vektoren

$$v \;=\; (\cos(2\pi/\lambda^*z_1),\, \cos(2\pi/\lambda^*z_2),\, ...,\, \cos(2\pi/\lambda^*z_n))$$

und

$w = (\sin(2\pi/\lambda^*z_1),\, \sin(2\pi/\lambda^*z_2),\, ...,\, \sin(2\pi/\lambda^*z_n))$ darstellt, erkennt man leicht, dass alle möglichen $c^p$- und $c^{qj}$-Vektoren stets auf einer Ellipse, d. h. auf einer eindimensional parametrisierten Kurve im n-dimensionalen Raum liegen, welche sich selbst vollständig auf einer zweidimensionalen Untermannigfaltigkeit, im konkreten Fall auf einer Ebene befindet. Dies gilt unabhängig von den Werten der $z_i$, allerdings hängt die genaue Lage und Form dieser Ellipse durchaus von den Werten der $z_i$ ab.

Hiermit sind nun verschiedene Möglichkeiten der Auswertung gegeben:
Die einfachste Möglichkeit ist, tatsächlich im n-dimensionalen Raum eine Ellipse an die über die gemessenen Korrelogramme $c^p$ und $c^{qj}$ definierten Punkte anzufitten, den Korrelogrammvektor $c^p$ auf diese Ellipse zu projizieren und den synthetischen Korrelogrammvektor $s^p$ durch Differentiation der durch die Ellipse gegebenen eindimensionalen differenzierbaren Untermannigfaltigkeit des n-dimensionalen Raumes als Tangentialvektor an diese Untermannigfaltigkeit am Ort des projizierten Korrelogrammvektors $c^p$ zu gewinnen. Die Differentiation lässt sich in diesem Fall sehr einfach durchführen, da sich die Ellipse als eindimensionale Untermannigfaltigkeit des n-dimensionalen Raumes auch als eindimensional parametrisierte Kurve in diesem Vektorraum darstellen lässt. Nach der Bestimmung des Tangentialvektors und der Bestimmung seines Skalierungsfaktors wie beschrieben wird bevorzugt die weitere Auswertung mit Hilfe von $s^p$ wie zuvor angegeben vorgenommen.

Es ist somit vorteilhaft, durch Differentiation der differenzierbaren Mannigfaltigkeit M ein Tangentialvektor an diese zu bestimmen.

Verzichtet man darauf, wie zuvor angenommen die auszuwertenden Korrelogramme $c^p = (c^p(1), c^p(2), ..., c^p(n))$ und $c^{qj} = (c^{qj}(1), c^{qj}(2), ..., c^{qj}(n))$ um ihren Offset und/oder ihre Skalierung zu bereinigen, was weniger vorteilhaft, aber dennoch möglich ist, erhält man statt der Ellipse eine zwei- oder sogar dreidimensionale differenzierbare Untermannigfaltigkeit des n-dimensionalen Raumes. Auch hier wird bevorzugt der Korrelogrammvektor $c^p$ auf diese Untermannigfaltigkeit projiziert und der synthetische Korrelogrammvektor $s^p$ durch Differentiation an der Stelle des projizierten Korrelogrammvektors $c^p$ gewonnen, so dass danach wie beschrieben fortgefahren wird.

Besonders vorteilhaft ist es daher, dass die Approximation die Anpassung einer differenzierbaren Untermannigfaltigkeit M, insbesondere einer niederdimensionalen differenzierbaren Untermannigfaltigkeit, zumindest an die Punkteverteilung aus den Punkten $(I^p(z_1), I^p(z_2), ... , I^p(z_n))$ und $(I^{qj}(z_1), I^{qj}(z_2), ... , I^{qj}(z_n))$ im n-dimensionalen Vektorraum oder in einem Vektorraum der aus ihnen durch Projektion und/oder Transformation hervorgegangenen Vektoren umfasst, insbesondere, dass die differenzierbare Untermannigfaltigkeit eine maximal dreidimensionale, insbesondere maximal zweidimensionale Untermannigfaltigkeit des zugehörigen Vektorraums ist.

Die beschriebenen Vorgehensweisen sind auch für mittels der kurzkohärenten Interferometrie gewonnene Korrelogramme $c^p$ und $c^{qj}$ durchführbar. Verwendet man zur Auswertung wieder wie zuvor bei der Phase-Shifting-Interferometrie offsetbereinigte und normierte Korrelogramme, so ergibt sich zwar keine Ellipse mehr, sondern stattdessen aufgrund der sich verändernden Einhüllenden eine andere eindimensional parametrisierte Kurve bzw. eindimensionale differenzierbare Untermannigfaltigkeit, die einer ellipsenförmigen Spirale ähnelt, sich aber im Gegensatz zur Ellipse nicht mehr schließt. Dennoch lässt sich auch hier genauso wie bei der Phase-Shifting-Interferometrie weiter fortfahren, wenngleich die Bestimmung des anzufittenden Kurvenverlaufs aufwendiger ist und gegebenenfalls eines Modells der Einhüllenden und der relativen Lage der Modulation bezüglich der Einhüllenden bedarf, wobei sich diese Informationen ggf. auch aus Messdaten ermitteln lassen. Verzichtet man wiederum darauf, die auszuwertenden Korrelogramme $c^p$ und $c^{qj}$ um ihren Offset und/oder ihre Skalierung zu bereinigen, wird die Vorgehensweise entsprechend noch aufwendiger, ist aber prinzipiell dennoch durchführbar.

In einer vorteilhaften Ausführungsform wird daher die Approximation an die n-dimensionalen Lichtintensitätsvektoren $(I^p(z_1), I^p(z_2), ..., I^p(z_n))$ und $(I^q(z_1), I^q(z_2), ..., I^q(z_n))$ oder die aus ihnen durch Projektion und/oder Transformation hervorgegangenen Vektoren durch eine eindimensional parametrisierte Kurve im zugehörigen Vektorraum beschrieben.

Insbesondere ist es vorteilhaft, dass die Approximation an die Lichtintensitätsvektoren $(I^p(z_1), I^p(z_2), ..., I^p(z_n))$ und $(I^q(z_1), I^q(z_2), ..., I^q(z_n))$ oder die aus ihnen durch Projektion und/oder Transformation hervorgegangenen Vektoren zumindest lokal eine lineare Approximation ist. Hierbei handelt es sich somit, um eine Approximation an eine Gerade, Ebene oder einen anderen linearen Unterraum des Vektorraums, der eine niedrigere Dimension als dieser selbst hat.

Es gibt allerdings eine deutlich vorteilhaftere Vorgehensweise zur Auswertung der über die gemessenen, vorteilhafterweise offsetkorrigierten und normierten Korrelogramme $c^p$ und $c^{qj}$ definierten Punkte im n-dimensionalen Raum, welche sowohl für die kurzkohärente Interferometrie als auch für die Phase-Shifting-Interferometrie anwendbar ist. Diese wird im Folgenden nur für die kurzkohärente Interferometrie beschrieben, da die Anwendung im Spezialfall der Phase-Shifting-Interferometrie, wie man sehr leicht sieht, genauso durchführbar ist. Für diese Auswertung nimmt man wieder an, dass sich die Einhüllende der Korrelogramme deutlich langsamer als ihre Modulation ändert. Unter dieser Annahme schließt sich die Spirale in erster Näherung auch im kurzkohärenten Fall, und die durch die Korrelogramme definierte eindimensionale Kurve im n-dimensionalen Raum liegt in erster Näherung in einem zweidimensionalen Unterraum, d. h. einer Ebene, wo sie näherungsweise durch eine Ellipse dargestellt wird (für PSI gilt all dies ohnehin exakt). Nun wird diese zweidimensionale Ebene im n-dimensionalen Raum durch einen Ebenenfit bzw. eine zweidimensionale Regression, durch eine Hauptkomponentenanalyse, oder durch Teile hiervon etc. bestimmt und parametrisiert. Danach werden die durch die Korrelogramme $c^p$ und $c^{qj}$ definierten Punkte auf diese Ebene projiziert, wo sie weiterhin durch eine Ellipse beschrieben werden. Diese Ellipse wird nun innerhalb dieser Projektionsebene durch einen zweidimensionalen Fit oder vergleichbare Verfahren bestimmt, so dass danach eine zugehörige affine Abbildung definiert werden kann, die die Ellipse auf einen zugehörigen Kreis abbildet. Falls die Projektionsebene mit Hilfe einer Hauptkomponentenanalyse bestimmt wurde, wird vorteilhaft in einer alternativen Ausgestaltung die entsprechende affine Abbildung direkt unter Zuhilfenahme der beiden größten Eigenwerte bzw. der zugehörigen Eigenvektoren der PCA-Kovarianzmatrix bestimmt. Mit Hilfe der nun vorliegenden affinen Abbildung lassen sich nun alle zu den projizierten Korrelogrammvektoren $c^p$ und $c^{qj}$ gehörenden Punkte ebenfalls transformieren. Nachdem diese Transformation durchgeführt wurde, entspricht der räumliche Winkel zwischen zwei zu unterschiedlichen Korrelogrammen $c^p$ und $c^{qj}$ gehörenden projizierten und affin abgebildeten Punkten der Phasendifferenz zwischen den sinusförmigen Modulationen der zugehörigen Korrelogramme und lässt sich somit zur Phasenauswertung der Korrelogramme benutzen.

Es ist daher vorteilhaft, dass die Bestimmung des Richtungsvektors eine Hauptkomponentenanalyse (PCA) oder Teile hiervon, eine Eigenwertbestimmung, eine lineare Regression oder ein anderweitiges Optimierungsverfahren zur Minimierung der Abweichung einer durch den Richtungsvektor und/oder eines für ihn geeigneten Fußpunkts definierten Gerade zu den Vektoren $(I^p(z_1), I^p(z_2), ..., I^p(z_n))$ und $(I^q(z_1), I^q(z_2), ..., I^q(z_n))$ bzw. der aus ihnen durch Projektion und/oder Transformation hervorgegangenen Vektoren gegebenen Punkteverteilung umfasst.

Zur Einhüllenden-Auswertung wird bevorzugt der Abstand der zu den Korrelogrammvektoren $c^p$ und $c^{qj}$ gehörenden Punkte zur Projektionsebene herangezogen, der für alle Korrelogramme mehr oder weniger diskrete, aber deutlich unterscheidbare Werte annimmt, je nachdem, ob ein Korrelogramm die identische oder eine um k * 360° (k ganze Zahl) verschobene Phasenlage besitzt. Hieraus erhält man mit der bisher beschriebenen Auswertung vergleichbare Ergebnisse, sowohl für die Einhüllenden-Auswertung als auch für die Phasenauswertung, die ebenfalls entsprechend robust gegenüber Störungen sind. Der Vorteil der zuletzt beschriebenen Vorgehensweise besteht jedoch darin, dass man die gesuchten Werte $z^p$ für eine Vielzahl von Korrelogrammen $c^p$ gleichzeitig erhält, was den Rechenaufwand deutlich reduziert.

Es ist vorteilhaft, dass der für das Element p des Multielement-Detektors (6) bestimmte Betrag $z^p$ für die Veränderung der optischen Weglängendifferenz bzw. Phasendifferenz, bei dem die optische Weglängendifferenz bzw. die Phasendifferenz zwischen dem Messlicht und dem Referenzlicht einen explizit und/oder implizit vorgegebenen Wert erreicht, dazu benutzt wird, Information über die räumliche Lage eines dem Detektorelement p (6b) zugeordneten Oberflächenpunkts des Messobjekts (1) zu gewinnen, insbesondere eine Höhe $h^p$ gegenüber einer Referenzfläche, um die Oberflächentopographie des Messobjekts (1) zu ermitteln.

Weitere vorteilhafte Merkmale und Ausgestaltungen werden im Folgenden anhand von Ausführungsbeispielen und den Figuren erläutert. Dabei zeigt:

| | |
|---|---|
| Figur 1 | ein erstes Ausführungsbeispiel einer erfindungsgemäßen Vorrichtung mit einem Michelson-Interferometer; |
| Figuren 2 bis 11 | Darstellungen zur Erläuterung von Ausführungsbeispielen erfindungsgemäßer Verfahren zur Durchführung mittels der Vorrichtung gemäß Figur 1; |
| Figur 12 | ein zweites Ausführungsbeispiel einer erfindungsgemäßen Vorrichtung mit einem Michelson-Interferometer; |
| Figuren 13 bis 14 | Darstellungen zur Erläuterung von Ausführungsbeispielen erfindungsgemäßer Verfahren zur Durchführung mittels der Vorrichtung gemäß Figur 12; |
| Figur 15 | ein drittes Ausführungsbeispiel einer erfindungsgemäßen Vorrichtung mit einem Mirau-Objektiv; |
| Figure 16 | eine Darstellung zur Erläuterung eines Ausführungsbeispiels eines erfindungsgemäßen Verfahrens zur Durchführung mittels der Vorrichtung gemäß Figur 15; |
| Figur 17 | ein viertes Ausführungsbeispiel einer erfindungsgemäßen Vorrichtung mit einem Michelson-Interferometer; |
| Figuren 18 bis 22 | Darstellungen zur Erläuterung von Ausführungsbeispielen erfindungsgemäßer Verfahren zur Durchführung mittels der Vorrichtung gemäß Figur 17. |

Die Figuren zeigen schematische, nicht maßstabsgetreue Darstellungen. In den Figuren bezeichnen gleiche Bezugszeichen gleiche oder gleichwirkende Elemente.

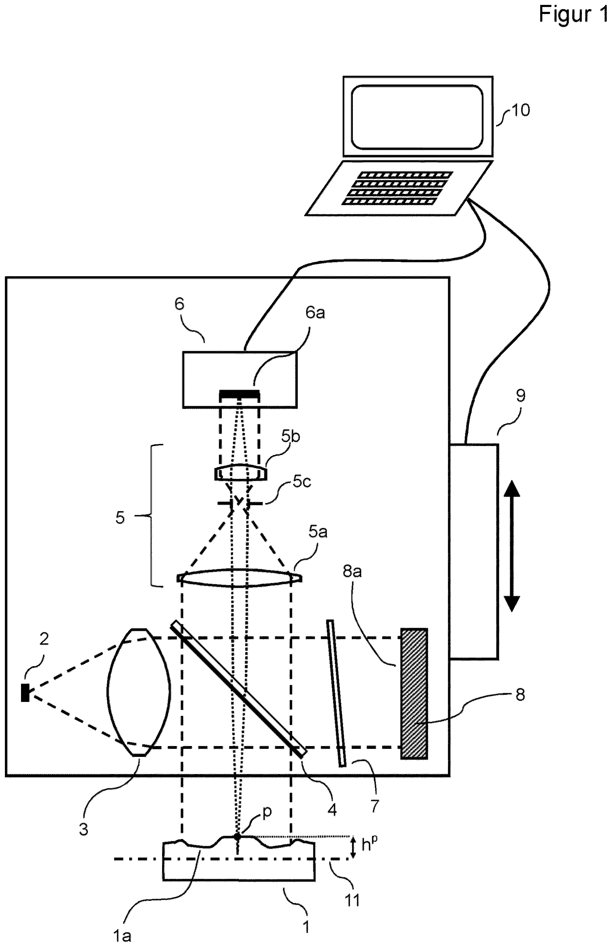

Figur 1 zeigt ein erstes Ausführungsbeispiel einer erfindungsgemäßen Vorrichtung mit einem Michelson-Interferometer. Die Vorrichtung dient zur interferometrischen Bestimmung der Oberflächentopografie einer Messoberfläche 1a eines Messobjekts 1.

Die Vorrichtung weist eine Lichtquelle 2 auf, welche vorliegend als LED ausgebildet ist, mit einem breitbandigen Lichtspektrum, vorliegend im Wellenlängenbereich 490 nm bis 550 nm mit Maximum bei 520 nm.

Das Licht der Lichtquelle gelangt über einen Kondensor 3 auf einen halbdurchlässigen Spiegel 4, mittels dessen etwa 50 % der Lichtintensität als Beleuchtungslicht auf die Messoberfläche 1a des Messobjekts 1 geführt wird. Das als Messlicht von der Messoberfläche 1a zurückgeworfene Beleuchtungslicht tritt teilweise durch den halbdurchlässigen Spiegel 4 hindurch und wird mittels einer Abbildungsoptik 5, welche vorliegend als telezentrische Abbildungsoptik ausgebildet ist, in einen Detektionsbereich der Vorrichtung abgebildet, in welchem ein Multielement-Detektor 6 angeordnet ist. Die Abbildungsoptik 5 weist vorliegend zur telezentrischen Ausbildung optische Linsen 5a und 5b sowie eine optische Blende 5c auf.

Der Multielement-Detektor 6 ist vorliegend als CCD-Kamera ausgebildet und weist einen CCD-Sensor auf, welcher als Flächensensor 6a mit 1024 x 1024 Sensorelementen ausgebildet ist, welche als Sensorarray auf den Kreuzungspunkten eines quadratischen Gitters angeordnet sind. Jedes Sensorelement stellt ein Detektorelement des Multielement-Detektors 6 dar.

Etwa 50 % des von der Lichtquelle 2 erzeugten Lichts durchdringt als Referenzlicht den halbdurchlässigen Spiegel 4 und gelangt über einen optischen Filter 7 zu einem Referenzspiegel 8. Das am Referenzspiegel 8 reflektierte Referenzlicht durchdringt wiederum den optischen Filter 7 und wird teilweise von dem halbdurchlässigen Spiegel 4 abgelenkt, um mittels der Abbildungsoptik 5 ebenfalls in den Detektionsbereich abgebildet zu werden. In dem Detektionsbereich wird somit ein Interferenzmuster durch Überlagerung von Messlicht und Referenzlicht erzeugt, welches mit dem Multielement-Detektor 6 ausgewertet werden kann. Der Filter 7 dient hier zur Abschwächung der Lichtintensität des Referenzlichts, um im Detektionsbereich angenähert gleiche Lichtintensitäten von Messlicht und Referenzlicht zu erzielen.

Mittels einer Verstelleinheit 9 kann die Entfernung der Vorrichtung zu dem Messobjekt 1 und somit die optische Weglängendifferenz OPD zwischen dem Messlicht und dem Referenzlicht verändert werden. In dem vorliegenden Ausführungsbeispiel wird somit hierzu die optische Weglänge des Messlichts verändert.

Mittels des Multielement-Detektors 6 können somit für mindestens zwei um verschiedene Beträge $z_i$ veränderte optische Weglängendifferenzen OPD die Lichtintensitäten $I^p(z_i)$ des Interferenzmusters auf den Detektorelementen des Multielement-Detektors 6 im Detektionsbereich erfasst werden.

Die Vorrichtung weist somit eine Interferometeroptik zum Zusammenführen des Messlichts mit dem Referenzlicht und Erzeugen des Interferenzmusters im Detektionsbereich auf, wobei die Interferometeroptik vorliegend die Elemente Kondensor 3, halbdurchlässiger Spiegel 4, Abbildungsoptik 5, optischer Filter 7 und Referenzspiegel 8 aufweist.

Die Vorrichtung weist weiterhin eine Auswerteeinheit 10 auf, welche als handelsüblicher Computer mit Prozessor, Datenspeicher, Bildschirmanzeigeeinheit sowie Tastatur als Eingabeeinheit, vorliegend in Form eines Laptops, ausgebildet ist. Die Auswerteeinheit 10 ist mit dem Multielement-Detektor 6 und der Verstelleinheit 9 verbunden, sodass Messsignale der Detektorelemente des Multielement-Detektors mittels der Auswerteeinheit ausgelesen werden können und mittels Steuersignalen über die Verstelleinheit 9 die optische Weglängendifferenz OPD verändert werden kann.

Die Auswerteeinheit ist dazu ausgebildet, für eine Vielzahl von Detektorelementen p des Multielement-Detektors 6 denjenigen Betrag $z^p$ für die Veränderung der optischen Weglängendifferenz zu bestimmen, bei dem die optische Weglängendifferenz zwischen dem Messlicht und dem Referenzlicht einen explizit und/oder implizit vorgegebenen Wert erreicht, vorliegend 0, um hieraus die Oberflächentopografie der Messoberfläche 1a des Messobjekts 1 zu ermitteln.

Wesentlich ist, dass die Auswerteeinheit ausgebildet ist, zur Bestimmung des dem Detektorelement p zugeordneten Werts $z^p$ neben den Lichtintensitäten $I^p(z_i)$ auch die Lichtintensitäten $I^q(z_i)$ mindestens eines anderen Detektorelements q des Multielement-Detektors zu verwenden, wie nachfolgend an einem Ausführungsbeispiel des erfindungsgemäßen Verfahrens näher erläutert wird:

Das erste Ausführungsbeispiel eines erfindungsgemäßen Verfahrens ist als scannende Weißlichtinterferometrie (WLI) ausgebildet.

Zunächst wird die Vorrichtung mittels der Verstelleinheit 9 in einen Referenzzustand verfahren. Die virtuelle Referenzfläche 11, welche im Referenzzustand einer optischen Weglängendifferenz OPD = 0 entspricht, ist in Figur 1 durch eine Strichpunktlinie gekennzeichnet und steht senkrecht zur Zeichenebene in Figur 1. Die genaue Lage dieser Referenzfläche 11 ist für die Messung nicht von Belang. So kann die Referenzfläche 11 wie im vorliegenden Beispiel das Objekt durchdringen. Ebenso ist es aber auch möglich, dass die Referenzfläche beispielsweise oberhalb des Objektes liegt. Wesentlich ist, dass für eine Vielzahl von Messpunkten p eine Höheninformation $h^p$ ermittelt wird, sodass die relative Höhendifferenz der Messpunkte zueinander berechnet werden kann und somit eine Oberflächentopografie der Messoberfläche 1a erhalten wird.

Ausgehend von dem zuvor beschriebenen Referenzzustand wird die Verstelleinheit 9 nun mittels der Auswerteeinheit 10 derart gesteuert, dass die Vorrichtung in äquidistant vorgegebenen Schritten von dem Messobjekt 1 entfernt wird, das heißt in der Darstellung gemäß Figur 1 nach oben bewegt wird. Hierdurch wird die optische Weglänge des Messlichts vergrößert, die optische Weglänge des Referenzlichts bleibt jedoch unverändert, sodass im Ergebnis eine Veränderung der OPD erfolgt. Vorliegend werden an 64 Positionen der Vorrichtung jeweils Messwerte aller Detektorelemente p des Multielement-Detektors 6 erfasst. Bei der in Figur 1 dargestellten Vorrichtung ist jedem der 1024 x 1024 (= 1048576) Detektorelemente p des Multielement-Detektors 6 ein Messpunkt p auf der Messoberfläche 1a des Messobjekts zugeordnet.

Mittels der Auswerteeinheit werden somit für insgesamt 64, um $z_1$, $z_2$, ..., $z_n$ (n = 64) gegenüber dem Referenzzustand veränderte OPOs die zugehörigen Intensitäten $I^p(z_1)$, $I^p(z_2)$, ..., $I^p(z_n)$ in Interferogrammen aufgezeichnet, so dass für jeden Messpunkt p das zugehörige Korrelogramm $c^p = (c^p(1), c^p(2), ..., c^p(n))$ erhalten wird, wobei die gemessene Lichtintensität am i-ten Punkt des Korrelogramms jeweils $c^p(i) = I^p(z_i)$ ist.

Die $z_i$-Werte sind hierbei äquidistant vorgegeben, das heißt - zumindest gemäß der Vorgabe - ist der vorgegebene Abstand $\Delta z$ zwischen zwei aufeinanderfolgenden $z_i$-Werten konstant.

Nach Durchführung dieser Messung liegt somit für jedes Detektorelement p ein Korrelogramm mit 64 Messwerten vor.

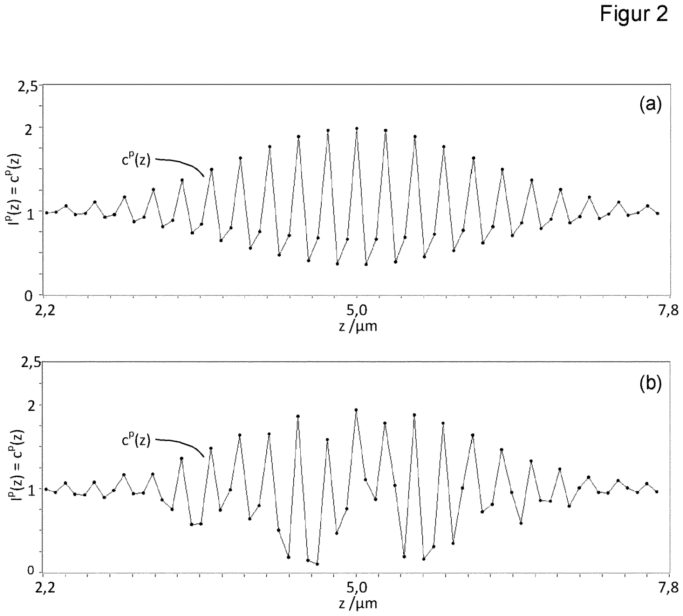

In Figur 2a ist ein Beispiel für solch ein Korrelogramm eines Detektorelementes p dargestellt. Auf der x-Achse sind die vorgegebenen z-Werte in [µm] aufgetragen und auf der y-Achse die Lichtintensität in willkürlich gewählten Einheiten, hier vorteilhaft normiert auf die Lichtintensität außerhalb des Interferenzbereichs des Korrelogramms, das heißt normiert auf den Offset des Korrelogramms. Dies trifft auch auf die weiteren in den Figuren dargestellten Korrelogramme zu, sofern nicht anders angegeben.

Grundsätzlich kann nun - wie eingangs bei Beschreibung des Standes der Technik erläutert - zu dem Korrelogramm gemäß Figur 2a eine Einhüllende bestimmt werden und derjenige Wert für $z^p$ bestimmt werden, welcher dem Maximum der Einhüllenden entspricht (vorliegend ungefähr bei z-Position 5 µm). Für diesen Messpunkt wäre somit $h^p$ mit der Hälfte des bestimmten z-Wertes, das heißt mit 2,5 µm, bestimmt.

Treten jedoch Störungen auf, beispielsweise in Form von Erschütterungen während der Messung, so erfolgen die Messungen nicht exakt an den vorgegebenen z-Werten. Vielmehr sind die z-Werte der tatsächlichen Messungen in der Korrelogramm-Darstellung nach rechts oder links verschoben, je nach Auswirkung der Schwingungen.

In Figur 2b ist beispielhaft ein störungsbehaftetes Korrelogramm dargestellt. Die Messbedingungen sind grundsätzlich identisch zu Messbedingungen gemäß Figur 2a, jedoch wurden Störungen eingebracht, welche wie zuvor beschrieben zu Verschiebungen der $z_i$-Werte führen, sodass diese nicht mehr exakt äquidistant sind.

Im Folgenden soll zunächst die Auswirkung solcher Störungen bei der Auswertung gemäß dem Stand der Technik beschrieben werden:

In Figur 3 ist eine Auswertung nach dem Stand der Technik im ungestörten Fall, das heißt mit äquidistanten $z_i$-Werten, dargestellt:

Figur 3a zeigt das ungestörte Korrelogramm aus Figur 2a.

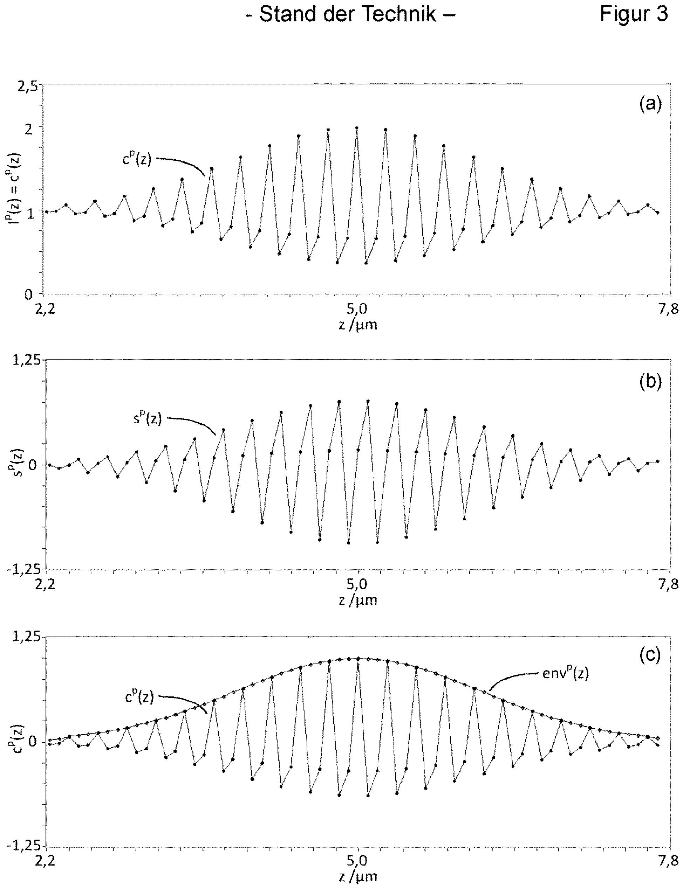

Mittels Hilbert-Transformation wird das in Figur 3b dargestellte synthetische Korrelogramm $s^p(z)$ erzeugt. Wie eingangs beschrieben, kann aus dem ursprünglichen Korrelogramm $c^p(z)$ und dem über die Hilbert-Transformation gewonnenen synthetischen Korrelogramm $s^p(z)$ die Einhüllende $env^p(z)$ gemäß Figur 3c gewonnen werden.

Eine Bestimmung des z-Werts des Maximums dieser Einhüllenden ermöglicht im ungestörten Fall bereits in guter Näherung eine Bestimmung des gesuchten Werts für $z^p$ und somit des doppelten Werts von $h^p$ an diesem Messpunkt p (etwa 5 $\mu$m).

Es sei noch darauf hingewiesen, dass während der Auswertung eine Offset-Bereinigung des ursprünglichen Korrelogramms $c^p(z)$ vorgenommen wurde, sodass die Werte von $c^p(z)$, wie auch in der Figur 3c dargestellt, jetzt um den NullWert herum verteilt sind.

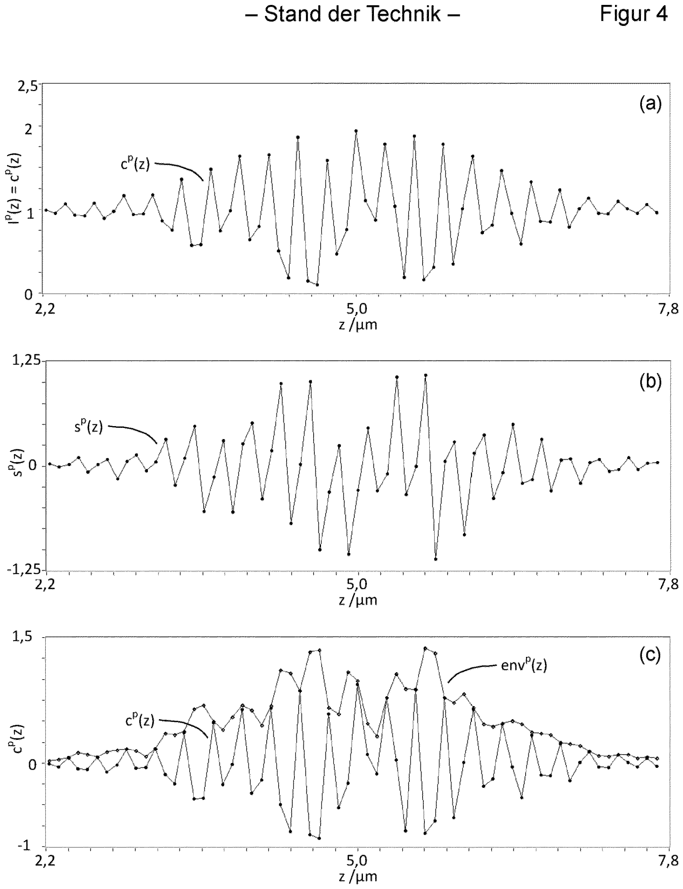

Das Korrelogramm gemäß Figur 4a entspricht dem Korrelogramm gemäß Figur 2b mit den nicht äquidistanten $z_i$-Werten aufgrund der eingebrachten Störung der Messung durch Erschütterungen.

Wird nun von diesem Korrelogramm gemäß Figur 4a die Hilbert-Transformation durchgeführt, so ergibt sich das Korrelogramm $s^p(z)$ gemäß Figur 4b. Die in Figur 4c zusammen mit dem ursprünglichen (Figur 4a), jedoch offsetbereinigten Korrelogramm $c^p(z)$ aufgetragene, auf die gleiche Weise wie zuvor bestimmte Einhüllende $env^p(z)$ weist aufgrund der Störungen einen uneinheitlichen Verlauf auf. Insbesondere kann kein eindeutiges Maximum bestimmt werden. Mit der Auswertemethode gemäß Stand der Technik wäre somit bei solch einer Störung der gesuchte Wert von 5 $\mu$m für $z^p$ nicht oder nur sehr ungenau zu ermitteln.

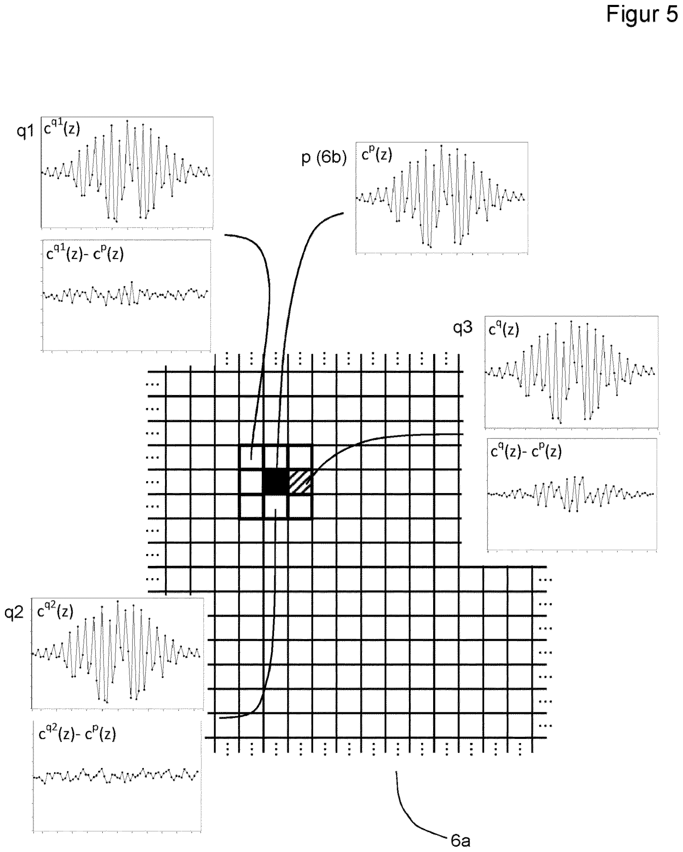

Die Besonderheit des erfindungsgemäßen Verfahrens, welches trotz Vorliegens solcher Störungen eine Auswertung mit großer Genauigkeit ermöglicht, wird anhand des ersten Ausführungsbeispiels und weiterer Ausführungsformen des erfindungsgemäßen Verfahrens nachfolgend anhand der Figuren 5 bis 11 erläutert:

Figur 5 zeigt schematisch einen Ausschnitt des Flächensensors 6a des Multielement-Detektors 6. Wie bereits beschrieben, weist der CCD-Chip 1024 x 1024 Detektorelemente auf, wobei exemplarisch ein Detektorelement p mit Bezugszeichen 6b schwarz ausgefüllt markiert ist. Wesentlich ist, dass zur Bestimmung des dem Detektorelement p zugeordneten Werts $z^p$ neben den Lichtintensitäten $I^p(z_i)$ auch die Lichtintensitäten $I^q(z_i)$ mindestens eines anderen Detektorelements q des Multielement-Detektors verwendet werden.

Hierzu werden in dem vorliegenden Ausführungsbeispiel in einem Quadrat von $3 \times 3$ Pixeln die Nachbarelemente betrachtet: Das Detektorelement 6b weist acht Nachbarelemente $q_j$ auf, die in Figur 5 durch eine dicke schwarze Umrandung hervorgehoben sind. Aus diesen acht Nachbarelementen wird nun ein Nachbarelement wie folgt ausgewählt: Zu jedem Nachbarelement wird die Differenz des Korrelogramms des Nachbarelementes mit dem Korrelogramm des Detektorelementes p gebildet. Beispielhaft ist für die Nachbarelemente $q_1$, $q_2$ und $q_3$ jeweils in einem oben liegenden Diagramm das Korrelogramm dieses Nachbarpunktes dargestellt und in einem darunterliegenden Diagramm die Differenz zwischen dem Korrelogramm dieses Nachbarpunktes und dem Korrelogramm des Detektorelementes p (6b).

Mittels einer Vektornorm wird jedem Differenz-Korrelogramm, welches somit einen Differenzvektor $c^{qj} - c^p$ darstellt, ein Maß zugeordnet. Vorliegend erfolgt die Maßbestimmung anhand der Standardabweichung gebildet aus den Elementen $c^{qj}(i) - c^p(i)$ des Differenzvektors. Weichen die Korrelogramme eines Nachbarelements $q_j$ und des Detektorelementes p gemäß diesem Maß nur geringfügig ab, so sind die Korrelogramme dieser beiden Detektorelemente sehr ähnlich, was vorliegend nachteilig für die Auswertung gemäß des vorliegenden Ausführungsbeispiels ist, da möglicherweise Signalrauschen eine exakte Differenzbildung erschwert. Grundsätzlich kann auch eine große Abweichung gemäß dem vorbeschriebenen Maß nachteilig sein, da dann eine lineare Approximation wie nachfolgend beschrieben nicht mehr zulässig ist. In der vorliegenden Messsituation ist eine zu große Abweichung jedoch unwahrscheinlich, da nur nächste Nachbarn betrachtet werden, bei denen sich im Regelfall die Korrelogramme nur wenig unterscheiden.

Bei dem vorliegenden Ausführungsbeispiel des erfindungsgemäßen Verfahrens wird somit von den acht Nachbarelementen $q_j$ dasjenige ausgewählt, bei welchem der Differenzvektor gemäß dem vorbeschriebenen Maß den größten Wert aufweist. In dem Beispiel gemäß Figur 5 ist dies das Detektorelement $q_3$.

Zur Bestimmung des dem Multi-Detektor-Element p zugeordneten Werts $z^p$ werden somit vorliegend auch die Lichtintensitäten des Detektorelementes $q_3$ verwendet, wie nachfolgend näher erläutert wird:

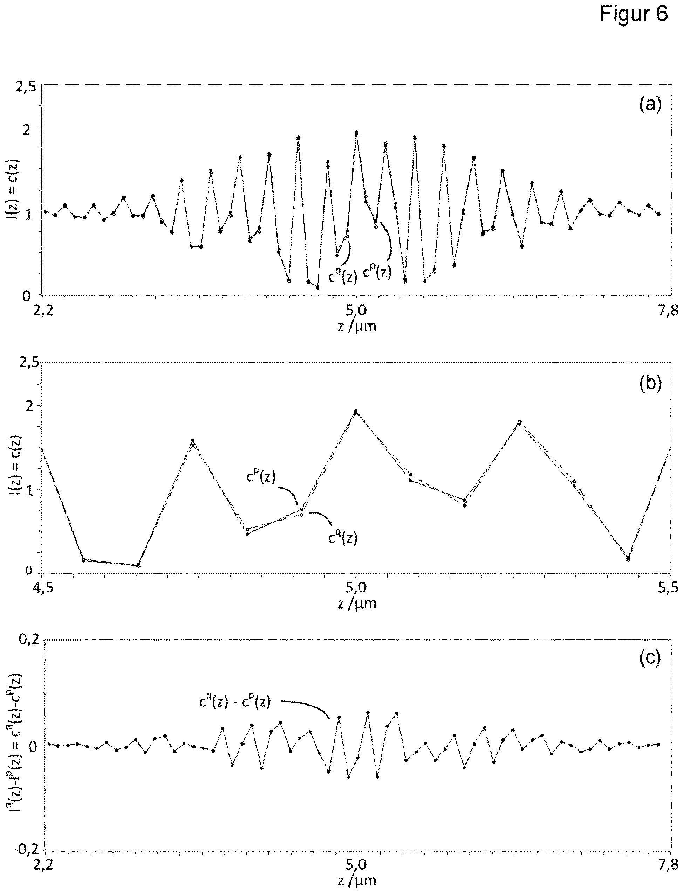

In Figur 6a sind die Korrelogramme der Detektorelemente p und $q = q_3$ mit eingebrachten Störungen der Messungen wie auch in Figur 2b gezeigt. Da die benachbarten Detektorelemente p und q örtlich benachbarten Messpunkten p und q auf der Messoberfläche 1a des Messobjekts 1 zugeordnet sind, unterscheiden sich die Korrelogramme nur geringfügig.

In Figur 6b ist daher eine Ausschnittsvergrößerung um den z-Wert 5 μm dargestellt. Figur 6c zeigt das Differenz-Korrelogramm $c^q(z) - c^p(z)$. Dieses Differenz-Korrelogramm kann entsprechend auch als 64-dimensionaler Differenzvektor aufgefasst werden. In dem vorliegenden Ausführungsbeispiel erfolgt die weitere Auswertung in 64 Dimensionen, das heißt, die Messpunkte aller $z_i$-Werte werden herangezogen.

Ebenso liegt es im Rahmen der Erfindung, eine Untermenge, das heißt einen Differenzvektor niedrigerer Dimension zu verwenden, etwa eine Auswahl von Punkten, welche z. B. ungefähr symmetrisch um ein Maximum des Korrelogramms $c^p$ angeordnet sind, beispielsweise $\pm$ 16 Punkte, das heißt insgesamt 33 Punkte. In einer alternativen Ausgestaltung erfolgt eine symmetrische Auswahl von Punkten um diejenige Stelle, an der die Modulation am stärksten ist. Dies ist dadurch kenntlich, dass dort der Betrag der Differenz zweier aufeinanderfolgender Punkte am größten ist. In einer weiteren Abwandlung des Ausführungsbeispiels erfolgt ein Sinus-Fit an die Korrelogramme, und es wird der Wert der maximalen Amplitude dieses Fits als zentraler Wert für eine symmetrische Auswahl einer Untermenge von Punkten für die nachfolgende Auswertung bestimmt.

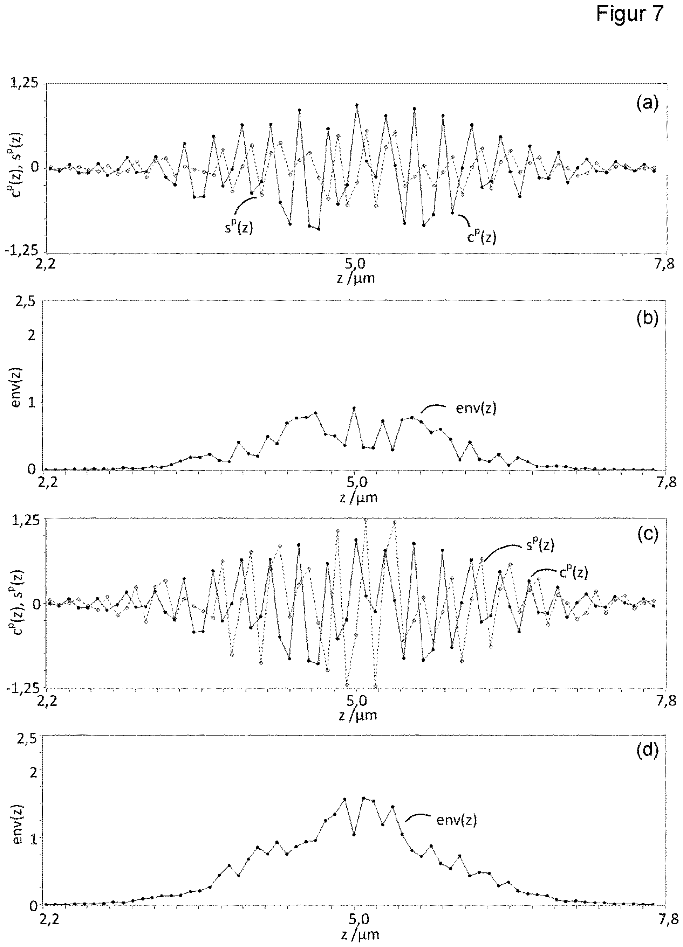

In Figur 7a ist das Korrelogramm des Detektorelementes p und das Differenz-Korrelogramm gemäß Figur 6c aufgetragen. Wie zuvor erläutert, kann das Differenz-Korrelogramm $Q^p$ gemäß Figur 6c als synthetisches Korrelogramm $s^p = f * Q^p$ mit einem Skalierungsfaktor von f=1 angesehen werden.

Zur Bestimmung der Korrelogramm-Einhüllenden ist jedoch ein synthetisches Korrelogramm $s^p$ notwendig, das so mit dem Skalierungsfaktor f skaliert wurde, dass es die gleiche Amplitude wie das Originalkorrelogramm $c^p$ hat.

Wie in Figur 7b und Figur 7d dargestellt, würde die Bestimmung der Korrelogramm-Einhüllenden $env^p(z_i)$ über die Quadratwurzelbildung von $(c^p(z_i))^2 + (s^p(z_i))^2$ ohne eine korrekte Skalierung der $s^p(z_i)$ zu einem welligen Ergebnis für die Einhüllende $env^p(z_i)$ führen, was keine Bestimmung eines Maximums ermöglichen oder zumindest zu einem erheblichen Fehlerrisiko führen würde. Figur 7b zeigt hierbei den Fall, dass gemäß Figur 7a mit einem zu geringen Faktor f skaliert wurde.

Wird hingegen gemäß Figur 7c mit einem zu großen Faktor f skaliert, so ergibt sich ebenfalls eine wellige, nicht oder nur mit erheblichem Fehlerrisiko auswertbare Einhüllende, wie in Figur 7d gezeigt.

In dem vorliegenden Ausführungsbeispiel wird der korrekte Skalierungsfaktor f dadurch bestimmt, dass zunächst durch Ermittlung des Maximums des Korrelogramms $c^p$ ein grober Wert $i_m$ für denjenigen Index i bestimmt wird, an dem das Einhüllendenmaximum liegt. Danach zieht man zur Bestimmung des Skalierungsfaktors f hier 21 symmetrisch um den Index $i_m$ gelegene Punkte des offset-bereinigten Originalkorrelogramms $c^p$ und des mit dem Faktor f skalierten synthetischen Korrelogramms $s^p = f * Q^p$ heran. Für diese Punkte lässt sich für jeden möglichen Wert von f die Standardabweichung $\sigma(f)$ der 21 Werte $(c^p(z_i))^2 + (s^p(z_i,f))^2$ mit i= $i_m$-10 , i= $i_m$-9, ..., i= $i_m$+10 angeben. Nun wird mit Hilfe des Gradientenverfahrens derjenige Wert für f bestimmt, bei dem die genannte Standardabweichung minimal wird. Mit Hilfe dieses Werts für f wird nun das korrekt skalierte synthetische Korrelogramm $s^p = f Q^p$ für die weitere Auswertung ermittelt.

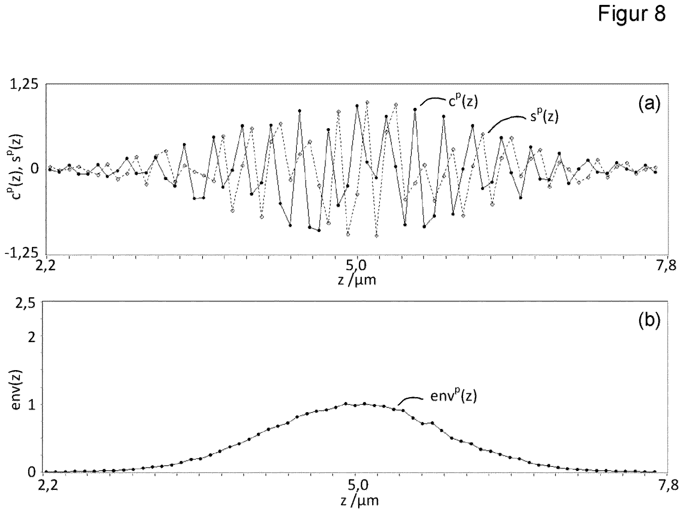

Figur 8a zeigt nun das Korrelogramm $c^p(z_i)$ aus Figur 6a bzw. Figur 2b zusammen mit dem wie zuvor beschrieben bestimmten korrekt skalierten synthetischen Korrelogramm $s^p(z_i) = f * Q^p(z_i)$ . Man erkennt, dass die Amplitude des mit diesem Faktor f skalierten synthetischen Korrelogramms $s^p(z_i)$ derjenigen des Originalkorrelogramms $c^p(z_i)$ entspricht.

In Figur 8b ist die Einhüllende $env^p(z)$ dargestellt, welche sich aus dem Korrelogramm $c^p$ und dem wie vorbeschrieben bestimmten korrekt skalierten synthetischen Korrelogramm $s^p$ ergibt. Die Ermittlung der Einhüllenden $env^p(z_i)$ erfolgte hierbei wie beschrieben durch Quadratwurzelbildung von $(c^p(z_i))^2 + (s^p(z_i))^2$.

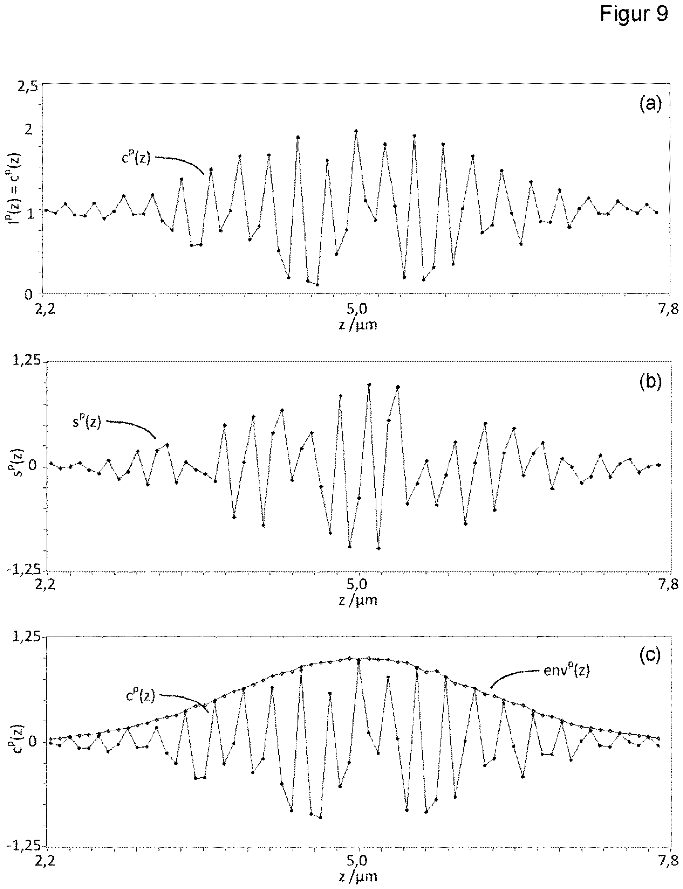

Figur 9 zeigt nun zusammenfassend in Teilbild a das mit Störungen in den z-Werten behaftete Korrelogramm des Detektorelementes p. Teilbild b zeigt das synthetische Korrelogramm $s^p$, welches wie zuvor beschrieben mit dem ermittelten korrekten Faktor f skaliert wurde. Dieses synthetische Korrelogramm wurde somit unter zusätzlicher Verwendung des Korrelogramms des Detektorelementes $q_3$ bestimmt.

Teilbild c zeigt das Korrelogramm $c^p$ gemäß Teilbild a zusammen mit der wie zuvor beschrieben gewonnenen Einhüllenden $env^p$. Ein Vergleich dieser mit dem erfindungsgemäßen Verfahren ermittelten Einhüllenden mit der Einhüllenden aus Figur 4c, die mit Hilfe eines der Verfahren gemäß dem Stand der Technik bestimmt wurde, zeigt eindrücklich, dass eine erhebliche Robustheit gegenüber Störungen erzielt wurde, welche zu nicht äquidistanten $z_i$-Werten führen, wie beispielsweise Erschütterungen.

Es erfolgt nun eine Bestimmung des Maximums der Einhüllenden $env^p$ gemäß Figur 9c, um den $z^p$-Wert für das Detektorelement p und entsprechend den Messpunkt p zu ermitteln. Im konkreten Fall geschieht dies über einen Parabelfit an die Einhüllende $env^p(z_i)$ an den zuvor ausgewählten 21 Punkten $z_i$.

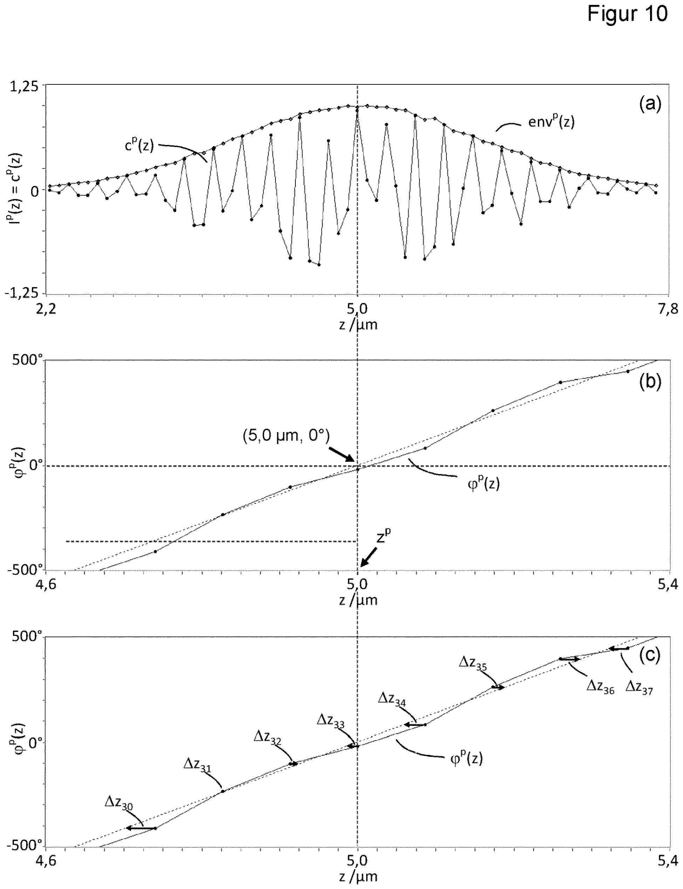

Die Messdaten erlauben jedoch eine weitere Erhöhung der Genauigkeit bei Bestimmung des $z^p$-Wertes, wie nachfolgend anhand Figur 10 in einer vorteilhaften Weiterbildung des beschriebenen Ausführungsbeispiels erläutert.

Figur 10a zeigt das Korrelogramm $c^p$ und die mittels des synthetischen Korrelogramms gewonnene Einhüllende gemäß der Darstellung aus Figur 9c.

In Figur 10b ist in der Abszissenrichtung z eine Ausschnittsvergrößerung um das zuvor bestimmte Maximum der Einhüllenden $env^p(z)$ gezeigt. Auf der Ordinatenachse ist nun jedoch nicht die Intensität gegen den zugehörigen z-Wert aufgetragen, sondern eine dem z-Wert zugeordnete Phase $\varphi^p(z)$. Wie zuvor beschrieben, wurde für jeden Korrelogrammpunkt $c^p(i)$ durch das synthetische Korrelogramm jeweils ein zugehöriger Punkt $s^p(i)$ ermittelt, wobei das synthetische Korrelogramm $s^p$ als in der Trägerfrequenz um 90° verschobenes Korrelogramm zu dem Korrelogramm $c^p$ angesehen werden kann. Aus den beiden Korrelogrammen kann daher für jede Position $z_i$ eine Phase bestimmt werden, beispielsweise, indem man für jeden Punkt $z_i$ den erweiterten Arkustangens $\arctan2(s^p(z_i), c^p(z_i))$ an den entsprechenden Indizes i bildet und ein Phase-Unwrapping durchführt.

Wie eingangs beschrieben, wurde bei diesem Ausführungsbeispiel der Referenzzustand durch Abgleich der optischen Weglängen (OPD = 0) gewählt. Der vorgegebene Wert für die optische Weglängendifferenz ist in diesem Ausführungsbeispiel somit 0. Entsprechend ist auch der vorgegebene Phasenwert zur Bestimmung des Betrags $z^p$ vorliegend 0°. Wie in Figur 10b dargestellt, erfolgt ein Anfitten einer Geraden mittels linearer Regression und eine Bestimmung desjenigen z-Wertes für $z^p$, an welchem der Phasenwert dem vorgegebenen Wert entspricht (vorliegend 0°).

Dieses zweistufige Verfahren, in dem zunächst ein ungefährer Wert $z^p$ durch Bestimmen des Maximums der Einhüllenden erhalten wurde und anschließend mittels Regressionsgerade der $z^p$-Wert mit Phase 0° bestimmt wurde, ermöglicht eine erhebliche Verbesserung der Messgenauigkeit bzw. eine nochmals erhöhte Robustheit gegenüber Störungen wie beispielsweise Erschütterungen.

In Figur 10c ist schließlich dargestellt, wie mit dem erfindungsgemäßen Verfahren grundsätzlich auch die Information erhalten werden kann, um welchen Betrag $\Delta z$ ein z-Wert $z_i$ aufgrund der Störung verändert wurde: Im idealen, störungsfreien Fall liegen die Werte $z_i$ in der Darstellung gemäß Figur 10b bzw. Figur 10c auf der gepunktet eingezeichneten Regressionsgeraden. Für jeden Wert $z_i$ kann somit ein Wert $\Delta z_i$ bestimmt werden, indem für jeden Wert $z_i$ die Differenz des Wertes $z_i$ und desjenigen z-Wertes, welcher auf der Regressionsgeraden dem zugeordneten Phasenwert entspricht, gebildet wird. Diese Korrekturwerte $\Delta z$ sind in Figur 10c für die $z_i$-Werte mit i = 30, 31, ..., 37 durch waagrechte Pfeile verdeutlicht.

Es liegt somit grundsätzlich auch im Rahmen der Erfindung, eine Korrektur der $z_i$-Werte durch die gemäß Figur 10c gewonnenen Korrekturwerte $\Delta z_i$ vorzunehmen und eine Auswertung, insbesondere in an sich bekannter Weise, mittels der korrigierten $z_i$-Werte durchzuführen.

Darüber hinaus kann eine genauere Korrektur der $z_i$-Werte erzielt werden, indem für jedes $z_i$ eine Mittelung des Korrekturwertes für alle oder eine Auswahl von Detektorelementen erfolgt. Denn für einen festen Wert von i, welcher gemäß dem vorliegenden Ausführungsbeispiel einem Messzeitpunkt entspricht, ist in guter Näherung die Störung $\Delta z_i$ für alle Messpunkte und somit auch für alle Detektorelemente gleich. Vorteilhafterweise wird daher für eine Untermenge, bevorzugt für alle Detektorelemente, ein Korrekturwert $\Delta z_i$ bestimmt und durch Mittelung der Korrekturwerte über die Untermenge von Messpunkten, bevorzugt über alle Messpunkte, insbesondere durch gewichtetes Mitteln, der Korrekturwert $\Delta z_i$ berechnet, um eine Korrektur aller $z_i$-Werte durchzuführen.

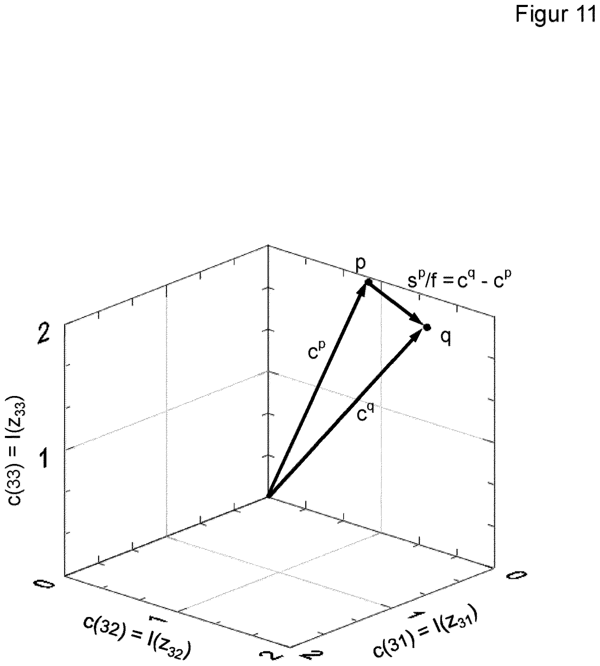

In Figur 11 ist schematisch dargestellt, dass im vorliegenden Ausführungsbeispiel das nicht skalierte synthetische Korrelogramm $Q^p = s^p/f$ als Differenzvektor der Korrelogramme $c^q - c^p$ angesehen werden kann und somit einen Richtungsvektor im n-dimensionalen Vektorraum darstellt, der die durch die n-dimensionalen Lichtintensitätsvektoren

$$(c^p(1),\ c^p(2),\ ...,\ c^p(n)) = (I^p(z_1),\ I^p(z_2),\ ...,\ I^p(z_n))$$

und

$(c^q(1), c^q(2), ..., c^q(n)) = (I^q(z_1), I^q(z_2), ..., I^q(z_n))$ gegebene Punkteverteilung approximiert, die in diesem Ausführungsbeispiel allerdings nur aus zwei Punkten besteht.

In der Abbildung wurden aus praktischen Gründen anstatt der eigentlich vorliegenden 64 Dimensionen lediglich drei Dimensionen zur Darstellung ausgewählt: In der Darstellung gemäß Figur 11 sind aus den 64-dimensionalem Vektorraum lediglich die Dimensionen 31, 32 und 33 gezeigt.

Insbesondere entspricht somit eine Einschränkung auf eine Untermenge von $z_i$-Werten, vorliegend 21 der möglichen 64 $z_i$-Werte, wie vorangehend zu Figur 6 beschrieben, im Vektorraum eine Projektion auf einen Unterraum, dessen Dimension der Anzahl der ausgewählten $z_i$-Werte entspricht. Auch mit solchen durch Projektion und/oder Transformation hervorgegangenen Vektoren kann somit eine Auswertung mittels des erfindungsgemäßen Verfahrens erfolgen.

Ein Beispiel für eine weitere solche Transformation ist, dass zunächst bei jedem Korrelogramm der Offset abgezogen wird, indem der Offset beispielsweise anhand der Korrelogrammpunkte außerhalb des Interferenzbereichs ermittelt oder durch Mittelung der Korrelogrammwerte bestimmt wird und dann abgezogen wird. Ebenso stellt eine Skalierung oder andere Änderung durch Normierung des Korrelogramms eine solche Transformation dar. Ebenso können Drehungen und anderen Transformationen vorgenommen werden.

Die Messvorrichtung gemäß des ersten Ausführungsbeispiels sowie das Verfahren gemäß des ersten Ausführungsbeispiels können auch für Messobjekte verwendet werden, welche das Messlicht an mehreren Ebenen teilweise reflektieren:

Bei einem solchen Messobjekt mit mehreren teilreflektierenden Flächen zur Vermessung mittels der Vorrichtung gemäß Figur 1 kann beispielsweise alternativ zu der vorangegangenen Beschreibung des Messobjekts 1 die Messoberfläche 1a des Messobjekts 1 an der der Vorrichtung zugewandten Seite eine beschichtete Glasoberfläche sein, welche das Messlicht nur teilweise reflektiert. Weiterhin weist das Messobjekt im Volumen des Messobjekts eine weitere Grenzfläche an einer metallisch beschichteten Rückseite (der von der Vorrichtung abgewandten, in Figur 1 untenliegenden Seite) auf, an welcher innerhalb des Messobjekts derjenige Anteil des Messlichts reflektiert wird, welcher in das Messobjekt eindringt. Mittels der aus dem Stand der Technik bekannten Verfahren sowie mittels des erfindungsgemäßen Verfahrens können somit einem Ortspunkt p zwei oder mehr Werte $z^p$ zugeordnet werden, da an zwei oder mehr Höhenpositionen $h^p$ eine (teilweise) Reflexion von Messlicht erfolgt. Wenn die Differenz der verschiedenen Höhen $h^p$ größer als die Kohärenzlänge des detektierten Mess- und Referenzlichts ist, überlappen die zu den verschiedenen reflektierenden Schichten gehörenden Interferenzen in den Korrelogrammen nicht, so dass sich die zu den verschiedenen Schichten gehörenden Teilkorrelogramme innerhalb der Messdaten trennen lassen und somit getrennt ausgewertet werden können und man die verschiedenen $z^p$-Werte getrennt voneinander ermitteln kann. Das erfindungsgemäße Verfahren lässt sich allerdings auch besonders vorteilhaft einsetzen, wenn die verschiedenen Teilkorrelogramme der Punkte $z^p$ überlappen, da sich auch in diesem Fall mittels des erfindungsgemäßen Verfahrens die synthetischen Korrelogramme korrekt bestimmen lassen. Dadurch ist es einerseits möglich, die bekannten Verfahren zur Auswertung überlappender Korrelogramme zu verwenden, andererseits bieten sich zusätzliche vorteilhafte Auswertemöglichkeiten an, da sich beispielsweise entsprechend der beschriebenen Vorgehensweise sehr einfach die gemeinsame Einhüllende und die gemeinsame Phase der verschiedenen Teilkorrelogramme bestimmen lassen.

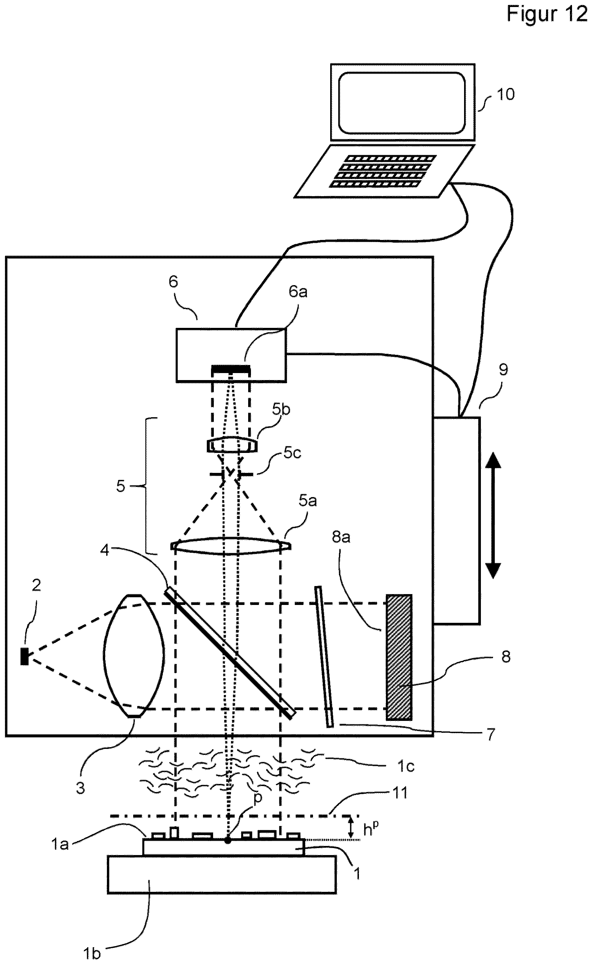

In Figur 12 ist ein zweites Ausführungsbeispiel einer erfindungsgemäßen Vorrichtung schematisch dargestellt.

Auch dieser Aufbau basiert auf dem Prinzip des Michelson-Interferometers. Zur Vermeidung von Wiederholungen wird nachfolgend daher lediglich auf die wesentlichen Unterschiede des in Figur 12 dargestellten zweiten Ausführungsbeispiels gegenüber dem in Figur 1 dargestellten ersten Ausführungsbeispiel eingegangen:

Das Messobjekt 1 soll vorliegend bei einer vorgegebenen erhöhten Temperatur vermessen werden und ist daher auf einer Heizplatte 1b angeordnet. Dies ist beispielsweise relevant, wenn bei elektronischen Bauteilen eine Krümmung der Messoberfläche 1a aufgrund von Wärmeeinwirkung untersucht werden soll.

Problematisch hierbei ist, dass aufgrund der Erwärmung durch die Heizplatte 1b zwischen Messoberfläche 1a und Vorrichtung im Strahlengang des Messlichts Luftverwirbelungen 1c entstehen. Solche Luftverwirbelungen führen zur Dichteänderungen und entsprechend einem inhomogenen Brechungsindex. Bereits Schwankungen im Brechungsindex der Luft aufgrund der durch das Heizen hervorgerufenen Dichteschwankungen können zu erheblichen Messfehlern führen. Dies ist selbst dann der Fall, wenn keine zusätzlichen Störungen, beispielsweise durch Erschütterungen, vorliegen.

Die Anordnung der optischen Komponenten der Vorrichtung ist identisch zu derjenigen bei der Vorrichtung gemäß dem in Figur 1 gezeigten ersten Ausführungsbeispiel.

Vorliegend ist die Auswerteeinheit 10 wie zuvor beschrieben mit dem Multielement-Detektor 6 verbunden. Der hier als CMOS-Kamera ausgeführte Multielement-Detektor 6 ist über eine Triggerleitung mit der Verstelleinheit 9 verbunden. Dies soll schematisch verdeutlichen, dass bei dem zweiten Ausführungsbeispiel bei der Verstelleinheit äquidistante $z_i$-Werte vorgegeben sind und die Verstelleinheit 9 jeweils bei Erreichen eines vorgegebenen $z_i$-Wertes ein Triggersignal an den Multielement-Detektor 6 sendet, sodass ein Kamerabild aufgenommen wird.

Oberhalb des Messobjekts 1 ist die Referenzfläche 11 dargestellt, welche den Referenzzustand OPD = 0 wiedergibt. In diesem Ausführungsbeispiel liegt die Referenzfläche 11 somit oberhalb des Messobjekts, sodass sich für Messpunkte p auf der Messoberfläche 1a des Messobjekts 1 negative Höhenwerte $h^p$ ergeben.

Die Auswerteeinheit 10 ist ausgebildet, eine Auswertung gemäß einem zweiten Ausführungsbeispiel des erfindungsgemäßen Verfahrens durchzuführen. Dieses entspricht im Wesentlichen dem ersten Ausführungsbeispiel, sodass ebenfalls zur Vermeidung von Wiederholungen nachfolgend lediglich auf die wesentlichen Unterschiede eingegangen wird:

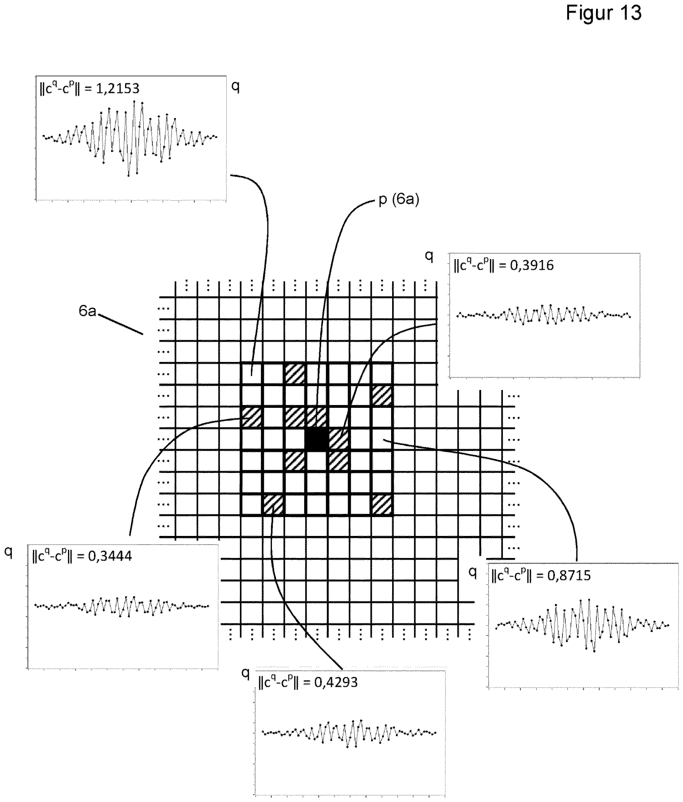

In Figur 13 ist wiederum schematisch der Flächensensor 6a des Multielement-Detektors 6 dargestellt. Ein Vergleich der Figuren 13 und 5 zeigt, dass bei diesem zweiten Ausführungsbeispiel des erfindungsgemäßen Verfahrens eine größere Anzahl von Detektorelementen herangezogen wird.

Auch in der Darstellung gemäß Figur 13 ist ein Detektorelement p mit Bezugszeichen 6a schwarz ausgefüllt gekennzeichnet. Die in Betracht gezogenen benachbarten Detektorelemente sind durch eine dicke schwarze Umrandung gekennzeichnet: Vorliegend werden die in einem Quadrat von 7 x 7 Detektorelementen liegenden 48 Nachbarelemente $q_j$ zu dem Detektorelement p (6a) zur Auswertung herangezogen. Auch in diesem Fall werden erwünschte Nachbarschaftseigenschaften definiert, um die Eignung eines Nachbarelementes für die Auswertung zu bewerten. Als Maß zur Bewertung der Nachbarschaftseigenschaften wird als Metrik die Längennorm des Differenzvektors $c^q - c^p$ für das Detektorelement q gebildet. Für jedes der 48 Nachbarelemente liegt somit ein Wert vor, der in Figur 13 beispielhaft für fünf Nachbarelemente q durch ein entsprechendes Differenz-Korrelogramm $c^q - c^p$ sowie durch den Zahlenwert, welcher sich durch die Metrik-Längennorm für dieses Differenz-Korrelogramm ergibt, dargestellt ist. Vorliegend erfolgt die Auswahl derart, dass diejenigen zehn Nachbarelemente aus den 48 Nachbarelementen ausgewählt werden, welche die ähnlichsten Korrelogramme aufweisen. Es werden somit zu allen 48 Nachbarelementen Werte entsprechend der Metrik-Längennorm des Differenzvektors berechnet und die zehn Nachbarelemente mit den zehn geringsten Werten bestimmt. Dies ist in der vorliegenden Messsituation sinnvoll, da anzunehmen ist, dass ein Unterschied in den Korrelogrammen maßgeblich durch die Luftverwirbelungen verursacht sein wird und somit Nachbarelemente mit nur geringen Unterschieden hinsichtlich der Metrik-Längennorm des Differenzvektors ähnliche Messbedingungen aufweisen werden.

Bei der beispielhaften Darstellung gemäß Figur 13 liegen die Detektorelemente mit Längennorm des Differenzvektors 1,2153 und 0,8715 nicht in der Gruppe der Detektorelemente mit den zehn niedrigsten Werten. Die Detektorelemente mit den Werten 0,4293, 0,3916 und 0,3444 liegen hingegen in dieser Gruppe und werden entsprechend (zusammen mit sieben weiteren, nicht detailliert dargestellten Detektorelementen) zur Auswertung herangezogen.

Das zweite Ausführungsbeispiel unterscheidet sich somit insbesondere von dem ersten Ausführungsbeispiel dadurch, dass mehrere benachbarte Detektorelemente $q_j$ (vorliegend zehn) zur Bestimmung des dem Detektorelement p zugeordneten Werts $z^p$ verwendet werden, indem neben den Lichtintensitäten $I^p(z_i)$ auch die Lichtintensitäten $I^{q_j}(z_i)$ der wie zuvor beschrieben bestimmten zehn Nachbarelemente $q_1$, ..., $q_{10}$ verwendet werden.

In alternativen Ausführungsformen des zweiten Ausführungsbeispiels wird nicht eine feste Anzahl Detektorelemente, beispielsweise in der räumlichen Umgebung des Detektorelements p, ausgewählt, sondern es werden aus einer bestimmten Vorauswahl von Detektorelementen alle diejenigen Detektorelemente ausgewählt, bei denen bestimmte vorgegebene Nachbarschaftseigenschaften vorliegen. Zum Beispiel kann es vorteilhaft sein, all diejenigen Detektorelemente $q_j$ auszuwählen, bei denen bei den das Korrelogramm $c^{q_j}$ um ein geeignetes Maß vom Korrelogramm $c^p$ am Detektorelement p abweicht, z. B. so dass die Standardabweichung der aus den Differenzvektoren ermittelten Werte $c^{q_j}(i)$ - $c^p(i)$ ungefähr dem doppelten Quantisierungs- und Kamerarauschen entspricht. Hier wird vorteilhaft eine obere und untere Schranke für die mit der entsprechenden Metrik ermittelten Werte festgelegt, anhand derer die zu verwendenden Detektorelemente ausgewählt werden. Dies trägt dem Rechnung, dass die Korrelogramme $c^{q_j}$ und $c^p(i)$ einerseits nicht zu unterschiedlich sein sollten, da ansonsten eine lineare Approximation Schwierigkeiten macht, sie aber andererseits auch nicht zu ähnlich sein sollten, da ansonsten das Differenzkorrelogramm sehr klein und von möglichem Rauschen gestört oder sogar dominiert sein kann.

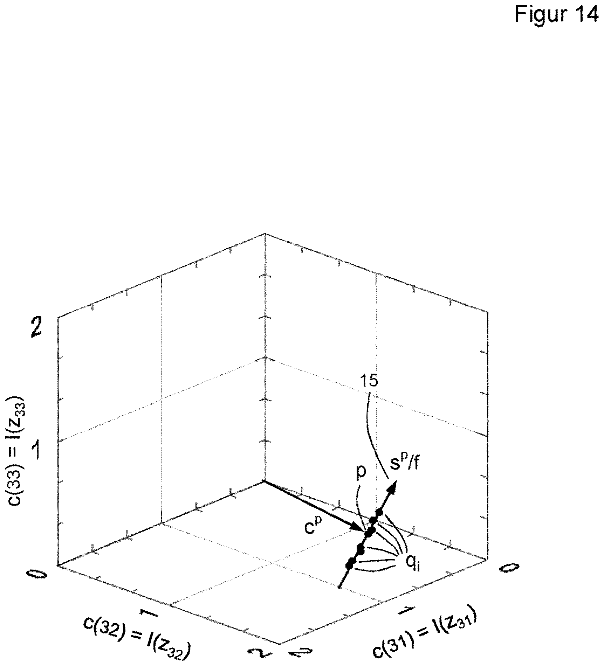

In Figur 14 ist schematisch dargestellt, wie anhand der mehreren Nachbarelemente $q_j$ die Bestimmung des dem Detektorelement p zugeordneten Werts $z^p$ erfolgt:
Aus Gründen der Darstellbarkeit wird analog zu Figur 11 auch bei Figur 14 für die Darstellung eine Projektion auf einen dreidimensionalen Unterraum vorgenommen, indem von dem 64-dimensionalen Vektorraum lediglich die Dimensionen 31, 32 und 33 dargestellt werden. Wie zuvor beschrieben, erfolgte bei diesem Ausführungsbeispiel eine Auswahl von zehn Nachbarelementen, sodass entsprechend im 64-dimensionalen Vektorraum neben dem zum Detektorelement p gehörenden Korrelogrammvektor $c^p$ zehn Korrelogrammvektoren $c^q$ für die Nachbarelemente q vorliegen, die der Einfachheit halber nur durch ihre als Punkte gekennzeichneten Endpunkte dargestellt sind.

Im Gegensatz zu der Darstellung gemäß Figur 11 und hierzu beschriebenen Bildung eines Differenzvektors erfolgt vorliegend die Bestimmung des Richtungsvektors im 64-dimensionalen Raum nicht unmittelbar durch Ermittlung eines Differenzvektors zweier Korrelogramme $c^q$ und $c^p$. Hingegen wird der Richtungsvektor 15 bestimmt, der zu derjenigen Gerade gehört, die am besten die durch die (der Einfachheit halber ebenfalls mit $q_j$ und p bezeichneten) Endpunkte der Korrelogrammvektoren $c^{q_j}$ und $c^p$ gegebene Punktewolke approximiert, und die darüber hinaus durch den ebenfalls mit p bezeichneten Endpunkt p des Korrelogrammvektors $c^p$ verläuft. Die Bestimmung dieses Richtungsvektors kann mit Hilfe eines Geraden-Fits und anschließender Ermittlung des Richtungsvektors hieraus hier vorliegend im 64-dimensionalen Vektorraum erfolgen. In einem alternativen Ausführungsbeispiel wird eine Hauptkomponentenanalyse (PCA, Principle Component Analysis) an der im 64-dimensionalen Vektorraum der durch die Vektorendpunkte $q_j$ und p gegebenen Punktewolke durchgeführt, wobei der Eigenvektor, der zum größten Eigenwert der Kovarianzmatrix gehört, ebenfalls der gesuchte Richtungsvektor ist. Da bei vielen PCA-Algorithmen zuerst der größte Eigenwert der Kovarianzmatrix sowie der zugehörige Eigenvektor bestimmt wird, kann man besonders vorteilhaft nach Vorliegen des entsprechenden Eigenvektors die Hauptkomponentenanalyse abbrechen, so dass im konkreten Ausführungsbeispiel auf die vollständige Hauptkomponentenanalyse verzichtet werden kann und nur eine teilweise Hauptkomponente durchgeführt werden muss.

Der gefundene Richtungsvektor entspricht wieder dem nicht skalierten synthetischen Korrelogramm $Q^p(z_i) = s^p/f$ , wie im ersten Ausführungsbeispiel beschrieben, und ist daher auch in Figur 14 als $s^p/f$ bezeichnet.

Gemäß diesem zweiten Ausführungsbeispiel wird somit anhand einer Mehrzahl von Detektorelementen q ein nicht skaliertes synthetisches Korrelogramm $Q^p = s^p/f$ bestimmt. Die weitere Auswertung erfolgt wie im ersten Ausführungsbeispiel beschrieben: Der Skalierungsfaktor f zur Skalierung des synthetischen Korrelogramms wird wieder mit einer der beschriebenen Vorgehensweisen bestimmt. Anschließend wird aus dem Korrelogramm $c^p$ und dem zugehörigen, korrekt skalierten synthetischen Korrelogramm $s^p$ die Einhüllende bestimmt und der z-Wert des Maximums dieser Einhüllenden als Wert für das gesuchte $z^p$ bestimmt. Bei Bedarf kann neben der Einhüllendenauswertung auch wieder eine Phasenauswertung durchgeführt werden sowie alle hieraus folgenden Ergebnisse auf die beschriebene Art oder entsprechend den bekannten Möglichkeiten verwendet werden.

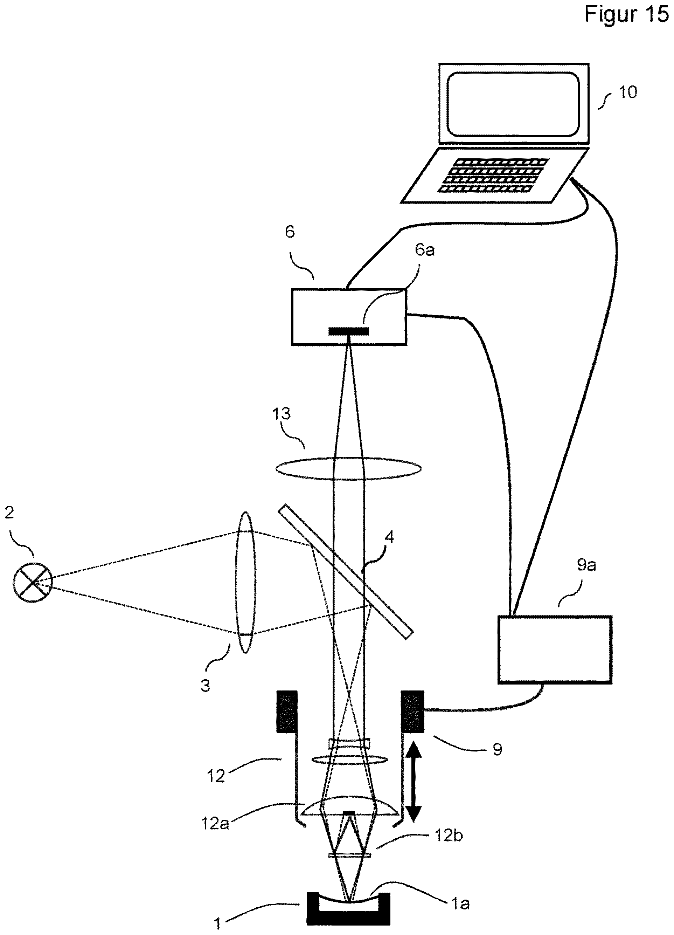

Figur 15 zeigt ein drittes Ausführungsbeispiel einer erfindungsgemäßen Vorrichtung:

In diesem Ausführungsbeispiel erfolgt die Erzeugung des Interferenzmusters mittels eines Mirau-Interferometers: Mittels der Lichtquelle 2 wird Beleuchtungslicht erzeugt, welches über eine Kondensorlinse 3 zu einem halbdurchlässigen Spiegel 4 gelangt. Das Beleuchtungslicht wird somit teilweise in der Darstellung gemäß Figur 15 nach unten reflektiert und trifft dort auf ein Mirau-Objektiv, welches in an sich bekannter Weise aufgebaut ist. Insbesondere weist das Mirau-Objektiv 12 eine Frontlinse 12a mit zentralem Referenzspiegel sowie einen Strahlteiler 12b auf.

Das aus dem Mirau-Objektiv in Richtung des Messobjekts 1 austretende Messlicht wird von der Messoberfläche 1a des Messobjekts zumindest teilweise reflektiert und tritt wieder in den Strahlengang des Mirau-Objektivs 12 ein. Gleichzeitig wird durch den Stahlteiler 12b des Mirauobjektivs Referenzlicht vom Beleuchtungslicht abgespalten und in Richtung des zentralen Referenzspiegels gelenkt. Dort wird dieses Referenzlicht reflektiert und zum Strahlteiler 12b zurückgeworfen. Am Strahlteiler 12b wird ein Teil des Referenzlichts wieder reflektiert, so dass es sich mit vom Messobjekt zurückgeworfenen Messlicht überlagert, mit ihm gemeinsam zumindest teilweise durch den halbdurchlässigen Spiegel 4 hindurchtritt und mittels einer Tubuslinse 13 auf den vorliegend als CMOS-Kamera ausgebildeten Multielement-Detektor 6 abgebildet wird. Der Multielement-Detektor 6 weist entsprechend als Flächensensor 6a einen CMOS-Bildsensor auf, vorliegend ein Array von 512 x 512 Detektoren, das heißt insgesamt 262144 Detektoren.

Die Verstelleinheit 9 ist in diesem Ausführungsbeispiel als Piezo-Versteller mit einem Piezo-Controller 9a ausgebildet. Mittels Piezo-Controller 9a kann die als Piezo-Versteller ausgebildete Verstelleinheit 9 derart gesteuert werden, dass das Mirau-Objektiv gemäß des in Figur 15 dargestellten Doppelpfeils zu dem Messobjekt 1 hinbewegt werden kann und von diesem wegbewegt werden kann.

Die verbleibende Vorrichtung wird hingegen durch die Verstelleinheit 9 nicht bewegt.

Auch in diesem Fall umfasst die Vorrichtung eine als Laptop ausgebildete Auswerteeinheit 10, welche mit dem Multielement-Detektor 6 verbunden ist. Analog zu Figur 12 und dem zweiten Ausführungsbeispiel ist auch bei diesem dritten Ausführungsbeispiel die Verstelleinheit 9, vorliegend der Piezo-Controller 9a, über eine Triggerleitung mit dem Multielement-Detektor 6 verbunden.

Vorliegend weist die Interferometeroptik somit die Kondensorlinse 3, den Strahlteiler 4, das Mirau-Objektiv 12 und die Tubuslinse 13 auf.

Das Messobjekt 1 ist vorliegend ein MEMS-Element, welches als Messoberfläche 1a eine leicht bewegliche, druckempfindliche Membran aufweist.

Der Messablauf erfolgt im Grundsatz analog zu dem Messablauf in Figur 12 beschriebenen zweiten Ausführungsbeispiel: Mittels Piezo-Controller 9a und Verstelleinheit 9 wird das Mirau-Objektiv kontinuierlich mit einer annähernd konstanten Geschwindigkeit verfahren. In äquidistanten Zeitabständen wird ein Triggersignal über die Triggerleitung an den Multielement-Detektor 6 zur Aufnahme eines Kamerabildes gegeben. Die Speicherung und Auswertung der Kamerabilder erfolgt wie auch bei den zuvor beschriebenen Ausführungsbeispielen mittels der Auswerteeinheit 10.

Die Auswertung erfolgt gemäß einem dritten Ausführungsbeispiel eines erfindungsgemäßen Verfahrens, welches ähnlich ausgebildet ist wie das zuvor zu Figur 14 beschriebene zweite Ausführungsbeispiel.

Bei dem dritten Ausführungsbeispiel wird jedoch eine große Anzahl von Detektorelementen q herangezogen, um den dem Detektorelement p zugeordneten Wert $z^p$ zu bestimmen:

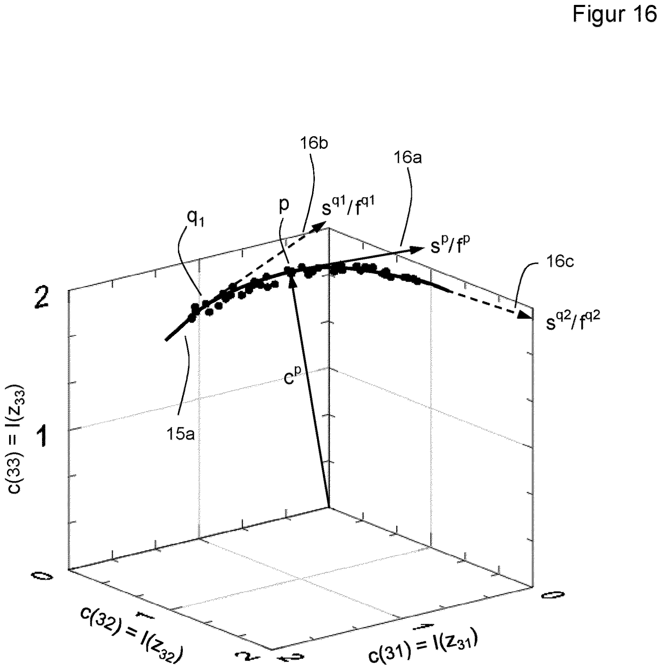

Die Auswahl der Detektorelemente $q_j$ erfolgt vorliegend, indem alle in einem 7 x 7-Feld liegenden 48 Nachbarelemente des Detektorelementes p für die Auswertung herangezogen werden. In Figur 16 ist wiederum aus Gründen der Darstellbarkeit lediglich eine Ansicht der Dimensionen 31, 32 und 33 des n-dimensionalen Vektorraums der Korrelogrammvektoren gezeigt. Wie in Figur 16 ersichtlich, kann die durch die Korrelogramme der Detektorelemente $q_1$ bis $q_{48}$ dargestellte Punktwolke besser durch eine Kurve als durch eine Gerade approximiert werden. In diesem dritten Ausführungsbeispiel wird eine Kurve 15a, vorliegend ein Ellipsensegment, in einer alternativen Ausführungsform ein Parabelstück, an die Punktwolke angefittet. Es folgt somit eine Approximation durch Anpassung einer niederdimensionalen differenzierbaren Untermannigfaltigkeit an die Punkteverteilung, vorliegend eine eindimensional differenzierbare Untermannigfaltigkeit. Die Approximation erfolgt vorliegend, indem ein Abweichungsquadrat bestimmt wird und die freien Parameter der Kurve mit einem der gängigen mathematischen Verfahren optimiert werden, sodass das Abweichungsquadrat minimal wird.

Wie in Figur 16 ersichtlich, lässt sich nach Bestimmen der Kurve 15a für das Korrelogramm $c^p$ das nicht skalierte synthetische Korrelogramm $Q^p = s^p/f^p$ als Tangentialvektor 16a an die Kurve in dem Punkt p bestimmen.

Die weitere Auswertung erfolgt nun wie zuvor beschrieben, indem zunächst der Skalierungsfaktor $f^p$ für das synthetische Korrelogramm am Punkt p bestimmt wird und basierend auf dem Korrelogramm $c^p$ und dem korrekt skalierten synthetischen Korrelogramm $s^p$ die Bestimmung des Wertes $z^p$ erfolgt.

Vorteilhaft bei diesem dritten Ausführungsbeispiel ist jedoch, dass die bestimmte Kurve nicht nur zur Bestimmung des Tangentialvektors 16a im Punkt p, sondern auch zur Bestimmung von Tangentialvektoren an die Punkte $q_j$ verwendet werden kann (siehe beispielhaft Tangentialvektor 16b zu Punkt $q_1$ und Tangentialvektor 16c zu Punkt $q_2$). Eine einmalige Bestimmung der Kurve erlaubt somit die Bestimmung des Wertes $z^p$ nicht nur für den Punkt p, sondern ebenso die entsprechenden Werte $z^q$ für alle oder zumindest eine Vielzahl von Punkten $q_j$ (j = 1, ..., 48).

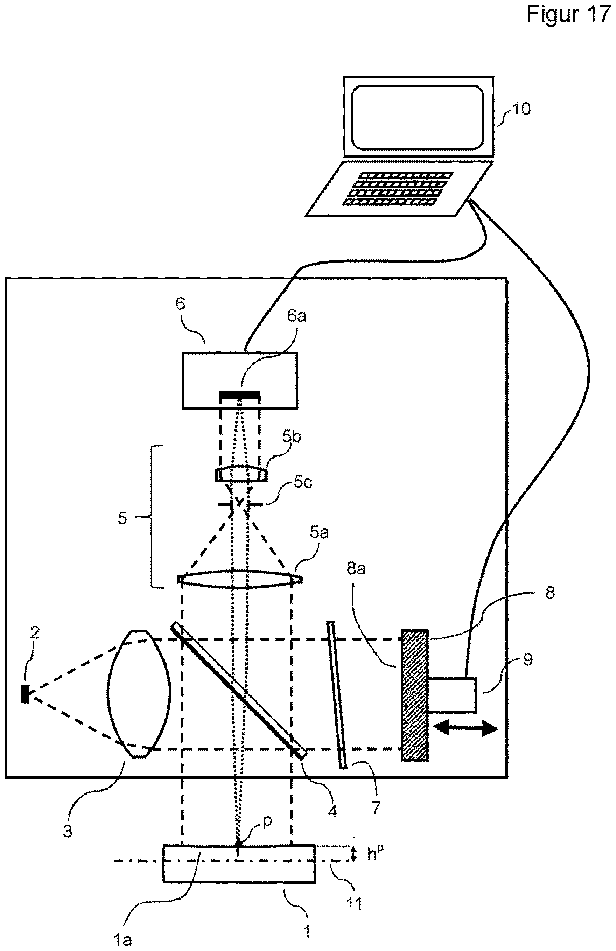

In Figur 17 ist ein viertes Ausführungsbeispiel einer erfindungsgemäßen Vorrichtung dargestellt. Dieses entspricht weitgehend dem ersten Ausführungsbeispiel gemäß Figur 1. Die Verstelleinheit 9 ist bei dem vierten Ausführungsbeispiel jedoch am Referenzspiegel 8 angeordnet, um diesen in Richtung des Doppelpfeils zu der Lichtquelle hin- oder von dieser wegzubewegen. Mittels der Verstelleinheit 9 wird somit der Lichtweg des Referenzlichts beeinflusst. Die Position der Vorrichtung relativ zu dem Messobjekt 1 und insbesondere der Messoberfläche 1a bleibt hingegen konstant, das heißt auch die optische Weglänge des Messlichts bleibt unverändert.

Abgesehen hiervon ist die Funktionsweise jedoch gleich zu der des ersten Ausführungsbeispiels. Insbesondere kann das zu dem ersten Ausführungsbeispiel beschriebene Verfahren auch mit der Vorrichtung gemäß Figur 17 durchgeführt werden.

Anhand des in Figur 17 dargestellten vierten Ausführungsbeispiels einer erfindungsgemäßen Vorrichtung wird nachfolgend ein viertes Ausführungsbeispiel des erfindungsgemäßen Verfahrens dargestellt:

Hierfür ist die Vorrichtung gemäß Figur 17 in einer Abwandlung zur Durchführung einer PSI-Messung ausgebildet. In diesem Fall ist die Lichtquelle 2 als monochromatischer Laser mit einer Wellenlänge von 520 nm ausgebildet.

Mittels der Verstelleinheit 9 erfolgt in diesem Ausführungsbeispiel eine Variation hier der Phasendifferenz $z_i$ zwischen dem Messlicht und dem Referenzlicht. Die Lichtintensitäten $I^p(z_i)$ werden somit in Abhängigkeit vom jeweiligen Betrag $z_i$ der gegenüber dem Referenzzustand des Interferometers veränderten Phasendifferenz aufgenommen und ergeben wieder die Korrelogramme $c^p = (c^p(1), c^p(2), ..., c^p(n)) = (I^p(z_1), I^p(z_2), ..., I^p(z_n))$, wobei die $z_i$ Phasendifferenzen, gemessen beispielsweise in Grad oder rad sind.

Im konkreten vorliegenden Ausführungsbeispiel werden die Messungen bei 6 verschiedenen Werten für $z_i$ durchgeführt. Die Korrelogrammvektoren $c^p$ sind somit als Vektoren im sechsdimensionalen Vektorraum gegeben, und es lassen sich die gleichen Betrachtungen anstellen wie bei den vorangegangenen Ausführungsbeispielen, lediglich sind die Werte von $z_i$ hier nicht als OPD-Differenzen, sondern als Phasendifferenzen gegeben.

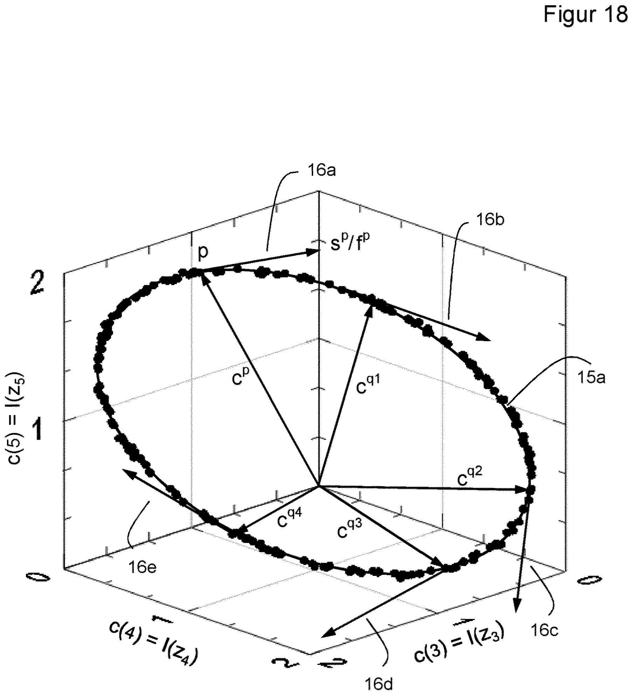

In diesem vorliegenden vierten Ausführungsbeispiel eines erfindungsgemäßen Verfahrens werden nun sämtliche Detektorelemente zur Auswertung herangezogen. Dies ist in Figur 18 schematisch bei Reduktion auf die Dimensionen 3, 4 und 5 dargestellt: Wie in Figur 18 ersichtlich, ergibt die Punktewolke eine Ellipse in n-dimensionalem Raum, vorliegend im 6-dimensionalen Raum, von dem hier nur drei Dimensionen dargestellt sind. Wie eingangs erwähnt, lässt sich die Phase-Shifting-Interferometrie hinsichtlich der Korrelogramme als Sonderfall der Weißlichtinterferometrie ansehen, bei welchem eine konstante Einhüllende env(OPD) = const gegeben ist.

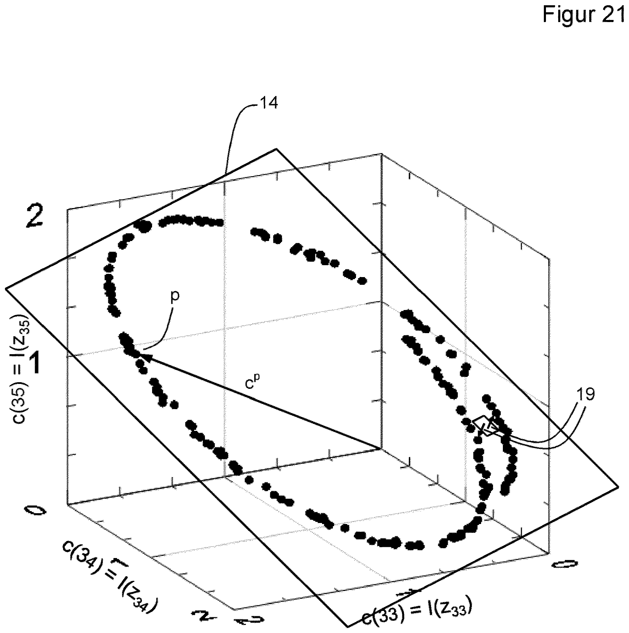

Wie weiter vorne ausführlicher dargestellt lässt sich die Punktewolke bei der PSI als geschlossene Ellipse beschreiben. In Figur 21 wird später auch der Fall der Weißlichtinterferometrie behandelt.

Eine Störung, welche die $z_i$-Werte beeinflusst, also insbesondere zu nicht äquidistanten $z_i$ führt, ändert zwar die Lage der in Figur 18 skizzierten Ellipse im Raum, die Ellipsenform wird jedoch beibehalten. Eine Auswertung, welche auf Parametern der Ellipsenform basiert, wird somit durch die beschriebenen Störungen der $z_i$-Werte nicht oder nur kaum beeinflusst.

Gemäß dem vierten Ausführungsbeispiel des erfindungsgemäßen Verfahrens wird an die in Figur 18 dargestellte Punktewolke eine Ellipse 15a angefittet. Hierzu wird die Ellipse im n-dimensionalen Raum, hier vorliegend im 6-dimensionalen Raum, mit Hilfe von n+5 freien Parametern, hier vorliegend 11 freien Parametern, parametrisiert, nämlich mit n Parametern, um den Normalenvektor der Ebene, in der die Ellipse liegt, einschließlich des Abstands dieser Ebene vom Koordinatenursprung zu definieren, 2 Parametern, um die Verschiebung der Ellipse in der Ebene relativ zum Auftreffpunkt des Normalenvektors auf der Ebene zu definieren, und 3 Parametern, um die Länge und Drehung der Hauptachsen der Ellipse zu definieren. Für jeden Korrelogrammvektor $c^p$ bzw. $c^q$ lässt sich nun ein Abstand zu der so parametrisierten Ellipse in Abhängigkeit dieser Parameter angeben, wobei die Summe der Abstandsquadrate über alle Korrelogrammvektoren $c^p$ und $c^q$ mit einem der hierfür bekannten mathematischen Minimierungsverfahren minimiert wird und man hierdurch die entsprechenden, die Ellipse definierenden Parameter erhält. Für einen Punkt $c^p$ des Detektorelementes p wird das synthetische (nicht skalierte) Korrelogramm $Q^p = s^p/f^p$ bestimmt, indem der Tangentialvektor 16a an die Ellipse im Punkt p bestimmt wird, was nun dadurch leicht möglich ist, dass die Ellipse parametrisiert als eindimensionale differenzierbare Mannigfaltigkeit vorliegt und der Tangentialvektor durch Differentiation bestimmt werden kann. Anschließend wird wie zuvor beschrieben der Skalierungsvektor $f^p$ bestimmt und aus dem Korrelogramm $c^p$ und dem zugehörigen synthetischen Korrelogramm $s^p$ der zugeordnete $z^p$-Wert ermittelt. Wie in Figur 18 unmittelbar ersichtlich ist, ermöglicht die Bestimmung der Ellipse die Auswertung nicht nur hinsichtlich des Detektorelementes p, sondern auch hinsichtlich aller anderen Detektorelemente, wie beispielsweise der dargestellten Detektorelemente $q_1$, $q_2$, $q_3$ und $q_4$ mit zugeordneten Korrelogrammen $c^{q1}$, $c^{q2}$, $c^{q3}$ und $c^{q4}$, wobei die jeweils zugehörigen Tangentialvektoren 16b, 16c, 16d, 16e ebenfalls dargestellt sind. Mit Hilfe dieser Tangentialvektoren $Q^{qj} = s^{qj}/f^{qj}$ lassen sich somit wie beschrieben sogleich auch die zugehörigen Skalierungsfaktoren $f^{qj}$, die zugehörigen korrekt skalierten synthetischen Korrelogramme $s^{qj}$ und die zugeordneten Werte $z^{qj}$ bestimmen, wodurch sich gegenüber einer jeweils einzelnen Bestimmung der Werte $z^p$ und $z^{qj}$ sehr viel Rechenaufwand sparen lässt.

In einer Abwandlung des vierten Ausführungsbeispiels wird zunächst eine Hauptkomponentenanalyse durchgeführt und dadurch die Ebene bestimmt, in welcher die Ellipse liegt. Für die auszuwertenden Punkte, beispielsweise $c^p$, erfolgt eine Projektion des Punktes in diese Ebene, um unter anderem Rauschen oder Störungen zu minimieren, das heißt ein Verschieben des Punktes $c^p$ senkrecht zu der Ebene, sodass der Punkt innerhalb der Ebene liegt. Nachdem alle Punkte in die zuvor bestimmte Ebene projiziert wurden, erfolgt anschließend die Bestimmung der Ellipse. Hierdurch erreicht man eine höhere Genauigkeit.

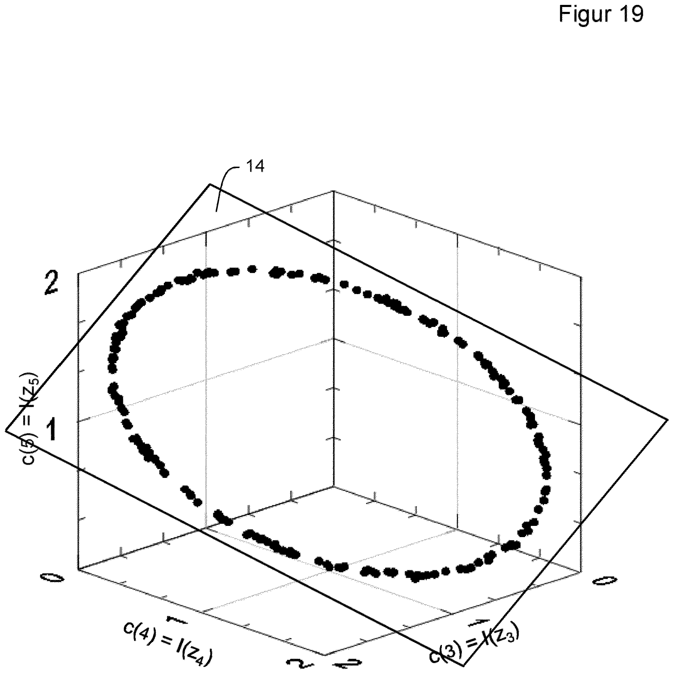

In Figur 19 ist schematisch - wiederum zur Darstellung durch Projektion in einen dreidimensionalen Unterraum des sechsdimensionalen Vektorraums, gegeben durch die bei $z_3$, $z_4$ und $z_5$ gemessenen Lichtintensitäten - die Punktewolke dargestellt, welche durch Bestimmung der Ebene 14 mittels PCA und Projektion der einzelnen Punkte in diese Ebene erhalten wird. Hier ist anzumerken, dass die gezeigte Ebene im Regelfall keine Ebene in dem dreidimensionalen Raum ist, der durch die drei dargestellten Raumrichtungen aufgespannt wird. Die Ebene ist zwar durchaus eine zweidimensionale Ebene im n-dimensionalen Raum, jedoch im Regelfall keine Ebene, die in dem durch die dargestellten Achsen aufgespannten dreidimensionalen Vektorraum liegt. Entsprechend ist die Darstellung gemäß Figur 19 als vereinfachende Veranschaulichung zum besseren Verständnis aufzufassen.

Für die weitere Auswertung gemäß diesem Ausführungsbeispiel des erfindungsgemäßen Verfahrens wird nachfolgend lediglich die in Figur 19 gezeigte Ebene mit den projizierten Punkten betrachtet:

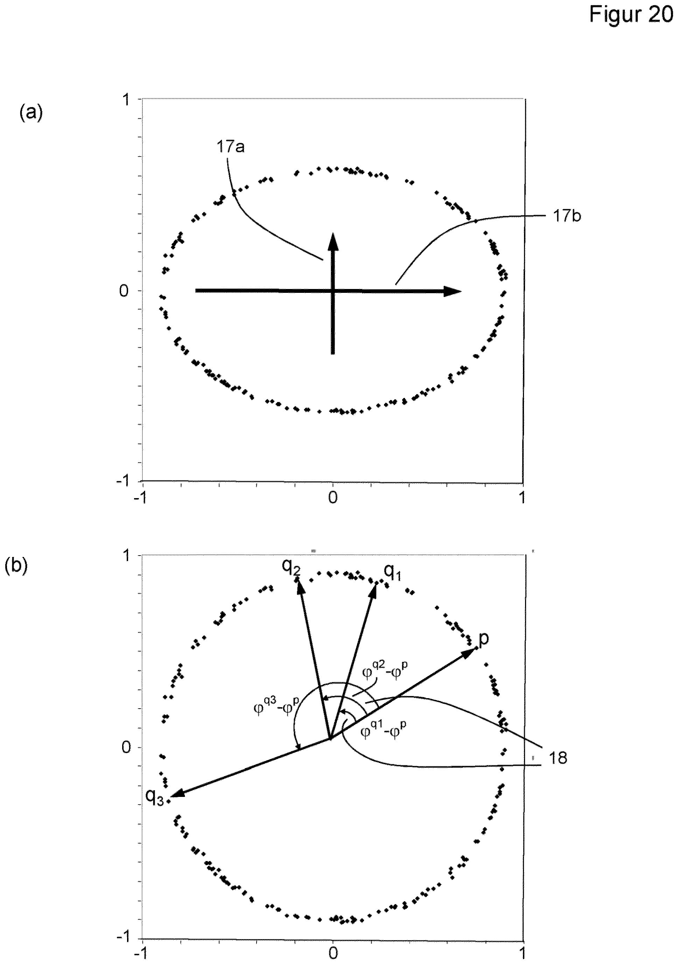

Figur 20 zeigt in Teilbild a die Ebene 14 gemäß Figur 19. Diese wurde wie beschrieben durch Hauptkomponentenanalyse zur Bestimmung der beiden größten Eigenwerte und zugehörigen Eigenvektoren der Kovarianzmatrix bestimmt. Ebenso ist eine teilweise Hauptkomponentenanalyse möglich, die durchgeführt wird, bis die genannten Werte bestimmt sind.

Die beiden Eigenvektoren 17a, 17b spannen die Ebene auf, in welcher die Ellipse liegt. Man projiziert nun die durch die Korrelogrammvektoren gegebenen Punkte in diese Ebene.

In Figur 20a ist die Ausrichtung der Ebene der Einfachheit halber derart gewählt, dass die x-Achse der Ebene durch den Eigenvektor 17b zum größten Eigenwert und die y-Achse durch den Eigenvektor 17a zum zweitgrößten Eigenwert bestimmt ist. Die Länge der Halbachsen der Ellipse ist proportional zu den beiden Eigenwerten. Es lässt sich daher eine affine Abbildung, die die Ellipse in einen Kreis überführt, beispielsweise über Streckung der y-Achse mit dem Verhältnis der beiden Eigenwerte, durchführen.

Das Ergebnis ist in Figur 20b dargestellt. In dem hier nun vorliegenden Kreis lassen sich die für die Auswertung gesuchten relativen Phasenwinkel 18 in einfacher Weise bestimmen bzw. ablesen. Mittels der Phasenwinkel 18 lassen sich in bekannter Weise die $z^p$- bzw. $z^{q_j}$-Werte für die einzelnen Detektorelemente und somit die einzelnen Messpunkte ermitteln.

Die zu Figur 18 erläuterte Methode kann ebenso bei der Weißlichtinterferometrie (WLI) verwendet werden. Nachfolgend wird daher ein weiteres Ausführungsbeispiel eines erfindungsgemäßen Verfahrens dargestellt, bei welchem WLI mittels des in Figur 17 dargestellten vierten Ausführungsbeispiels einer erfindungsgemäßen Vorrichtung durchgeführt wird, wobei die Lichtquelle 2 hier eine breitbandige Lichtquelle wie z. B. eine LED oder eine Superluminiszenzdiode anstelle eines Lasers ist. Die Durchführung des Verfahrens zur Aufnahme der Intensitätswerte für verschiedene $z_i$ erfolgt hierbei analog zu dem zu Figur 1 beschriebenen Ausführungsbeispiel. Vorliegend wird jedoch nicht die optische Weglänge des Messlichts verändert. Die Änderung der OPD wird erzielt, indem die optische Weglänge des Referenzlichts durch Verschieben der Referenzoberfläche 8a des Referenzspiegels 8 mittels der Verstelleinheit 9 verändert wird. Auch vorliegend werden für 64 $z_i$ -Werte jeweils Intensitäten für jedes Detektorelement p des Multielement-Detektors 6 aufgenommen, so dass für jedes Detektorelement ein Korrelogramm vorliegt, das wieder als Punkt im 64-dimensionalen Raum dargestellt werden kann.

Figur 21 zeigt analog zu Figur 19 die schematische Darstellung der Punktewolke im 64-dimensionalen Raum, wobei hier wieder aus praktischen Gründen nur drei Dimensionen dieses Raumes dargestellt sind. Auch hier zeigt sich ein angenähert elliptischer Verlauf, der jedoch keine geschlossene Ellipse mehr bildet. Vielmehr ähnelt der Verlauf eher einer Helix um einen Zylinder mit elliptischer Querschnittsfläche. Dass sich keine geschlossene Ellipse ausbildet, ist darin begründet, dass sich jeweils nach einem Umlauf das Maximum der Einhüllenden weiterbewegt hat, wohingegen bei der PSI-Methode die Einhüllende wie zuvor ausgeführt als konstante Funktion beschrieben werden kann.

Doch auch wenn keine geschlossene Ellipse vorliegt, kann dennoch wieder, vorliegend durch Hauptkomponentenanalyse eine zweidimensionale Ebene im n-dimensionalen Raum bestimmt werden, in der die Punkte näherungsweise liegen, wie in Figur 21 schematisch durch die Ebene 14 dargestellt ist.

Für die Darstellung in Figur 21 wurden zur besseren Verdeutlichung Punkte (und somit Detektorelemente) $q_j$ ausgewählt, deren Korrelogramm $c^{q_j}$ maximal etwas mehr als eine halbe Periode gegenüber dem Korrelogramm $c^p$ auf dem Detektorelement p verschoben ist. Dadurch ist am deutlichsten sichtbar, dass sich die Ellipse nicht schließt.

In der realen Anwendung dieses Ausführungsbeispiels des erfindungsgemäßen Verfahrens werden vorliegend Korrelogramme $c^{q_j}$ mit ungefähr $\pm 2$ Perioden Verschiebung gegenüber dem zum Detektorelement p gehörenden Korrelogramm $c^p$ zugelassen, wobei es ausreicht, die entsprechende Verschiebung mit einem der bekannten Verfahren nach dem Stand der Technik zu bestimmen, die nicht so störunempfindlich wie das erfindungsgemäße Verfahren sind, wobei dadurch ebenfalls eine Metrik zur Bestimmung von Nachbarschaftseigenschaften verwendet wird. Ebenso ist in alternativen Ausgestaltungen eine Auswahl von Punkten durch andere Werte und/oder in Kombination mit einer räumlichen Abstandsmetrik der Detektorelemente möglich.

Es wird nun für jeden Punkt p oder $q_j$ den Abstandsvektor zu der bestimmten Ebene ermittelt (siehe beispielhaft gekennzeichnete Abstandsvektoren 19 in Figur 21). Punkte, die zu einem um eine oder mehrere Perioden verschobenen Korrelogramm gehören, haben unterschiedlich lange Abstandsvektoren relativ zu dieser Ebene. Diese Abstände nehmen an den jeweiligen Stellen, die zum gleichen projizierten Punkt gehören, relativ diskrete Werte an, da sich die Ellipse aus der Ebene herauswindet und bei jedem Umlauf "ein Stockwerk höher" herauskommt.

Daher lässt sich durch die Länge der Abstandsvektoren ermitteln, um wie viele Perioden das Korrelogramm verschoben ist. Die Länge des Abstandsvektors ergibt somit ein vergleichbares Ergebnis wie die Einhüllenden-Auswertung bei der herkömmlichen Korrelogrammauswertung. Die Phasenauswertung erfolgt wie in den vorausgegangenen Figuren beschrieben.

Die Kombination dieser Phasenauswertung mit der aus dem Abstandsvektor gewonnenen Information über die Verschiebung der Korrelogramm-Einhüllenden erlaubt es, die Verschiebung der einzelnen Korrelogramme relativ präzise (und unabhängig von Störungen wie Vibrationen) zu bestimmen, ohne dass die Verschiebung wie bei der Phase-Shifting-Interferometrie lediglich modulo einer Periode bzw. 360° gegeben ist, sondern vorliegend vollständig.

Mit der beschriebenen Vorgehensweise lässt sich die Auswertung auf einen Schlag für sehr viele Punkte vornehmen, was sehr viel Rechenzeit spart. Aus den bestimmten Korrelogrammverschiebungen wird die Topographie des Messobjekts bestimmt.

Wenn man in einer Abwandlung des Ausführungsbeispiels die Auswertung nur für einen Teil der Punkte vornimmt (z. B. wie beschrieben für um gegenüber $c^p$ um maximal $\pm 2$ Perioden verschobene Korrelogramme) so wird bevorzugt das Verfahren für mehrere, vorzugsweise überlappende Punktemengen durchgeführt, so dass man die ermittelten Ergebnisse zusammenfügen kann.

Eine weitere Abwandlung des Ausführungsbeispiels ist darin begründet, dass die Kenntnis des vorbeschriebenen Abstandsvektors bedeutet, dass auch die Lage des Einhüllendenmaximums bekannt ist. Anstatt wie zuvor beschrieben den Punkt $q_j$ einfach in die bestimmte Ebene 14 zu projizieren, wird bei Kenntnis des funktionalen Verlaufs der Einhüllenden allein die Einhüllende des Korrelogramms verschoben, indem man beispielsweise das Korrelogramm am Punkt $q_j$ durch die funktionale Einhüllende im Punkt $q_j$ dividiert und mit der funktionalen Einhüllenden im Punkt p multipliziert, so dass hierdurch der Punkt $q_j$ in die gleiche Ebene wie der Punkt p abgebildet wird. Führt man diese Abbildung für alle Punkte durch, bevorzugt iterativ, erhält man wieder eine geschlossene Ellipse wie in den Figuren zuvor, die man auch entsprechend auswerten kann. Dadurch lässt sich die Qualität der Auswertungsergebnisse und der hieraus bestimmten Topographie erhöhen.

Bei der praktischen Anwendung unterscheiden sich WLI und PSI auch typischerweise darin, dass in der Phase-Shifting-Interferometrie die Messungen nur an deutlich weniger Stellen durchgeführt werden, die Anzahl der $z_i$ somit typischerweise kleiner ist als bei WLI Messungen. Bei PSI-Messungen sind die $z_i$ Phasendifferenzen gegenüber dem Referenzzustand des Interferometers, im Gegensatz zu WLI-Messungen, bei welchen die $z_i$ OPD-Differenzen gegenüber dem Referenzzustand des Interferometers sind. Phase und OPD sind jedoch im Regelfall proportional, d. h. sie können mit Hilfe eines Umrechnungsfaktors $2\pi/\lambda$ (in rad) bzw. $360°/\lambda$ (in Grad) gemäß Phase = $360°/\lambda$ * OPD umgerechnet werden, wobei $\lambda$ die effektive Lichtwellenlänge ist.

In den vorbeschriebenen Ausführungsbeispielen wurden die WLI Messungen an 64 Stellen ($z_1$, $z_2$, ..., $z_{64}$) durchgeführt, so dass jedes Korrelogramm entsprechend 64 Werte aufweist und der vollständige Vektorraum 64 dimensional ist. Bei PSI Messungen können hingegen bereits 3 oder 4 Stellen ausreichend sein, so dass für jedes Detektorelement entsprechend lediglich drei oder vier Messwerte an den drei oder vier z-Punkten $z_1$, $z_2$, $z_3$ bzw. $z_1$, $z_2$, $z_3$, $z_4$ vorliegen.

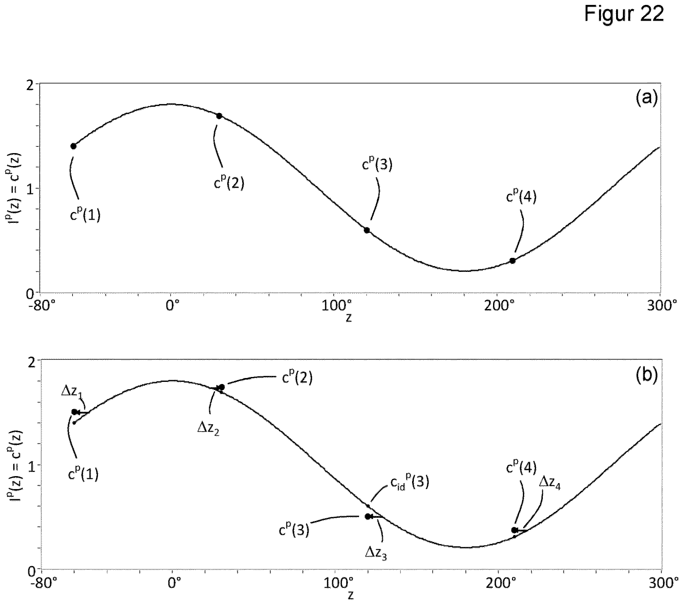

In einer Abwandlung des zuvor beschriebenen PSI Verfahrens werden lediglich 4 Werte benutzt. Anhand von Figur 22 wird nachfolgend der Einfluss von Störungen bei solch einer Messung und eine Vorgehensweise bei der Umsetzung des erfindungsgemäßen Verfahrens sowie der Vorteil hiervon verdeutlicht:

Figur 22 zeigt in Teilbild a) einen idealen, ungestörten Signalverlauf als durchgezogene Linie mit vier um jeweils 90° phasenverschobenen Messwerten $c^p(1)$ bis $c^p(4)$. In Teilbild b) ist wiederum der ideale, ungestörte Signalverlauf als durchgezogene Linie dargestellt, die Messwerte weisen jedoch simulierte Störungen auf, die zu einer Verschiebung in der Abszissen-Richtung z führen, so dass die Phasenverschiebung zwischen den Messwerten nicht mehr exakt 90° beträgt. Die (im realen Messbetrieb des vorliegenden Ausführungsbeispiels nicht bekannten) Abweichungen zu den idealen Werten sind durch die Differenzen $\Delta z_1$ bis $\Delta z_4$ verdeutlicht. Für den Wert $c^p(3)$ ist zusätzlich der ideale, ungestörte Wert $c_{id}^p(3)$ gekennzeichnet, welcher somit dem Wert $c^p(3)$ in Teilbild a) entspricht.

In dieser Abwandlung des Ausführungsbeispiels werden somit vier Werte von $z_i$ benutzt, die im idealen, störungsfreien Fall jeweils um 90° phasenverschoben sind. Dann ist:

$$c^p(i) = c(OPD) = A + B * \cos(\psi + z_i)$$

Gesucht ist in diesem Fall der Wert $\psi$, der hier dem gesuchten $z^p$ entspricht, wobei der Offset A und die Amplitude B Konstanten unbekannten Werts sind.

Bei der herkömmlichen Auswertung nach dem Stand der Technik bestimmt man das gesuchte $\psi$ aus den $c^p(i)$ des zugehörigen Korrelogramms, was fehleranfällig bei Störungen ist. Dies geschieht beispielsweise bei vier um 90° verschobenen $z_i$-Werten durch:

$$\psi = \text{arctan2} \left( c^p(4) - c^p(2),\ c^p(1) - c^p(3) \right)$$
$$= \text{arctan2} \left( \cos(\psi + z_4) - \cos(\psi + z_2),\ \cos(\psi + z_1) - \cos(\psi + z_3) \right)$$

Wenn tatsächlich $z_2 = z_1 + 90°$, $z_3 = z_1 + 180°$, $z_4 = z_1 + 270°$ ist, dann ist

$$\psi = \text{arctan2} \left( \sin(\psi),\ \cos(\psi) \right) = \psi \ ,$$

wobei gegebenenfalls ein Phase-Unwrapping durchgeführt werden muss.

Wenn aber die $z_i$ mit Störungen behaftet sind, wird eine derartige Auswertung inkorrekt und erlaubt keine ungestörte Bestimmung von $\psi$ mehr.

Die erfindungsgemäße Vorgehensweise bestimmt bevorzugt zu dem Korrelogramm $c^p$ (hier $c^p = (c^p(1), c^p(2), c^p(3), c^p(4))$ ) entsprechend der in der Beschreibung und in den vorausgehenden Ausführungsbeispielen beschriebenen Vorgehensweisen das zugehörige synthetische Korrelogramm $s^p$ (hier $s^p = (s^p(1), s^p(2), s^p(3), s^p(4))$ ), wobei wie zuvor die Information anderer, ggf. geeignet ausgewählter Korrelogramme $c^{qj}$ anderer Detektorelemente $q_j$ verwendet wird.

Hierzu ermittelt man zunächst wie zuvor beschrieben durch Differenzbildung, Approximation, Fit, Hauptkomponentenanalyse etc., den Richtungsvektor $Q^p(z_i) = 1/f^p * s^p(i)$ und bestimmt danach mit Hilfe eines der beschriebenen Verfahren den Skalierungsfaktor $f^p$.

Besonders vorteilhaft bei der Phase-Shifting-Interferometrie ist, dass für alle i hier $(c^p(i))^2 + (s^p(i))^2$ den gleichen konstanten Wert $w^p$ ergeben muss, wobei die $c^p(i)$ hier die um ihren Offset $o^p$ korrigierten Lichtintensitäten $I^p(z_i)$ der Korrelogramme sind, also $c^p(i) = I^p(z_i) - o^p$ ist. Der Offset $o^p$ lässt sich beispielsweise (a) durch Mittelung der $I^p(z_i)$ für geeignete $z_i$ bestimmen (z. B. für vier um 90° verschobene $z_i$) oder aber (b) besonders vorteilhaft, indem man den Offset $o^p$ bei der Ermittlung des Skalierungsfaktors f gleich mitermittelt, indem man $f^p$ und $o^p$ so bestimmt, dass

$$(I^p(z_i) - o^p)^2 + (f^p * Q^p(z_i))^2$$

konstant ist.

Bei der Vorgehensweise (a) liegt $o^p$ wie beschrieben schon vor, und es muss nur noch der Faktor $f^p$ bestimmt werden, bei dem

$(I^p(z_i) - o^p)^2 + (f^p)^2 * (Q^p(z_i))^2 = w^p$ für alle i den konstanten Wert $w^p$ ergibt, was bevorzugt durch eine lineare Regression des Typs

$$m * x_i + b = y_i$$

mit $x_i = (Q^p(z_i))^2$, $y_i = -(I^p(z_i) - o^p)^2$ geschieht, wobei man der Steigung $m = (f^p)^2$ sofort den gesuchten Wert für $f^p$ entnehmen kann.

Bei der Vorgehensweise (b) müssen $f^p$ und $o^p$ so bestimmt werden, dass für alle

$$(I^p(z_i) - o^p)^2 + (f * Q^p(z_i))^2 = w^p$$

ist, was wieder auf ein Minimierungsproblem führt - in diesem Fall müssen beispielsweise $f^p$, $o^p$ und $w^p$ so bestimmt werden, dass die Summe

$$\left( (I^p(z_i) - o^p)^2 + (f^p * Q^p(z_i))^2 - w^p \right)^2$$

minimal wird. Dieses Minimierungsproblem lässt sich mit den einschlägig bekannten mathematischen Verfahren lösen und ergibt die gesuchten Werte für $f^p$ und $o^p$.

In jedem Fall erhält man das synthetische Korrelogramm $s^p$
(hier $s^p = (s^p(1), s^p(2), s^p(3), s^p(4))$ ) und das um seinen Offset bereinigte Originaldiagramm $c^p(z_i) = I^p(z_i) - o^p$ (hier: $c^p = (c^p(1), c^p(2), c^p(3), c^p(4))$ ).

Sobald man das synthetische Korrelogramm $s^p$ ermittelt hat, lässt sich hieraus in Kombination mit dem um seinen Offset bereinigten Originaldiagramm $c^p$ die Phasenlage an jeder Stelle $z_i$ korrekt bestimmen, ohne dafür die anderen $z_i$ heranziehen zu müssen:

$$\psi(z_i) = \mathrm{arctan2}\,(s^p(i),\ c^p(i))\quad,$$

wobei gegebenenfalls wieder ein Phase-Unwrapping durchgeführt wird.

Da für die Phase-Shifting-Interferometrie zur Topographiebestimmung nur die Differenzen der Phasenlagen an verschiedenen Punkten $p_j$ relevant sind, kann man die entsprechenden Phasendifferenzen $\psi^{p2} - \psi^{p1}$ anschließend für einen beliebigen Wert für i bestimmen, also:

$$\psi^{p2} - \psi^{p1} = \mathrm{arctan2}\,(s^{p2}(i),\ c^{p2}(i)) - \mathrm{arctan2}\,(s^{p1}(i),\ c^{p1}(i))\,,$$

wobei ggf. auch für verschiedene oder alle i ein Wert bestimmt wird, welcher für das Endergebnis geeignet gemittelt wird.

Es ist zu bemerken, dass bei der erfindungsgemäßen Auswertung Störungen der $z_i$, beispielsweise durch Vibrationen wieder kaum einen Einfluss auf die Ergebnisse der Auswertung haben, wodurch das erfindungsgemäße Verfahren in der Regel bei Vorliegen von Störungen deutlich bessere Ergebnisse als das herkömmliche Verfahren nach dem Stand der Technik liefert.

Bezugszeichenliste

| | |
|---|---|
| 1 | Messobjekt |
| 1a | Messoberfläche |
| 1b | Heizplatte |
| 1c | Luftverwirbelung |
| 2 | Lichtquelle |
| 3 | Kondensor |
| 4 | halbdurchlässiger Spiegel |
| 5 | Abbildungsoptik |
| 5a, 5b | optische Linsen |
| 5c | optische Blende |
| 6 | Multielement-Detektor |
| 6a | Flächensensor |
| 6b | Detektorelement |
| 7 | optischer Filter |
| 8 | Referenzspiegel |
| 8a | Referenzoberfläche |
| 9 | Verstelleinheit |
| 9a | Piezo-Controller |
| 10 | Auswerteeinheit |
| 11 | Referenzfläche |
| 12 | Mirau-Objektiv |
| 12a | Frontlinse |
| 12b | Strahlteiler |
| 13 | Tubuslinse |
| 14 | durch PCA bestimmte Ebene |
| 15 | Richtungsvektor |
| 15a | Kurve |
| 16a | Tangentialvektor an p |
| 16b | Tangentialvektor an $q_1$ |

| 16c | Tangentialvektor an $q_2$ |
| 16d | Tangentialvektor an $q_3$ |
| 16e | Tangentialvektor an $q_4$ |
| 17a, 17b | Eigenvektoren |
| 18 | relative Phasenwinkel |
| 19 | Abstandsvektoren |

**Patentansprüche**

1. Verfahren zur interferometrischen Bestimmung der Oberflächentopographie eines Messobjekts (1) mit den Verfahrensschritten

   - Erzeugen von Beleuchtungslicht und Referenzlicht mittels mindestens einer Lichtquelle (2) und Beleuchten des Messobjekts (1) mit dem Beleuchtungslicht,
   - Zusammenführen des vom Messobjekt (1) als Messlicht zurückgeworfenen Beleuchtungslichts mit dem Referenzlicht, wobei ein Interferenzmuster in einem Detektionsbereich erzeugt wird,
   - Verändern der optischen Weglängendifferenz und/oder der Phasendifferenz zwischen dem Messlicht und dem Referenzlicht,
   - Erfassen von Lichtintensitäten $I^p(z_i)$ des Interferenzmusters auf einer Vielzahl von Detektorelementen p (6b) eines Multielement-Detektors (6) im Detektionsbereich für mindestens zwei um verschiedene Beträge $z_i$ veränderte optische Weglängendifferenzen bzw. Phasendifferenzen,
   - Bestimmen desjenigen Betrags $z^p$ für die Veränderung der optischen Weglängendifferenz bzw. Phasendifferenz für eine Vielzahl von Detektorelementen p (6b) des Multielement-Detektors (6), bei dem jeweils die optische Weglängendifferenz und/oder die Phasendifferenz zwischen dem Messlicht und dem Referenzlicht einen für dieses Detektorelement p (6b) explizit und/oder implizit vorgegebenen Wert erreicht, und
   - Ermitteln der Oberflächentopographie des Messobjekts (1) aus den für verschiedene Elemente p des Multielement-Detektors (6) bestimmten Beträgen $z^p$,
   wobei zur Bestimmung des dem Detektorelement p (6b) zugeordneten Werts $z^p$ neben den Lichtintensitäten $I^p(z_i)$ auch die Lichtintensitäten $I^q(z_i)$ mindestens eines anderen Detektorelements q des Multielement-Detektors (6) verwendet werden,
   **dadurch gekennzeichnet,**
   **dass** der dem Detektorelement p (6b) zugeordnete Wert $z^p$ unter Zuhilfenahme einer Approximation an zumindest einen Teil der durch die über die $I^p(z_i)$ und $I^q(z_i)$ gegebenen n-dimensionalen Lichtintensitätsvektoren $(I^p(z_1), I^p(z_2), \dots, I^p(z_n))$ und $(I^q(z_1), I^q(z_2), \dots, I^q(z_n))$ oder die aus ihnen durch Projektion und/oder Transformation hervorgegangenen Vektoren ermittelt wird.

2. Verfahren nach dem vorausgegangenen Anspruch, wobei
   zur Bestimmung des dem Multielement-Detektor-Element p zugeordneten Werts $z^p$ Informationen über eine Einhüllende und/oder eine Phasenlage der von der Veränderung z der optischen Weglängendifferenz und/oder der Phasendifferenz zwischen dem Messlicht und dem Referenzlicht abhängigen Funktion $I^p(z)$ ermittelt werden.

3. Verfahren nach einem der vorausgegangenen Ansprüche, wobei
   das mindestens eine andere Detektorelement q, dessen Lichtintensitäten $I^q(z_i)$ zur Bestimmung des dem Detektorelement p (6b) zugeordneten Werts $z^p$ verwendet werden, so ausgewählt wird, dass es gegenüber dem Detektorelement p (6b) vorgegebene Nachbarschaftseigenschaften besitzt.

4. Verfahren nach dem vorausgegangenen Anspruch, wobei die Nachbarschaftseigenschaften zumindest teilweise mit Hilfe einer Metrik definiert werden, wobei diese Metrik einen räumlichen Abstand der Detektorelemente p (6b) und q und/oder einen räumlichen Abstand von ihnen zugeordneten Punkten auf dem Messobjekt (1) und/oder einer zum Multielement-Detektor (6) konjugierten optischen Fläche umfasst.

5. Verfahren nach einem der vorausgegangenen Ansprüche, wobei
   die mindestens eine Metrik zur Bestimmung der Nachbarschaft von Detektorelementen p (6b) und q eine Metrik im Vektorraum der über die $I^p(z_i)$ und $I^q(z_i)$ gegebenen n-dimensionalen Lichtintensitätsvektoren $(I^p(z_1), I^p(z_2), \dots, I^p(z_n))$ und $(I^q(z_1), I^q(z_2), \dots, I^q(z_n))$ oder eine Metrik in einem Vektorraum der aus ihnen durch Projektion und/oder Transformation hervorgegangenen Vektoren umfasst.

**6.** Verfahren nach einem der vorausgegangenen Ansprüche, wobei
die Approximation die Anpassung einer differenzierbaren Untermannigfaltigkeit M an die Punkteverteilung aus den Punkten $(I^p(z_1), I^p(z_2), ... , I^p(z_n))$ und $(I^q(z_1), I^q(z_2), ... , I^q(z_n))$ im n-dimensionalen Vektorraum oder in einem Vektorraum der aus ihnen durch Projektion und/oder Transformation hervorgegangenen Vektoren umfasst.

**7.** Verfahren nach dem vorausgegangenen Anspruch, wobei
die differenzierbare Untermannigfaltigkeit M eine maximal dreidimensionale Untermannigfaltigkeit des zugehörigen Vektorraums ist.

**8.** Verfahren nach einem der vorausgegangenen Ansprüche, wobei
die Approximation an die Lichtintensitätsvektoren $(I^p(z_1), I^p(z_2), ... , I^p(z_n))$ und $(I^q(z_1), I^q(z_2), ... , I^q(z_n))$ oder die aus ihnen durch Projektion und/oder Transformation hervorgegangenen Vektoren zumindest lokal eine lineare Approximation ist.

**9.** Verfahren nach einem der vorausgegangenen Ansprüche, wobei
die bei der Bestimmung des dem Detektorelement p (6b) zugeordnete Werts $z^p$ verwendete Approximation die Bestimmung eines Richtungsvektors (15) umfasst, der zumindest lokal in einer Umgebung des Lichtintensitätsvektors $(I^p(z_1), I^p(z_2), ..., I^p(z_n))$ bzw. eines aus ihm durch Projektion und/oder Transformation hervorgegangenen Vektors die Hauptrichtung der durch die Vektoren $(I^p(z_1), I^p(z_2), ... , I^p(z_n))$ und $(I^q(z_1), I^q(z_2), ... , I^q(z_n))$ bzw. der aus ihnen durch Projektion und/oder Transformation hervorgegangenen Vektoren gegebenen Punkteverteilung approximiert.

**10.** Verfahren nach dem vorausgegangenen Anspruch, wobei
die Bestimmung des Richtungsvektors (15) eine Hauptkomponentenanalyse (PCA) oder Teile hiervon, eine Eigenwertbestimmung, eine lineare Regression oder ein anderweitiges Optimierungsverfahren zur Minimierung der Abweichung einer durch den Richtungsvektor (15) und/oder eines für ihn geeigneten Fußpunkts definierten Gerade zu den Vektoren $(I^p(z_1), I^p(z_2), ... , I^p(z_n))$ und $(I^q(z_1), I^q(z_2), ... , I^q(z_n))$ bzw. der aus ihnen durch Projektion und/oder Transformation hervorgegangenen Vektoren gegebenen Punkteverteilung umfasst.

**11.** Verfahren nach einem der Ansprüche 9 bis 10, wobei
der bestimmte Richtungsvektor oder ein Tangentialvektor, wobei durch Differentiation der differenzierbaren Mannigfaltigkeit M der Tangentialvektor an diese bestimmt wird, dazu benutzt wird, zu den Lichtintensitäten $I^p(z_1)$, $I^p(z_2), ... , I^p(z_n)$ ein phasenverschobenes Signal $Q^p(z_1), Q^p(z_2), ... , Q^p(z_n)$ zu bestimmen oder zu aus den $I^p(z_1)$, $I^p(z_2), ... , I^p(z_n)$ durch Projektion und/oder Transformation hervorgegangenen Vektoren ein entsprechendes zugehöriges phasenverschobenes Signal zu bestimmen.

**12.** Verfahren nach Anspruch 2, wobei
die bestimmte Phasenlage und/oder Einhüllende dazu benutzt wird, für das Element p des Multielement-Detektors (6) denjenigen Betrag $z^p$ für die Veränderung der optischen Weglängendifferenz bzw. Phasendifferenz bestimmen, bei dem die optische Weglängendifferenz bzw. die Phasendifferenz zwischen dem Messlicht und dem Referenzlicht einen explizit und/oder implizit vorgegebenen Wert erreicht.

**13.** Verfahren nach einem der vorausgegangenen Ansprüche, wobei
der für das Element p des Multielement-Detektors (6) bestimmte Betrag $z^p$ für die Veränderung der optischen Weglängendifferenz bzw. Phasendifferenz, bei dem die optische Weglängendifferenz bzw. die Phasendifferenz zwischen dem Messlicht und dem Referenzlicht einen explizit und/oder implizit vorgegebenen Wert erreicht, dazu benutzt wird, Information über die räumliche Lage eines dem Detektorelement p (6b) zugeordneten Oberflächenpunkts des Messobjekts (1) zu gewinnen, um die Oberflächentopographie des Messobjekts (1) zu ermitteln.

**14.** Verfahren nach einem der vorausgegangenen Ansprüche, wobei
das Verfahren dazu ausgebildet ist, die Oberflächentopographie von Messobjekten (1) unter Vorliegen mindestens einer der folgenden Störungen zu bestimmen:

(i) Vibrationen oder Bewegungen, die die Länge von Mess- und/oder Referenzarm des Interferometers während der Messungen beeinflussen

(ii) Veränderungen der Dichte und/oder des Brechungsindizes mindestens eines der vom Licht durchlaufenen Medien in Mess- und/oder Referenzarm

(iii) Ungenauigkeiten und/oder Fehler bei der Bestimmung des Betrags z der Veränderung der optischen Weglängendifferenz und/oder der Phasendifferenz zwischen dem Messlicht und dem Referenzlicht durch die Verstelleinheit (9)

**15.** Vorrichtung zur interferometrischen Bestimmung der Oberflächentopographie eines Messobjekts (1)

mit mindestens einer Lichtquelle (2) zur Beleuchtung des Messobjekts (1) und zur Erzeugung von Referenzlicht, mit einer Interferometeroptik zur Zusammenführung des vom Messobjekt (1) als Messlicht zurückgeworfenen Beleuchtungslichts mit dem Referenzlicht, wobei ein Interferenzmuster in einem Detektionsbereich erzeugt wird, mit mindestens einer Verstelleinheit (9), um die optische Weglängendifferenz und/oder die Phasendifferenz zwischen dem Messlicht und dem Referenzlicht um einen Betrag z zu verändern,
mit einem Multielement-Detektor (6) mit einer Vielzahl von Detektorelementen p, der dazu ausgebildet ist, für mindestens zwei um verschiedene Beträge $z_i$ veränderte optische Weglängendifferenzen bzw. Phasendifferenzen die Lichtintensitäten $I^p(z_i)$ des Interferenzmusters auf den Detektorelementen p im Detektionsbereich zu erfassen,
mit einer Auswerteeinheit (10), die mit dem Multielement-Detektor (6) verbunden ist und die dazu ausgebildet ist, für eine Vielzahl von Detektorelementen p des Multielement-Detektors (6) denjenigen Betrag $z^p$ für die Veränderung der optischen Weglängendifferenz bzw. Phasendifferenz zu bestimmen, bei dem die optische Weglängendifferenz bzw. die Phasendifferenz zwischen dem Messlicht und dem Referenzlicht einen für dieses Detektorelement p (6b) explizit und/oder implizit vorgegebenen Wert erreicht, und hieraus die Oberflächentopographie des Messobjekts (1) zu ermitteln,
wobei die Auswerteeinheit (10) ausgebildet ist, zur Bestimmung des dem Detektorelement p (6b) zugeordneten Werts $z^p$ neben den Lichtintensitäten $I^p(z_i)$ auch die Lichtintensitäten $I^q(z_i)$ mindestens eines anderen Detektorelements q des Multielement-Detektors (6) zu verwenden,
**dadurch gekennzeichnet,**
**dass** die Auswerteeinheit (10) ausgebildet ist, den dem Detektorelement p (6b) zugeordneten Wert $z^p$ unter Zuhilfenahme einer Approximation an zumindest einen Teil der durch die über die $I^p(z_i)$ und $I^q(z_i)$ gegebenen n-dimensionalen Lichtintensitätsvektoren ($I^p(z_1)$, $I^p(z_2)$, ... , $I^p(z_n)$) und ($I^q(z_1)$, $I^q(z_2)$, ... , $I^q(z_n)$) oder die aus ihnen durch Projektion und/oder Transformation hervorgegangenen Vektoren zu ermitteln.

**Claims**

**1.** Method for interferometric determination of the surface topography of a measurement object (1) with the method steps of

- Generating illumination light and reference light by means of at least one light source (2) and illuminating the measurement object (1) with the illumination light,
- Merging the illumination light reflected by the measurement object (1) as measurement light with the reference light, wherein an interference pattern is generated in a detection region,
- Modifying the optical path length difference and/or phase difference between the measurement light and the reference light,
- Detecting light intensities $I^p(z_i)$ of the interference pattern on a plurality of detector elements p (6b) of a multielement detector (6) in the detection region for at least two optical path length differences and/or phase differences modified by different amounts $z_i$,
- Determining the amount $z^p$ for the modification of the optical path length difference and/or phase difference for a plurality of detector elements p (6b) of the multielement detector (6), wherein, in each case, the optical path length difference and/or phase difference between the measurement light and the reference light reaches an explicitly and/or implicitly predetermined value for this detector element p (6b), and
- Determining the surface topography of the measurement object (1) from the amounts $z^p$ determined for the different elements p of the multi-element detector (6),
wherein, in addition to the light intensities $I^p(z_i)$, the light intensities $I^q(z_i)$ of at least one other detector element q of the multi-element detector (6) are also used to determine the value $z^p$ assigned to the detector element p (6b),
**characterized in that**
the value $z^p$ assigned to the detector element p (6b) is determined with the aid of an approximation of at least a part of the n-dimensional light intensity vectors ($I^p(z_1)$, $I^p(z_2)$ to $I^p(z_n)$) and $I^q(z_1)$, $I^q(z_2)$ to $I^q(z_n)$) provided by $I^p(z_i)$ and $I^q(z_i)$ or the vectors arising therefrom by projection and/or transformation.

**2.** Method according to the preceding claim, wherein
to determine the value $z^p$ assigned to the multi-element detector element p, information is determined for an envelope and/or a phase position of the function $I^p(z)$ dependent on the modification z of the optical path length difference and/or phase difference between the measurement light and the reference light.

3. Method according to any of the preceding claims, wherein
the at least one other detector element q, the light intensities $I^q(z_i)$ of which are used to determine the value $z^p$ assigned to the detector element p (6b), is selected such that it has predetermined proximity properties as regards the detector element p (6b).

4. Method according to the preceding claim, wherein the proximity properties are defined at least partially with the aid of a metric, wherein this metric comprises a spatial distance of the detector elements p (6b) and q and/or a spatial distance from points assigned to them to the measurement object (1) and/or an optical surface conjugated to the multi-element detector (6).

5. Method according to any of the preceding claims, wherein
the at least one metric for determining the proximity of detector elements p (6b) and q comprises a metric in the vector space of the n-dimensional light intensity vectors ($I^p(z_1)$, $I^p(z_2)$ to $I^p(z_n)$) and $I^q(z_1)$, $I^q(z_2)$ to $I^q(z_n)$) provided by $I^p(z_i)$ and $I^q(z_i)$ or a metric in a vector space of the vectors arising therefrom by projection and/or transformation.

6. Method according to any of the preceding claims, wherein
the approximation comprises the adjustment of a differentiable submanifold M to the point distribution from the points ($I^p(z_1)$, $I^p(z_2)$ to $I^p(z_n)$) and $I^q(z_1)$, $I^q(z_2)$ to $I^q(z_n)$) in the n-dimensional vector space or in a vector space of the vectors arising therefrom by projection and/or transformation.

7. Method according to the preceding claim, wherein
the differentiable submanifold M is a maximum three-dimensional submanifold of the corresponding vector space.

8. Method according to any of the preceding claims, wherein
the approximation of the light intensity vectors ($I^p(z_1)$, $I^p(z_2)$ to $I^p(z_n)$) and $I^q(z_1)$, $I^q(z_2)$ to $I^q(z_n)$) or the vectors arising therefrom by projection and/or transformation is, at least locally, a linear approximation.

9. Method according to any of the preceding claims, wherein
the approximation used when determining the value $z^p$ assigned to the detector element p (6b) comprises the determination of a direction vector (15), which, at least locally, in a vicinity of the light intensity vector ($I^p(z_1)$, $I^p(z_2)$ to $I^p(z_n)$) and/or a vector arising therefrom by projection and/or transformation, approximates to the principal direction of the point distribution provided by the vectors ($I^p(z_1)$, $I^p(z_2)$ to $I^p(z_n)$) and $I^q(z_1)$, $I^q(z_2)$ to $I^q(z_n)$) and/or the vectors arising therefrom by projection and/or transformation.

10. Method according to the preceding claim, wherein
the determination of the direction vector (15) comprises a principal component analysis (PCA) or parts thereof, an intrinsic value determination, a linear regression or an other optimization method for minimizing the deviation of a straight line defined by the direction vector (15) and/or a suitable base point for it from the point distribution provided by the vectors ($I^p(z_1)$, $I^p(z_2)$ to $I^p(z_n)$) and $I^q(z_1)$, $I^q(z_2)$ to $I^q(z_n)$) and /or the vectors arising therefrom by projection and/or transformation.

11. Method according to any one of claims 9 to 10, wherein
the determined direction vector or a tangent vector, wherein the tangent vector is determined for this by differentiation of the differentiable submanifold M, is used to determine a phase-shifted signal (Qp(z1), Qp(z2), ... , Qp(zn)) to the light intensities ($I^p(z_1)$, $I^p(z_2)$ to $I^p(z_n)$) or to determine a corresponding related phase-shifted signal from the vectors ($I^p(z_1)$, $I^p(z_2)$ to $I^p(z_n)$) arising from projection and/or transformation.

12. Method according to claim 2, wherein
the determined phase position and/or envelope is used to determine the amount $z^p$ for the modification of the optical path length difference and/or phase difference for the element p of the multi-element detector (6), wherein the optical path length difference and/or phase difference between the measurement light and the reference light reaches an explicitly and/or implicitly predetermined value

13. Method according to any of the preceding claims, wherein
the determined amount $z^p$ for the element p of the multi-element detector (6) for the modification of the optical path length difference and/or phase difference, wherein the optical path length difference and/or phase difference between the measurement light and the reference light reaches an explicitly and/or implicitly predetermined value, is used to obtain information on the spatial position of a surface point of the measurement object (1) assigned to the detector element p (6b), in order to determine the surface topography of the measurement object (1).

14. Method according to any of the preceding claims, wherein
the method is designed to determine the surface topography of measurement objects (1) in the presence of at least one of the following disturbances:

(i) Vibrations or movements, which affect the length of the measurement and/or reference arm of the interferometer during measurements
(ii) Modifications in the density and/or refractive index of at least one of the media through which light passes in the measurement and/or reference arm
(iii) Inaccuracies and/or errors when determining the amount z of the modification of the optical path length difference and/or phase difference between the measurement light and the reference light by the adjustment unit (9)

15. Device for interferometric determination of the surface topography of a measurement object (1)

with at least one light source (2) for illuminating the measurement object (1) and for generating reference light,
with an interferometer optic for merging the illumination light reflected by the measurement object (1) as measurement light with the reference light, wherein an interference pattern is generated in a detection region,
with at least one adjustment unit (9), to modify the optical path length difference and/or phase difference between the measurement light and the reference light by an amount z,
with a multi-element detector (6) with a plurality of detector elements p, which is designed to detect the light intensities $I^p(z_i)$ of the interference pattern on the detector elements p in the detection region for at least two optical path length differences and/or phase differences modified by different amounts $z_i$,
with an evaluation unit (10), which is connected to the multi-element detector (6) and is designed to determine the amount $z^p$ for the modification of the optical path length difference and/or phase difference for a plurality of detector elements p of the multielement detector (6), wherein the optical path length difference and/or phase difference between the measurement light and the reference light reaches an explicitly or implicitly predetermined value for this detector element p (6b), and, from this, to determine the surface topography of the measurement object (1),
wherein the evaluation unit (10) is designed, in addition to the light intensities $I^p(z_i)$, to also use the light intensities $I^q(z_i)$ of at least one other detector element q of the multielement detector (6) to determine the value $z^p$ assigned to the detector element p (6b)
**characterized in that**
the evaluation unit (10) is designed to determine the value $z^p$ assigned to the detector element p (6b) with the aid of an approximation of at least a part of the n-dimensional light intensity vectors ($I^p(z_1)$, $I^p(z_2)$ to $I^p(z_n)$) and $I^q(z_1)$, $I^q(z_2)$ to $I^q(z_n)$) provided by $I^p(z_i)$ and $I^q(z_i)$ or the vectors arising therefrom by projection and/or transformation.

**Revendications**

1. Procédé destiné à la détermination interférométrique de la topographie de surface d'un objet à mesurer (1) avec les étapes de procédé suivantes

- génération d'une lumière d'éclairage et d'une lumière de référence au moyen d'au moins une source de lumière (2) et éclairage de l'objet à mesurer (1) avec la lumière d'éclairage,
- regroupement de la lumière d'éclairage rejetée en tant que lumière à mesurer par l'objet à mesurer (1) avec la lumière de référence, dans lequel un modèle d'interférence est généré dans une zone de détection,
- modification de la différence de longueur d'onde optique et/ou de la différence de phase entre la lumière à mesurer et la lumière de référence,
- détection d'intensités lumineuses $I^p(z_i)$ du modèle d'interférence sur une pluralité d'éléments de détecteur p (b) d'un détecteur à éléments multiples (6) dans la zone de détection pour au moins deux différences de longueur d'onde optique ou différences de phase modifiées par différents montants $z_i$,
- détermination du montant $z^p$ pour la modification de la différence de longueur d'onde optique ou de la différence de phase pour une pluralité d'éléments de détecteur p (6b) du détecteur à éléments multiples (6), dans lequel respectivement la différence de longueur d'onde optique et/ou la différence de phase entre la lumière à mesurer et la lumière de référence atteint une valeur prédéfinie explicitement et/ou implicitement pour cet élément de détecteur p (6b), et

- communication de la topographie de surface de l'objet à mesurer (1) à partir des montants $z^p$ déterminés pour différents éléments p du détecteur à éléments multiples (6),

dans lequel pour la détermination de la valeur $z^p$ associée à l'élément de détecteur p (6b), outre les intensités lumineuses $I^p(z_i)$, les intensités lumineuses $I^q(z_i)$ d'au moins un autre élément de détecteur q du détecteur à éléments multiples (6) sont utilisées,

**caractérisé en ce que**

la valeur $z^p$ associée à l'élément de détecteur p (6b) à l'aide d'une approximation au niveau d'au moins une partie des vecteurs d'intensité lumineuse à n dimensions $(I^p(z_1), I^p(z_2) \dots , I^p(z_n))$ et $I^q(z_1), I^q(z_2), \dots , I^q(z_n))$ définis par $I^p(z_i)$ et $I^q(z_i)$ ou les vecteurs résultant d'une projection et/ou transformation à partir de ceux-ci est déterminée.

2.  Procédé selon la revendication précédente, dans lequel
    pour la détermination de la valeur $z^p$ associée à l'élément de détecteur à éléments multiples des informations sur une enveloppe et/ou une situation de phase de la fonction $I^p(z)$ dépendante de la modification z de la différence de longueur d'onde optique et/ou de la différence de phase entre la lumière à mesurer et la lumière de référence sont déterminées.

3.  Procédé selon l'une quelconque des revendications précédentes, dans lequel
    l'au moins un autre élément de détecteur q, dont les intensités lumineuses $I^q(z_i)$ sont utilisées pour la détermination de la valeur $z^p$ associée à l'élément de détecteur p (6b), est sélectionné de sorte qu'il possède des propriétés de proximité prédéfinies par rapport à l'élément de détecteur p (6b).

4.  Procédé selon la revendication précédente, dans lequel les propriétés de proximité sont définies au moins en partie à l'aide d'une métrique, dans lequel cette métrique comprend un écartement spatial des éléments de détecteur p (6b) et q et/ou un écartement spatial de points associés à ceux-ci sur l'objet à mesurer (1) et une surface optique conjuguée à un détecteur à éléments multiples (6).

5.  Procédé selon l'une quelconque des revendications précédentes, dans lequel
    l'au moins une métrique destinée à la détermination de la proximité d'éléments de détecteur p (6b) et q comprend une métrique dans l'espace vectoriel des vecteurs d'intensité lumineuse $(I^p(z_1), I^p(z_2), \dots, I^p(z_n))$ et $I^q(z_1), I^q(z_2), \dots, I^q(z_n))$ à n dimensions fournis par $I^p(z_i)$ et $I^q(z_i)$ ou une métrique dans un espace vectoriel des vecteurs résultant d'une projection et/ou transformation à partir de ceux-ci.

6.  Procédé selon l'une quelconque des revendications précédentes, dans lequel
    l'approximation comprend l'adaptation d'une sous-diversité différentiable M à la répartition de points à partir des points $(I^p(z_1), I^p(z_2), \dots , I^p(z_n))$ et $I^q(z_1), I^q(z_2), \dots , I^q(z_n))$ dans un espace vectoriel à n dimensions ou dans un espace vectoriel des vecteurs résultant d'une projection et/ou transformation à partir de ceux-ci.

7.  Procédé selon la revendication précédente, dans lequel
    la sous-diversité différentiable M est une sous-diversité tridimensionnelle maximale de l'espace vectoriel correspondant.

8.  Procédé selon l'une quelconque des revendications précédentes, dans lequel
    l'approximation aux vecteurs d'intensité lumineuse $(I^p(z_1), I^p(z_2), \dots , I^p(z_n))$ et $I^q(z_1), I^q(z_2), \dots, I^q(z_n))$ ou les vecteurs résultant d'une projection et/ou transformation à partir de ceux-ci est une approximation linéaire au moins localement.

9.  Procédé selon l'une quelconque des revendications précédentes, dans lequel
    l'approximation utilisée lors de la détermination de la valeur $z^p$ associée à l'élément de détecteur p (6b) comprend la détermination d'un vecteur directionnel (15) qui approche au moins localement, dans un environnement du vecteur d'intensité lumineuse $(I^p(z_1), I^p(z_2), \dots , I^p(z_n))$ ou d'un vecteur résultant d'une projection et/ou transformation à partir de celui-ci, la direction principale de la répartition de points fournie par les vecteurs $(I^p(z_1), I^p(z_2), \dots , I^p(z_n))$ et $I^q(z_1), I^q(z_2), \dots , I^q(z_n))$ ou les vecteurs résultant d'une projection et/ou transformation à partir de ceux-ci.

10. Procédé selon la revendication précédente, dans lequel
    la détermination du vecteur directionnel (15) comprend une analyse des composants principaux (PCA) ou de parties de ceux-ci, une détermination de valeur propre, une régression linéaire ou un autre procédé d'optimisation destiné à la minimisation de l'écart d'une droite définie par le vecteur directionnel (15) et/ou d'une droite définie appropriée à sa propre base par rapport aux vecteurs ($I^p(z_1)$, $I^p(z_2)$, ... , $I^p(z_n)$) et$^q(z_1)$, $I^q(z_2)$, ... , $I^q(z_n)$) ou de la répartition de points fournie par des vecteurs résultant d'une projection et/ou transformation à partir de ceux-ci.

11. Procédé selon l'une quelconque des revendications 9 à 10, dans lequel
le vecteur directionnel ou un vecteur tangentiel déterminé, dans lequel le vecteur tangentiel est déterminé sur ceux-ci par différentiation de la sous-diversité différentiable M, est utilisé pour déterminer, par rapport aux intensités lumineuses ($I^p(z_1)$, $I^p(z_2)$, ... , $I^p(z_n)$ un signal déphasé ($Q_p(z_1)$, $Q^p(z_2)$, ... , $Q^p(z_n)$) ou pour déterminer un signal déphasé correspondant associé par des vecteurs résultant d'une projection et/ou transformation.

12. Procédé selon la revendication 2, dans lequel
la position de phase déterminée et/ou l'extrémité d'enveloppe sont utilisées pour déterminer, pour l'élément p du détecteur à éléments multiples (6), le montant $z^p$ pour la modification de la différence de longueur d'onde optique ou de la différence de phase, dans lequel la différence de longueur d'onde optique et/ou la différence de phase entre la lumière à mesurer et la lumière de référence atteint une valeur prédéfinie explicitement et/ou implicitement, et

13. Procédé selon l'une quelconque des revendications précédentes, dans lequel
le montant $z^p$ déterminé pour l'élément p du détecteur à éléments multiples (6) pour la modification de la différence de longueur d'onde optique ou la différence de phase, dans lequel la différence de longueur d'onde optique ou la différence de phase entre la lumière à mesurer et la lumière de référence atteint une valeur prédéfinie explicitement et/ou implicitement, est utilisé pour obtenir des informations sur la situation spatiale d'un point de surface de l'objet à mesurer (1) associé à l'élément de détecteur p (6b) pour déterminer la topographie de surface de l'objet à mesurer (1).

14. Procédé selon l'une quelconque des revendications précédentes, dans lequel
le procédé est configuré pour déterminer la topographie de surface d'objets à mesurer (1) en présence d'au moins une des perturbations suivantes :

(i) vibrations ou mouvements qui influencent la longueur du bras de mesure et/ou de référence de l'interféromètre pendant les mesures
(ii) modifications de la densité et/ou de l'indice de réfraction d'au moins un des milieux traversés par la lumière dans le bras de mesure et/ou de référence
(iii) inexactitudes et/ou erreurs lors de la détermination du montant z de la modification de la différence de longueur d'onde optique et/ou de la différence de phase entre la lumière à mesurer et la lumière de référence à travers l'unité de réglage (9)

15. Dispositif destiné à la détermination interférométrique de la topographie de surface d'un objet à mesurer (1)

avec au moins une source de lumière (2) destinée à l'éclairage de l'objet à mesurer (1) et à la génération de lumière de référence,
avec une optique interférométrique destinée au regroupement de la lumière d'éclairage rejetée en tant que lumière à mesurer par l'objet à mesurer (1) avec la lumière de référence, dans lequel un modèle d'interférence est généré dans une zone de détection,
avec au moins une unité de réglage (9) pour modifier la différence de longueur d'onde optique et/ou la différence de phase entre la lumière à mesurer et la lumière de référence d'un montant z,
avec un détecteur à éléments multiples (6) avec une pluralité d'éléments de détecteur p qui est configuré pour acquérir, pour au moins deux différences de longueur d'onde optiques ou différences de phase modifiées par différents montants $z_i$, les intensités lumineuses $I^p(z_i)$ du modèle d'interférence sur les éléments de détecteur p dans la zone de détection,
avec une unité d'évaluation (10) qui est reliée au détecteur à éléments multiples (6) et qui est configurée pour déterminer le montant $z^p$ pour la modification de la différence de longueur d'onde optique ou la différence de phase pour une pluralité d'éléments de détecteur p du détecteur à éléments multiples (6), dans lequel la différence de longueur d'onde optique ou la différence de phase entre la lumière à mesurer et la lumière de référence atteint une valeur prédéfinie explicitement et/ou implicitement pour cet élément de détecteur p (6b), et pour déterminer à partir de là la topographie de surface de l'objet à mesurer (1),
dans lequel l'unité d'évaluation (10) est configurée pour utiliser la détermination de la valeur $z^p$ associée à l'élément de détecteur p (6b), outre les intensités lumineuses $I^p(z_i)$, les intensités lumineuses $I^q(z_i)$ d'au moins

un autre élément de détecteur q du détecteur à éléments multiples (6),
**caractérisé en ce que**
l'unité d'évaluation (10) est configurée pour déterminer la valeur $z^p$ associée à l'élément de détecteur p (6b) à l'aide d'une approximation d'au moins une partie des vecteurs d'intensité lumineuse à n dimensions ($I^p(z_1)$, $I^p(z_2)$, ... , $I^p(z_n)$) et $I^q(z_1)$, $I^q(z_2)$, ... , $I^q(z_n)$) fournis par $I^p(z_i)$ et $I^q(z_i)$ ou les vecteurs résultant d'une projection et/ou transformation à partir de ceux-ci.

Figur 1

Figur 2

- Stand der Technik – Figur 3

– Stand der Technik –    Figur 4

Figur 5

Figur 6

Figur 7

Figur 8

Figur 9

Figur 10

48

Figur 11

Figur 12

Figur 13

Figur 14

Figur 15

Figur 16

Figur 17

Figur 18

Figur 19

Figur 20

Figur 21

Figur 22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4594003 A
- US 8902431 B
- US 2019049236 A1
- US 5953124 A

**In der Beschreibung aufgeführte Nicht-Patentliteratur**

- **E. GARBUSI et al.** Single frame interferogram evaluation. *Applied Optics, Bd.,* 20. April 2008, vol. 47 (12), 2046